# EUROPEAN PATENT SPECIFICATION

(11) **EP 1 228 385 B1**
(45) Date of publication and mention of the grant of the patent: **13.08.2008**
(21) Application number: 00964576.3
(22) Date of filing: 13.10.2000
(51) Int. Cl.: G01V 1/30, G01V 11/00

(54) **METHOD AND APPARATUS FOR GENERATING A CROSS PLOT IN ATTRIBUTE SPACE FROM A PLURALITY OF ATTRIBUTE DATA SETS AND GENERATING A CLASS DATA SET FROM THE CROSS PLOT**
VERFAHREN UND ANLAGE ZUM ERZEUGEN EINER QUERGRAPHIK IM ATTRIBUTRAUM, AUSGEHEND VON EINER MEHRZAHL VON DATENATTRIBUTMENGEN, SOWIE DAS ERZEUGEN EINER KLASSIFIZIERUNGSDATENMENGE AUS DIESER QUERGRAPHIK
PROCEDE ET APPAREIL PERMETTANT DE GENERER UN PLAN DE TRAVAIL DANS UN ESPACE D'ATTRIBUT A PARTIR D'UNE PLURALITE D'ENSEMBLES DE DONNEES D'ATTRIBUT ET DE GENERER UN ENSEMBLE DE DONNEES DE CLASSE A PARTIR DE CE PLAN DE TRAVAIL

(30) Priority: 02.11.1999 GB 9925957
(43) Date of publication of application: 07.08.2002
(73) Proprietor: Geco AS, 4068 Stavanger (NO)
(72) Inventor: SONNELAND, Lars, N-4056 Tananger (NO); GEHRMANN, Thomas, N-4085 Hundvag (NO)
(74) Representative: Lockey, Robert Alexander
(86) International application number: PCT/IB2000/001473
(87) International publication number: WO 2001/033255

(56) References cited:
- US-A- 4 964 096
- US-A- 5 598 377
- RONEN ET AL.: "Seismic-guided Estimation of Log Properties, Part 2" THE LEADING EDGE, vol. 13, no. 6, June 1994 (1994-06), pages 674-678, XP002158610
- RUSSELL B ET AL: "MULTIATTRIBUTE SEISMIC ANALYSIS" THE LEADING EDGE,US,SOCIETY OF EXPLORATION GEOPHYSICISTS, vol. 16, no. 10, 1 October 1997 (1997-10-01), pages 1439-1443, XP000724901 ISSN: 1070-485X
- SCHULTZ ET AL.: "Seismic-guided Estimation of Log Properties, Part 1" THE LEADING EDGE, vol. 13, no. 5, May 1994 (1994-05), pages 305-311, XP002158611
- SCHULTZ ET AL: "Seismic-guided Estimation of Log Properties, Part 3" THE LEADING EDGE, vol. 13, no. 7, July 1994 (1994-07), pages 770-776, XP002158612

## Description

### BACKGROUND OF THE INVENTION

This invention relates to the field of seismic data interpretation and, more particularly, to the processing of databases of well log and geophone-obtained seismic information to better assist interpreters in classifying subsurface formations.

The subject matter of the present invention relates to a method and apparatus for generating a cross plot in attribute space in response to a plurality of attribute data and then generating a classified result or "class data set" based on the data alignment in the crossplot. More particularly, the subject matter of the present invention relates to an apparatus and associated method including a computer workstation having a novel software package stored therein, the workstation having a display screen for displaying a novel classified result, known as a class data set, for viewing by a workstation operator. The class data set is generated and displayed on the display screen when the workstation processor executes the novel software package. When the novel software package is executed, a crossplot in attribute space is generated in response to a plurality of different attribute data obtained in response to a seismic operation, and the class data set is generated in response to the crossplot.

In the oil industry, well log data (obtained from well logging operations in wellbores) and/or seismic data (obtained from seismic operations) are obtained from underground earth formations, the data inherently containing information relating to the quantity or degree of underground deposits of hydrocarbons in the earth formations. Computer workstations in conjunction with software stored therein are used to process and interpret the data. The workstations include a processor, a memory for storing interpretation software, and an interactive display screen. The workstation will receive the well log or seismic data and, when the interpretation software stored in the workstation memory is executed by the processor, the workstation will interpret the data and display a novel set of results on the display screen. The set of results will include a novel visual display for viewing by an operator. The display may, for example, reveal the degree or quantity or type of underground deposits of hydrocarbons (e.g., oil) in the earth formation. One such novel set of results displayed on the workstation display screen is known as a "crossplot" and a "class data set". A class data set represents a top view of a subsurface in an earth formation, the top view of the subsurface including, for example, a plurality of different earth formation classes where each class of the plurality of classes in the subsurface possesses a different set of characteristics. When the operator of the workstation views the class data set on the workstation display screen, the characteristics of each class of the subsurface being displayed can be determined.

In the seismic interpretation field, there is a strong need for such a class data set, since the class data set would assist the workstation operator to determine, for example, the type of and/or the existence of underground deposits of hydrocarbon in the earth formation.

US Patent 4,964,096 relates to seismic exploration and more particularly to a method for inversion of seismic data to yield estimates of formation lithology. Seismic data representing a measure of reflectivity of subsurface formations to seismic energy imparted therein can be inverted to obtain measures of formation elastic properties. By cross-plotting selected formation elastic properties on a colour-binned lithology diagram, a lithology section can be produced having increased lithological resolution.

US Patent 5,598,377 discloses a method of correcting compressional velocity well log measurements for the effects of gas in the pore space of earth formations. The method includes the steps of determining a relationship between measurements of shear velocity and a ratio of measurements of compressional velocity with respect to shear velocity for the earth formations for when the earth formations are substantially liquid-filled. A first boundary of the relationship is determined for when the earth formations are substantially composed of shale, a second boundary is determined for when the earth formations are substantially devoid of shale. A cut-off is determined by adjusting an ordinate intercept value of the relationship to substantially include shear velocity and compressional velocity measurements corresponding to the earth formation having gas in the pore space. The cut-off is set to substantially exclude shear and compressional velocity measurements corresponding to the earth formations being substantially iiquid-fiiied. For each measurement of shear and compressional velocity included within the cut-off a shale volume and a corrected ratio of compressional velocity to shear velocity is determined. The corrected ratio is determined by scaling with respect to the shale volume between the first boundary and the said second boundary. For each corrected ratio thus determined, the corrected ratio is applied to a corresponding measurement of shear velocity to calculate corrected compressional velocity.

RONEN, et al "Seismic-guided Estimation of Log Properties, Part 2" - "THE LEADING EDGE", vol. 13, No. 6, June 1994 (1994-06), pages 674-678 discusses neural networks with particular reference to a single hidden layer neural network with three inputs and five hidden nodes generating a single output function. The paper discusses radial basis function feed forward and indicates that neural networks are useful when a non-linear relationship is anticipated between the input and output variables. A discussion is provided of training a network.

According to one aspect of this invention there is provided a seismic classification system, a method of generating a classified result which can be recorded or displayed on a workstation display, comprising the steps of : (a) receiving at least a first attribute data set where the attribute data set includes a plurality of points and a plurality of attribute data corresponding, respectively, to the plurality of points, (b) generating a first cross plot in attribute space in response to the attribute data on the first attribute data set wherein the generating step (b) includes the steps of (b1) selecting a subset of the attribute data on the first attribute data set to represent a first set of inspection data, (b2) generating a second cross plot in attribute space from the first set of inspection data, the second cross plot having a distribution/separation of clusters, and (b3) evaluating the distribution/separation of the clusters on the second cross plot; and (c) generating the classified result in response to the plurality of points on the first attribute data set and the first cross plot in attribute space.

Preferably the receiving step (a) for receiving at least a first attribute data set comprises the steps of : (a1) receiving a plurality of measurable quantities associated, respectively, with a plurality of points in a subsurface, the first attribute data set corresponding to the subsurface, and (a2) generating the plurality of attribute data" (a, b)"associated, respectively, with the plurality of points on the first attribute data set.

Conveniently the generating step (b) for generating the first cross plot in attribute space in response to the attribute data on the first attribute data set further comprises the steps of : (b4) selecting a subset of points among a set of clusters on the first cross plot in attribute space to represent a second set of inspection data, (b5) generating a second attribute data set from the second set of inspection data, the second attribute data set having a distribution of points, and (b6) evaluating the distribution of the points on the second attribute data set.

Advantageously the generating step (b) for generating the first cross plot in attribute space in response to the attribute data on the first attribute data set further comprises the steps of : (b7) selecting some of the attribute data on the first attribute data set to represent training data, (b8) selecting other attribute data on the first attribute data set to represent validation data, a class of the training data being approximately the same as a class of the validation data, (b9) generating a third cross plot in a particular attribute space in response to the training data, and (b10) generating a fourth cross plot in said particular attribute space in response to the validation data, whereby a cluster in said particular attribute space resultant from said validation data should be located adjacent to another cluster in the same said particular attribute space resultant from said training data when said class of said training data is approximately the same as said class of said validation data.

Conveniently the generating step (b) for generating the first cross plot in attribute space in response to the attribute data on the first attribute data set further comprises the steps of : (b11) generating said cross plot in attribute space having at least two clusters points in response to the attribute data on the first attribute data set when: the distribution/separation of the clusters on the second cross plot evaluated during the step (b3) is acceptable, the distribution of the points on the second attribute data set evaluated during the step (b6) is acceptable, and said cluster in said particular attribute space resultant from said validation data is located adjacent to said another cluster in the same said particular attribute space resultant from said training data when said fourth cross plot in said particular attribute space is generated during the step (b10).

Advantageously the generating step (c) for generating the classified result in response to the plurality of points on the first attribute date set and the cross plot in attribute space, having said at least two clusters of points, comprises the steps of : (c1) assigning a first label to a first one of said at least two clusters of points of said cross plot in attribute space, each point in said first one of said at least two clusters of points on said cross plot in attribute space having assigned thereto said first label and corresponding to a first set of locations on said first attribute data set, (c2) assigning a second label to a second one of said at least two clusters of points on said cross plot in attribute space, each point in said second one of said at least two clusters of points on said cross plot in attribute space having assigned thereto said second label and corresponding to a second set of locations on said first attribute data set, (c3) labeling each of said first set of locations on said first attribute data set with said first label, and (c4) labeling each of said second set of locations on said first attribute data set with said second label.

According to a further aspect of this invention there is provided a seismic classification apparatus adapted for producing a classified result from a plurality of attribute data sets, comprising: first generation means for generating a plurality of values associated, respectively, with a plurality of points distributed over the surface on a subsurface of an earth formation; second generation means responsive to the plurality of values for generating a plurality of labels which are associated, respectively, with the plurality of values characterised in that the second generation means comprising selecting means for selecting an inspection subset of said plurality of values, first clustering means responsive to the inspection subset for clustering said inspection subset of said plurality of values in attribute space, and second clustering means for clustering all of said plurality of values in the attribute space when the inspection subset of the plurality of values are clustered acceptably in the attribute space by the first clustering means; and means for associating the plurality of labels with the respective plurality of points on the subsurface of the earth formation thereby generating a class data set plot comprising the plurality of points which are labeled, respectively, with the plurality of labels, the class data set plot representing the classified result.

Preferably the selecting means selects the inspection subset of the plurality of values and a training subset of the plurality of values and a validation subset of the plurality of values, and wherein the first clustering means comprises: inspection subset clustering means responsive to the inspection subset for clustering the inspection subset of the plurality of values in attribute space; training subset clustering means responsive to the training subset for clustering the training subset of said plurality of values in attribute space; and validation subset clustering means responsive to the validation subset for clustering the validation subset of the plurality of values in attribute space, the second clustering means clustering all of said plurality of values in the attribute space and producing a plurality of clusters of values in the attribute space when the inspection subset of the plurality of values are clustered acceptably in the attribute space by the inspection subset clustering means and when the training subset of the plurality of values are clustered acceptably in the attribute space by the training subset clustering means and when the validation subset of the plurality of values are clustered acceptably in the attribute space by the validation subset clustering means.

Preferably said second clustering means assigns a plurality of labels, respectively, to said plurality of clusters produced in the attribute space, a separate and distinct label being assigned to each of the clusters in said attribute space.

Conveniently said means for associating the plurality of labels, respectively, with the plurality of points on the subsurface of the earth formation further comprises: data set generation means responsive to the assignment of the plurality of labels, respectively, to the plurality of clusters in the attribute space by the second clustering means for generating a class data set plot representing the classified result, the class data set plot representing an attribute data set plot of the plurality of points distributed over the surface on the subsurface of the earth formation having the plurality of labels associated, respectively, with that plurality of points on the surface of that subsurface.

According to a further aspect of this invention there is provided a program storage device readable by a machine tangibly embodying a program of instructions executable by the machine, to perform method steps for generating a classified result that can be recorded or displayed on a workstation display, said method steps comprising: (a) receiving at least a first attribute data set where the attribute data set includes a plurality of points and a plurality of attribute data corresponding, respectively, to the plurality of points, (b) generating a first cross plot in attribute space in response to the attribute data on the first attribute data set characterised in that the generating step (b) includes the steps of (b1) selecting a subset of the attribute data on the first attribute data set to represent a first set of inspection data, (b2) generating a second cross plot in attribute space from the first set of inspection data, the second cross plot having a distribution/separation of clusters, and (b3) evaluating the distribution/separation of the clusters on the second cross plot, and (c) generating the classified result in response to the plurality of points on the first attribute data set and the cross plot in attribute space.

Preferably said receiving step (a) of said method steps for receiving at least a first attribute data set further comprises the steps of : (a1) receiving a plurality of measurable quantities associated, respectively, with a plurality of points in a subsurface, the first attribute data set corresponding to the subsurface, and (a2) generating the plurality of attribute data "(a, b)" associated, respectively, with the plurality of points on the first attribute data set.

Conveniently the generating step (b) of said method steps for generating the first cross plot in attribute space in response to the attribute data on the first attribute data set further comprises the steps of : (b4) selecting a subset of points among a set of clusters on the first cross plot in attribute space to represent a second set of inspection data, (b5) generating a second attribute data set from the second set of inspection data, the second attribute data set having a distribution of points, and (b6) evaluating the distribution of the points on the second attribute data set.

Advantageously the generating step (b) of said method steps for generating the first cross plot in attribute space in response to the attribute data on the first attribute data set further comprises the steps of : (b7) selecting some of the attribute data on the first attribute data set to represent training data, (b8) selecting other attribute data on the first attribute data set to represent validation data, a class of the training data being approximately the same as a class of the validation data, (b9) generating a third cross plot in a particular attribute space in response to the training data, and (b10) generating a fourth cross plot in said particular attribute space in response to the validation data, whereby a cluster in said particular attribute space resultant from said validation data should be located adjacent to another cluster in the same said particular attribute space resultant from said training data when said class of said training data is approximately the same as said class of said validation data.

Conveniently the generating step (b) of said method steps for generating the first cross plot in attribute space in response to the attribute data on the first attribute data set comprises the step of : (b11) generating said cross plot in attribute space having at least two clusters points in response to the attribute data on the first attribute data set when: the distribution/separation of the clusters on the second cross plot evaluated during the step (b3) is acceptable, the distribution of the points on the second attribute data set evaluated during the step (b6) is acceptable, and said cluster in said particular attribute space resultant from said validation data is located adjacent to said another cluster in the same said particular attribute space resultant from said training data when said fourth cross plr in said particular attribute space is generated during the step (b10).

Preferably the generating step (c) of said method steps for generating the classified result in response to the plurality of points on the first attribute data set and the cross plot in attribute space, having said at least two clusters of points, comprises the steps of : (cl) assigning a first label to a first one of said at least two clusters of c said cross plot in attribute space, each point in said first one of said at least t clusters of points on said cross plot in attribute space having assigned thereto said first label and corresponding to a first set of locations on said first attribute data set, (c2) assigning a second label to a second one of said at least two clusters of points on said cross plot in attribute space, each point in said second one of said at least two clusters of points on said cross plot in attribute space having assigned thereto said second label and corresponding to a second set of locations on said first attribute data set, (c3) labeling each of said first set of locations on said first attribute data set with said first label, and (c4) labeling each of said second set of locations on said first attribute data set with said second label. The invention also provides a seismic classification system adapted for producing a classified result adapted from a plurality of attribute data, comprising: first means for receiving said plurality of attribute data, said plurality of attribute data corresponding to a plurality of points on a first attribute data set; second means for generating a first cross plot in attribute space in response to the plurality of attribute data on the first attribute data set, said second means includes means for selecting a subset of the attribute data on the first attribute data set to represent a first set of inspection data, means for generating a second cross plot in attribute space from the first set of inspection data, the second cross plot having a distribution/separation of clusters, and means for evaluating the distribution/separation of the clusters on the second cross plot; and third means for generating a classified result in response to the plurality of points on the first attribute data set and the first cross plot in attribute space. The system may further comprise a display adapted for displaying said classified result.

Conveniently said first means for receiving said plurality of attribute data comprises: measurable quantity receiving means for receiving measurable quantities associated, respectively, with a plurality of points in a subsurface, the first attribute data set corresponding to said horizon; and means responsive to the receipt of said measurable quantities associated, respectively, with the plurality of points in the subsurface by said measurable quantity receiving means for generating the plurality of attribute data "(a, b)" associated, respectively, with the plurality of points on the first attribute data set.

Advantageously said second means for generating said first cross plot in attribute space in response to the plurality of attribute data on the first attribute data set further comprises: means for selecting a subset of points among a set of clusters on the first cross plot in attribute space to represent a second set of inspection data, means for generating a second attribute data set from the second set of inspection data, the second attribute data set having a distribution of points, and means for evaluating the distribution of the points on the second attribute data set.

Preferably said second means for generating said first cross plot in attribute space in response to the plurality of attribute data on the first attribute data set further comprises: means for selecting some of the attribute data on the first attribute data set to represent training data, means for selecting other attribute data on the first attribute data set to represent validation data, a class of the training data being approximately the same as a class of the validation data, means for generating a third cross plot in a particular attribute space in response to the training data, and means for generating a fourth cross plot in said particular attribute space in response to the validation data, whereby a cluster in said particular attribute space resultant from said validation data should be located adjacent to another cluster in the same said particular attribute space resultant from said training data when said class of said training data is approximately the same as said class of said validation data.

Conveniently said second means for generating a first cross plot in attribute space in response to the plurality c attribute data on the first attribute data set further comprises: means for generating said first cross plot in attribute space having at least two clusters of points in response to the attribute data on the first attribute data set when: the distribution/separation of the clusters on the second cross plot is acceptable, the distribution of the points on the second attribute data set is acceptable or said cluster in said particular attribute space resultant from said validation data is located adjacent to said another cluster in the same said particular attribute space resultant from said training data when said fourth cross plot in said particular attribute space is generated.

Preferably said first cross plot attribute space has at least two clusters of points, and wherein said third means for generating a classified result in response to the plurality of points of the first attribute data set and the first cross plot in attribute space comprises means assigning a first label to a first one of said at least two clusters of point on said first cross plot in attribute space, each point in said first one of said at least two clusters of points on said first cross plot in attribute space having assigned thereto said first label and corresponding to a first set of locations on said first attribute data set, means for assigning a second label to a second one of said at least two cluster of points on said first cross plot in attribute space, each point in said second one of said at least two clusters of points on said first cross plot in, attribute space having assigned thereto said second label and corresponding to a second set of locations on said first attribute data set, means for labeling each of said first set of locations on said first attribute data set with said first label, and means for labeling each of said second set of locations on said first attribute data set with said second label.

The following Specification discloses a seismic classification system which includes, in combination, a workstation and a novel seismic classification software, known as "Seisclass", stored in the workstation, for performing a novel seismic classification function when the Seisclass software is executed by a processor of the workstation. The seismic classification system includes the following system components: (1) "Attribute data sets" which collectively represent the "input attribute data" that are provided tot the seismic classification system, the attribute data sets each being shown in a geographical data set co-ordinate system, the attribute data set being a window for offering a view into the attribute data in accordance with their individual geographic positioning, (2) "Attribute space" which represents a co-ordinate system having one co-ordinate axis for each attribute of the aforementioned attribute data, a "crossplot" representing a view into the attribute space, (3) "Administration" which represents the methods for managing the contents of the "input attribute data", for managing the selection of the proper Classification Method, and for managing the parameter control, and (4) a "Class data set" which represents the results of a classification process.

The seismic classification system further includes the following Classification Methods: (1) "Unsupervised Classification Methods" which look at data clustering/grouping in attribute space, will reveal and confirm natural clustering unbiased by subjective measures but do not necessarily provide a geologically interpretable result, and (2) "Supervised Classification Methods" which adds an "a-priori" knowledge to the classification process as represented by certain selected "training data", the Supervised Classification Methods providing class definitions that can be targeted directly to geology or to the specific problem, and allowing for testable validation by holding out data which have an "a-priori" known class association.

However, the Unsupervised classification method and the Supervised classification method each include a different functional operation and therefore enforce a different workflow.

For example, the workflow of the Unsupervised classification method includes: (1) selecting a plurality of attribute data sets which have the potential to show a separation of data points in attribute space, the attribute data sets being related to one and the same geological feature (e.g., subsurface, layer in an earth formation), (2) running a classification, (3) evaluating the classification via a crossplot in attribute space relative to a data set view in geographic space, and (4) drawing conclusions by interpreting the grouping in attribute space and perhaps starting a supervised classification to steer the outcome to a more interpretable result.

In addition, the workflow of the Supervised classification method includes: (1) the selection of attribute data sets having the potential to show separation of data points in attribute space (the same as in the unsupervised classification method), (2) the selection of training and validation data, the training and validation data each having a known class association and the analysis of the training and the validation data taking place prior to classification, (3) the interaction between a crossplot in attribute space and attribute data set displays in geographic space, (4) prior to running the classification, defining which of the potential training and validation data are used for "training", i.e., data used to build the classification function, and which of the potential training and validation data are "validation", i.e., data withheld from the classification process, (5) running the classification thereby producing a classification result, and optionally various quality and confidence measures, and (6) comparing the predicted class association from the classification result with the withheld validation data, i.e. the a-priori known class association, thereby providing a consistency and stability test.

Further applicability of the present invention will become apparent from the detailed description presented hereinafter. It should be understood, however, that the detailed description and the specific examples, while representing a preferred embodiment of the present invention, are given by way of illustration only, since various changes and modifications, within the spirit and scope of the invention, will become obvious to one skilled in the art from a reading of the following detailed description.

### BRIEF DESCRIPTION OF THE DRAWINGS

A full understanding of the present invention will be obtained from the detailed description of the preferred embodiment presented hereinbelow, and the accompanying drawings, which are given by way of illustration only and are not intended to limit the present invention, and wherein:
figure 1 illustrates a typical seismic operation;
figure 2 illustrates a well logging operation;
figures 3 and 4 illustrate the seismic signals which are received by the geophones of figure 1;
figure 5 illustrates how the seismic data output record and the well log data output record combine to represent the "data received";
figure 6 illustrates how the attribute data sets are generated from the data received of figure 5;
figures 7 through 13 illustrate how the attribute data sets are produced from a seismic operation;
figures 14 and 15 illustrate a workstation which stores the seisclass software of the present invention;
figure 16 illustrates a basic flowchart representing the overall functional operation of the present invention when the seisclass software of the present invention is executed;
figures 17 through 21 illustrate how the class data set of the present invention is produced when the attribute data sets of figure 13 are used by the workstation processor of figure 14 to produce the class data set of the present invention during execution of the seisclass software of the present invention;
figure 22 illustrates a more detailed construction of the seisclass software of the present invention including an Unsupervised seisclass software and a Supervised seisclass software;
figure 23 illustrates a block diagram depicting the Unsupervised seisclass software of the present invention of figure 22;
figure 24 illustrates the principles behind the "auxiliary results QC measures" code 142 of figure 23;
figure 25 illustrates a block diagram depicting the unsupervised classification code 132 of figure 23;
figure 26 illustrates a block diagram and description depicting the apply classification and determine quality indicators code 146 of figure 25;
figure 27 illustrates the functional operation of blocks 158, 160, and 162 of figure 26;
figure 28 illustrates the functional operation of blocks 166, 168, and 170 of figure 26;
figure 29 illustrates the functional operation of block 172 of figure 26;
figure 30 illustrates illustrates a block diagram depicting the Supervised seisclass software of the present invention of figure 22;
figure 31 illustrates the various classes which may be selected for the 'classes in use - manually defined class types' of figure 30;
figures 32 through 34 illustrate how one could select and declare training data in connection with the 'training/validation' of figure 30;
figures 35 through 37 illustrate how one could select and declare validation data in connection with the 'training/validation' of figure 30;
figure 38 illustrates a detailed construction of the supervised classification code 186 of figure 30;
figure 39 illustrates a detailed construction of the "training of the classifications" code 208 of figure 38;
figure 40 illustrates the functional operation of blocks 226, 228, and 230 of figure 39;
figure 41 illustrates the functional operation of block 234, 236, and 238 of figure 39;
figure 42 illustrates the functional operation of the "training of the classifications" block 242 of figure 39;
figure 43 illustrates the functional operation of the "apply the trained classification and determine quality indication" 216 of figure 38;
figure 44 illustrates the functional operation of the "classified result" or "class data set" block 130 of figure 30; and
figure 45 illustrates a 3D cube which includes a plurality of such 'class data sets' corresponding, respectively, to a plurality of subsurfaces in an earth formation.

### DESCRIPTION OF THE PREFERRED EMBODIMENT

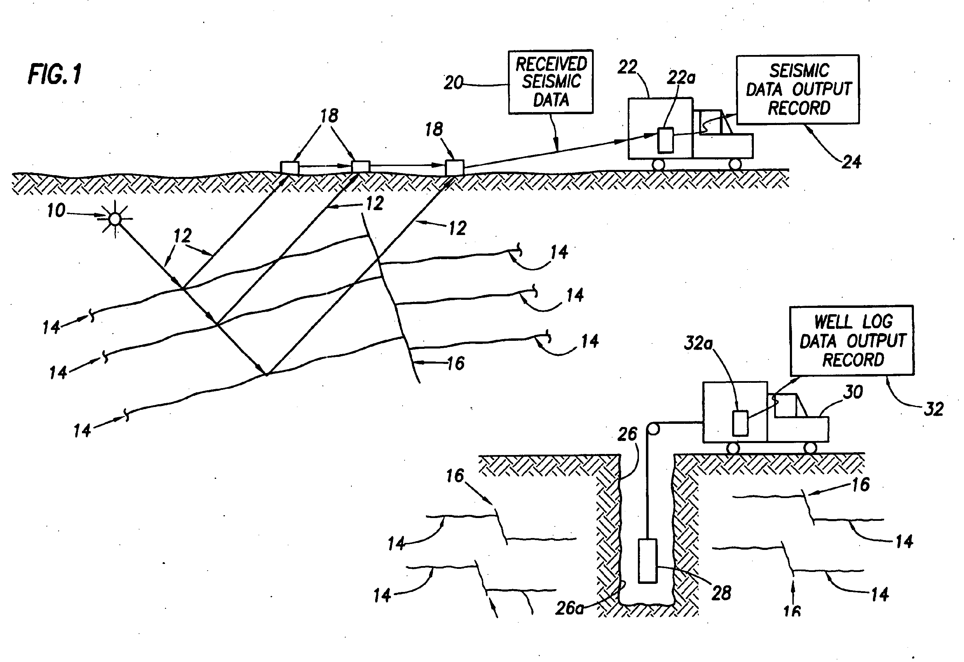

Referring to figure 1, a seismic operation is illustrated. An acoustic source 10 produces sound vibrations 12 which are reflected off a plurality of subsurfaces 14 of an earth formation, the subsurfaces being separated by a fault 16. The use of sound vibrations generated by the acoustic energy source is given by way of example only, since the sound vibrations generated by the acoustic energy source is only a subset of a larger set of all measureable quantities derived from or associated with seismic data, such as velocities which is a property closely related to seismic data. The sound vibrations 12 are received in a plurality of geophone receivers 18, and electrical signals are generated from the receivers, those electrical signals representing the "received seismic data" 20 in figure 1. The received seismic data 20 are provided as input data to a recording truck 22 which includes a recording truck computer 22a. The recording truck computer 22a will receive the "received seismic data" 20 and it will thereafter produce a "seismic data output record" 24 which stores the received seismic data 20.

Referring to figure 2, although not shown in figure 1, a wellbore has been drilled in the earth formation of figure 1, that wellbore being illustrated in figure 2. In figure 2, the wellbore 26 penetrates the formation, and a logging tool 28 logs the formation. A logging truck 30 is disposed at the earth surface, the logging truck 30 including a computer 32a which produces a "well log data output record" 32 which records and/or stores information representing the characteristics of the earth formation that is located nearest the wall 26a of the wellbore 26.

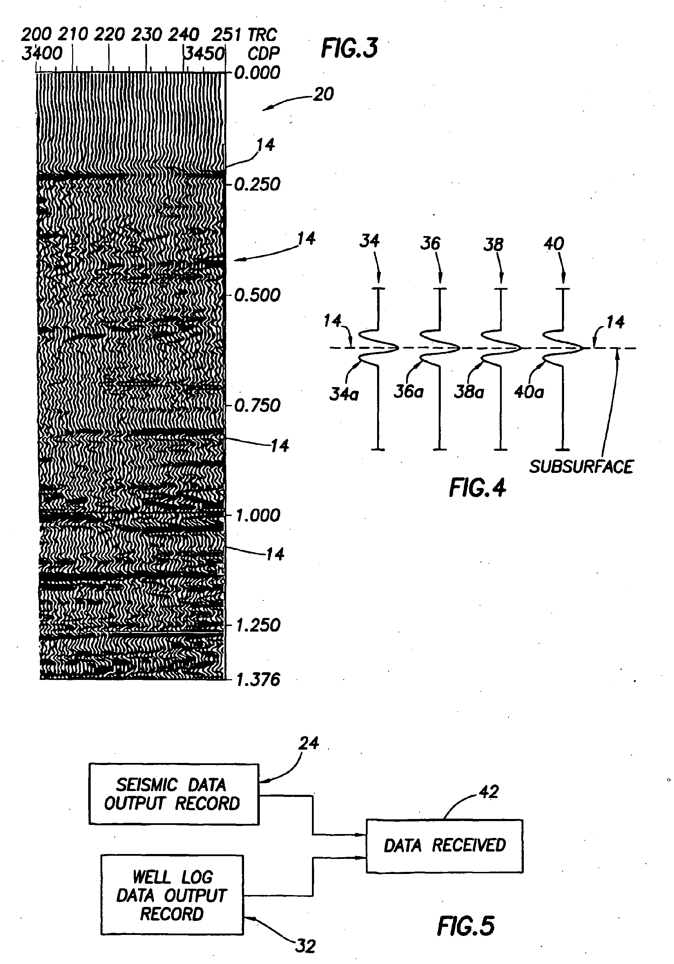

Referring to figure 3, an example of the "received seismic data" 20 of figure 1 which is stored on the seismic data output record 24 of figure 1 is illustrated. Note, in figure 3, that the received seismic data 20 is actually comprised of a multitude of seismic "traces", where each seismic trace includes a plurality of variations in amplitude plotted over time. Figure 4 illustrates an exploded view of a portion of a single such seismic trace of figure 3.

Referring to figure 4, an exploded view of a portion of four seismic traces from figure 3 is illustrated. In figure 4, each of the seismic traces 34, 36, 38, and 40 include an amplitude variation 34a, 36a, 38a, and 40a. The amplitude variations 34a through 40a actually represent the location (that is, the depth) in the earth formation where an earth subsurface 14 is located. Figure 4 illustrates the earth subsurface 14 by using a dotted line 14 passing through the four amplitude variations 34a through 40a. Referring back to figure 3, a multitude of such amplitude variations are now visible in the seismic traces representing a plurality of such earth subsurfaces 14 located along a depth dimension of the earth formation.

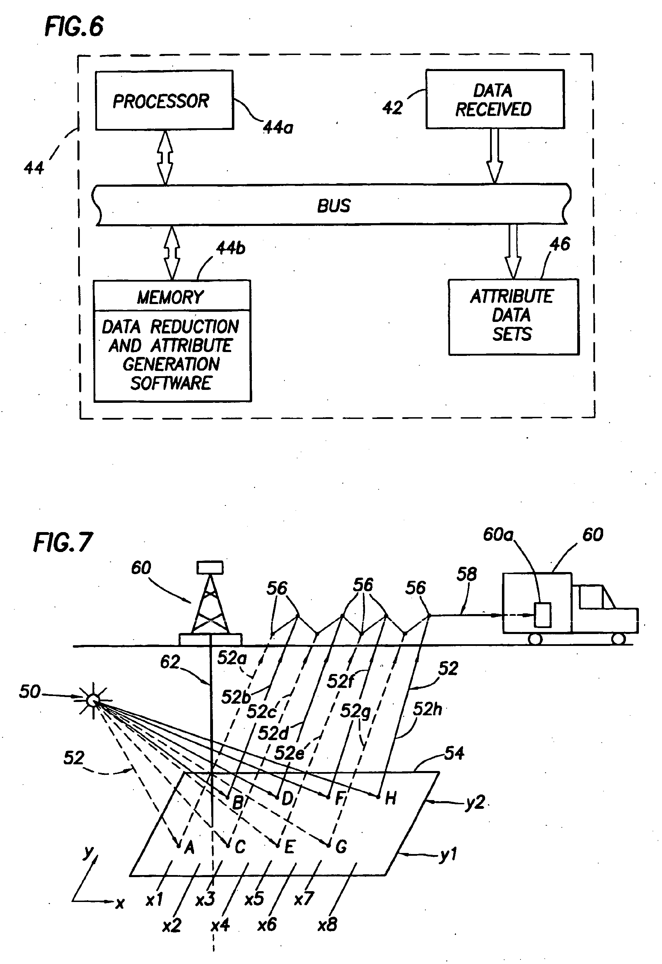

Referring to figure 5, the seismic data output record 24 and the well log data output record 32 combine to produce the "data received" 42 which is input to the mainframe computer of figure 6.

Referring to figure 6, the data received 42 is received by a workstation computer 44. The processor 44a will receive the data received 42, it will execute a "data reduction and attribute generation software" stored in the workstation computer memory 44b, and responsive thereto, it will produce a plurality of "attribute data sets" 46. One such "data reduction software" is disclosed in a book called "Seismic Velocity Analysis and the Convolutional Model", by Enders A Robinson, the disclosure of which is incorporated by reference into this specification. An attribute data set 46 includes a first "attribute data set" consisting of a plurality of parameters of a first type and at least a second "attribute data set" consisting of a plurality of parameters of a second type. For example, one attribute data set 46 could include a first "attribute data set" consisting of a set of amplitude parameters, and a second "attribute data set" consisting of a set of frequency parameters.

Referring to figures 7 through 13, a simple example is illustrated which will demonstrate how the attribute data sets 46 of figure 6 are generated by the workstation computer 44.

In figure 7, an acoustic source 50 (which is given by way of example only since all measurable quantities associated with seismic data could be utilized) produces sound vibrations 52 which reflect off a subsurface layer 54 in an earth formation. The sound vibrations 52 are reflected off the subsurface layer 54 and are received in a plurality of geophones 56 disposed on the earth's surface. Electrical signals 58 are input to a computer 60a of a recording truck 60. In figure 7, the subsurface layer 54 includes at least eight (8) points or cells: point A, point B, point C, point D, point E, point F, point G, and point H. The subsurface layer 54 also has an x-y coordinate system imposed thereon, where the x-axis along the subsurface layer 54 includes coordinate values "x1" through "x8", and the y-axis along the subsurface layer 54 includes coordinate values "y1" and "y2". From figure 7, it is evident that points A through H on subsurface layer 54 have the following (x, y) coordinate values which identify their physical geographic locations on the subsurface 54:

| | |
|---|---|
| A (x1, y1) | E (x5, y1) |
| B (x2, y2) | F (x6, y2) |
| C (x3, y1) | G (x7, y1) |
| D (x4, y2) | H (x8, y2) |

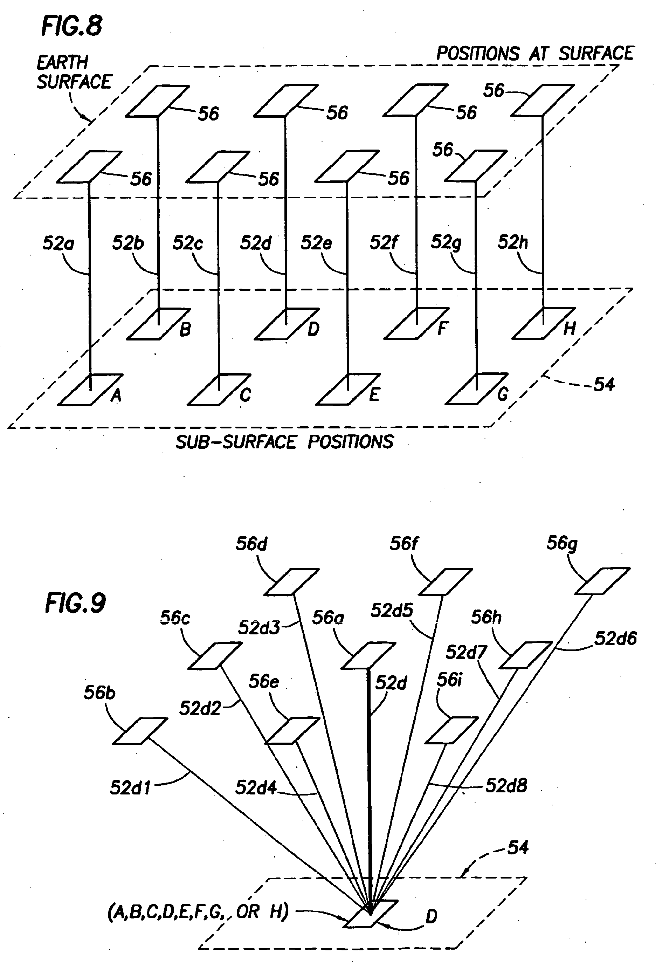

In figure 7, an oil well 60 is located above a wellbore 62 which penetrates an earth formation. The wellbore 62 intersects with and penetrates the subsurface layer 54 in the earth formation of figure 7. In addition, it appears from figure 7 that the reflections of the sound vibrations 52 off the subsurface layer 54 are non-vertical. However, this is not quite true. Figures 8 and 9 will correct any misconceptions which are generated by the figure 7 illustration. Before referring to figure 8, however, refer to figure 7 again and note that the sound vibrations 52 reflecting off the subsurface layer 54 actually include the following individual sound vibration reflections: a first sound vibration reflection 52a reflecting from point A on subsurface layer 54, a second sound vibration reflection 52b from point B, a third sound vibration reflection 52c from point C, a fourth sound vibration reflection 52d from point D, a fifth sound vibration reflection 52e from point E, a sixth sound vibration reflection 52f from point F, a seventh sound vibration reflection 52g from point G, and an eighth sound vibration reflection 52h reflecting from point H on subsurface layer 54.

In figure 8, the sound vibration reflections 52a through 52h actually reflect substantially vertically off the points A through H on the subsurface layer 54 when such sound vibration reflections propagate between points A through H on the subsurface layer 54 and the geophone receivers 56 on the earth's surface. However, as noted in figure 9, when such sound vibrations reflect upwardly from any one particular point (A through H) on the subsurface layer 54, there exist several such reflections.

In figure 9, using point D on subsurface layer 54 as an example, a sound vibration reflection 52d reflects upwardly off the point D on the subsurface layer 54 and it is received in a geophone receiver 56a; however, other sound vibration reflections 52d1 through 52d8 also reflect off the point D and are received in other geophone receivers 56b through 56i which are also positioned on the earth's surface.

Refer back to figures 3 and 4, and recall that figure 3 comprises a multitude of seismic traces, similar to the seismic traces 34, 36, 38, and 40 in figure 4. In addition, recall that each of the seismic traces in figure 3 include a plurality of amplitude variations similar to the amplitude variations 34a, 36a, 38a, and 40a in the seismic traces 34 through 40 in figure 4.

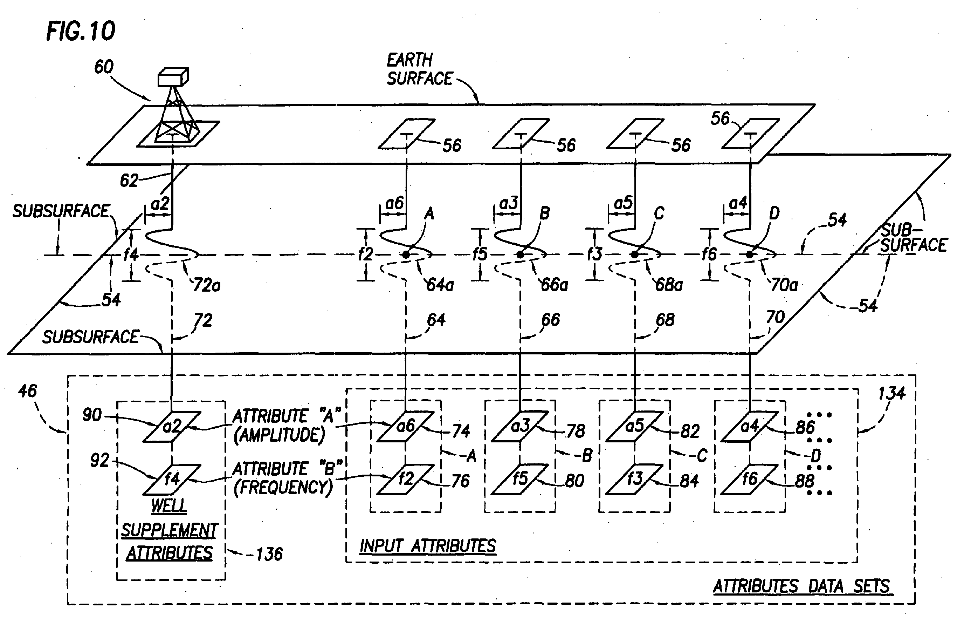

In figure 10, a method for determining at least one (1) pair of "attributes" associated with each point (e.g., points A through H) on the earth's subsurface layer 54, off which one of the sound vibrations 52 of figure 7 are reflected, is illustrated.

In figure 10, a seismic trace having an amplitude variation is associated with each of points A, B, C, and D on the subsurface layer 54. Although not shown in figure 10, a seismic trace having an amplitude variation is also associated with points E, F, G, and H on the subsurface layer 54. In figure 10, locate point A on the subsurface layer 54, and notice that point A has a seismic trace 64 which includes an amplitude variation 64a, the amplitude variation 64a having an amplitude "a6" and a frequency "f2". Point B has a seismic trace 66 which includes an amplitude variation 66a, the amplitude variation 66a having an amplitude "a3" and a frequency "f5". Point C has a seismic trace 68 which includes an amplitude variation 68a, the amplitude variation 68a having an amplitude "a5" and a frequency "f3". Point D has a seismic trace 70 which includes an amplitude variation 70a, the amplitude variation 70a having an amplitude "a4" and a frequency "f6". Therefore, in figure 10, for point A on the subsurface layer 54, one "attribute" 74 associated with point A is amplitude "a6" 74 and another "attribute" 76 associated with point A is frequency "f2" 76. Similarly, for point B, one "attribute" 78 associated with point B is amplitude "a3" 78 and another "attribute" 80 associated with point B is frequency "f5" 80. For point C, one "attribute" 82 associated with point C is amplitude "a5" 82 and another "attribute" 84 associated with point C is frequency "f3" 84. For point D, one "attribute" 86 associated with point D is amplitude "a4" 86 and another "attribute" 88 associated with point D is frequency "f6" 88.

However, in figure 10, a seismic trace having an amplitude variation is also associated with the wellbore 62. That is, in figure 10, a seismic trace 72 having an amplitude variation 72a is also associated with the wellbore 62. The amplitude variation 72a has an amplitude "a2" and a frequency "f4". Therefore, for the wellbore 62, one "attribute" 90 associated with the wellbore 62 is amplitude "a2" 90 and another "attribute" 92 associated with the wellbore 62 is frequency "f4" 92. Actually, the attributes 90, 92 associated with the wellbore 62 are "synthesized". That is, the wellbore 62 in figure 10 will produce wellbore data similar to the well log output record 32 of figure 2; and, from that wellbore data, the seismic trace 72 in figure 10 is "synthesized"; and, from that seismic trace 72, the attribute 90 (amplitude "a2") and the attribute 92 (frequency "f4") are generated.

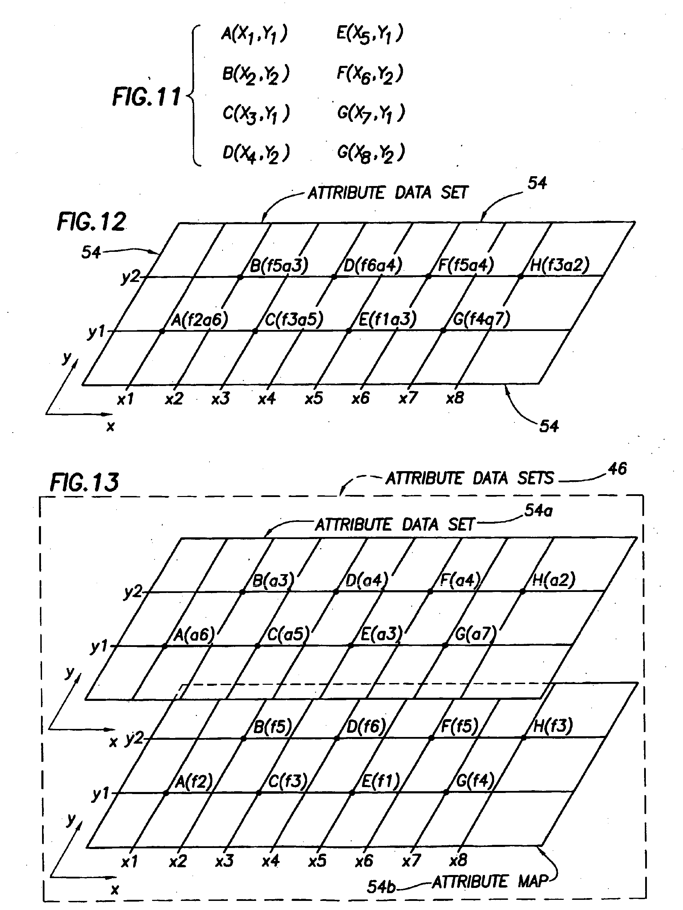

In figure 11, recall from figure 7 that points A through H on subsurface layer 54 have the following (x, y) coordinate values:

| | |
|---|---|
| A (x1, y1) | E(x5, y1) |
| B (x2, y2) | F(x6, y2) |
| C (x3, y1) | G(x7, y1) |
| D (x4, y2) | H(x8, y2) |

In figure 12, the subsurface layer 54 is again illustrated, the subsurface layer 54 including our example points A, B, C, D, E, F, G, and H.

Using the "method for determining at least one (1) pair of 'attributes' associated with each point (A through H) on the earth's subsurface layer 54" that was discussed above with reference to figure 10, let us now assume, for purposes of our example, that the "attributes" for point A on subsurface layer 54 are (f2, a6), where "f2" is a frequency and "a6" is an amplitude. Similarly, assume that the "attributes" for point B on subsurface layer 54 are (f5, a3).

Refer now to figure 12, and assume, for purposes of our example, that points A through H on the subsurface layer 54 in figure 12 have the following (x, y) "coordinates" and points A through H also have the following (f, a) "attributes", where "f" designates frequency and "a" designates amplitude:

| The point on subsurface layer 54 | (x, y) coordinates | (f, a) "attributes" |
|---|---|---|
| A | (x1, y1) | (f2, a6) |
| B | (x2, y2) | (f5, a3) |
| C | (x3, y1) | (f3, a5) |
| D | (x4, y2) | (f6, a4) |
| E | (x5, y1) | (f1, a3) |
| F | (x6, y2) | (f5, a4) |
| G | (x7, y1) | (f4, a7) |
| H | (x8, y2) | (f3, a2) |

In figure 13, by using the (x, y) coordinates and the (f, a) "attributes" derived above with reference to figure 12, we can now determine the "Attribute Data Sets" 46 which were generated by the computer 44 of figure 6. In figure 13, one attribute data set 54a of the "attribute data sets" 46 of figure 6 would comprise the amplitude "attribute", and another attribute data set 54b of the "attribute data sets" 46 of figure 6 would comprise the frequency "attribute".

In figure 13, therefore, the one attribute data set 54a of the "attribute data sets" 46 comprised of the amplitude "attribute" would include the following data:

| The point on subsurface 54 | (x, y) coordinates | amplitude "attribute" |
|---|---|---|
| A | (x1, y1) | (a6) |
| B | (x2, y2) | (a3) |
| C | (x3, y1) | (a5) |
| D | (x4, y2) | (a4) |
| E | (x5, y1) | (a3) |
| F | (x6, y2) | (a4) |
| G | (x7, y1) | (a7) |
| H | (x8, y2) | (a2) |

In figure 13, another attribute data set 54b of the "attribute data sets" 46 comprised of the frequency "attribute" would include the following data:

| The point on subsurface 54 | (x, y) coordinates | frequency "attribute" |
|---|---|---|
| A | (x1, y1) | (f2) |
| B | (x2, y2) | (f5) |
| C | (x3, y1) | (f3) |
| D | (x4, y2) | (f6) |
| E | (x5, y1) | (f1) |
| F | (x6, y2) | (f5) |
| G | (x7, y1) | (f4) |
| H | (x8, y2) | (f3) |

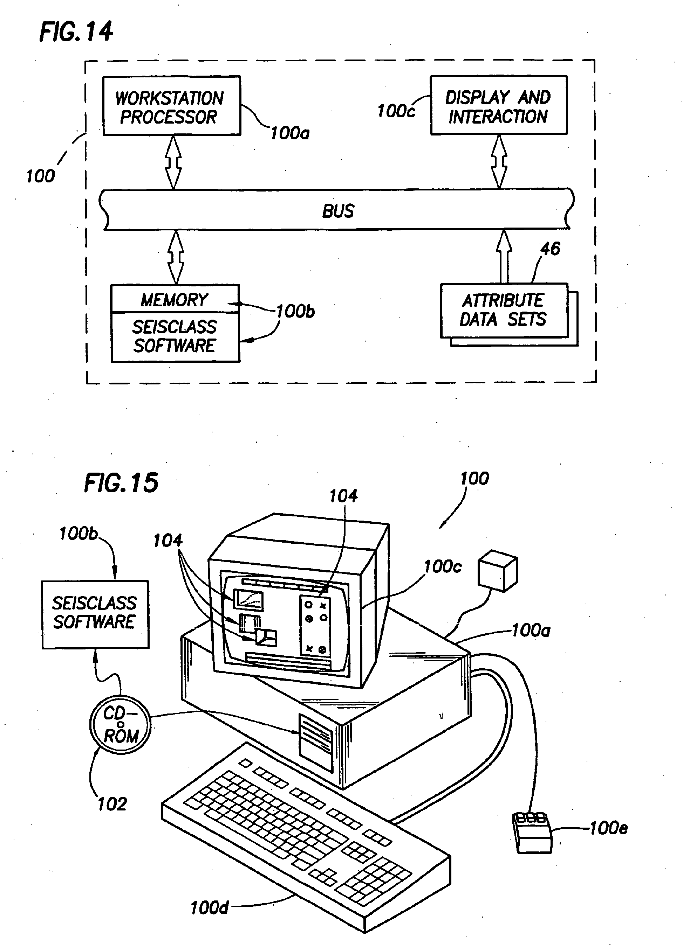

Referring to figures 14 and 15, a computer workstation 100 is illustrated.

In figure 14, the workstation 100 includes a workstation processor 100a and a workstation memory 110b, the workstation processor 100a being connected to a system bus, and the workstation memory 100b being connected to the system bus. The Attribute Data Sets 46, generated by the computer 44 of figure 6 and illustrated in figure 13, are provided as "input data" to the workstation 100, and a workstation "Display and Interaction" 100c is visible to a workstation operator, the display 100c including one or more windows which are used by the operator for "interaction" purposes to manipulate subsequent operations. The workstation memory 100b stores a novel software package in accordance with the present invention, hereinafter known as the "Seisclass Software". When the Seisclass software 100b is executed by the workstation processor 100a, a variety of window displays are presented to the operator on the Display 100c, the window displays being used by the operator to execute and perform certain "interaction" functional operations which are designed for manipulating the functional operation of the seisclass software (those manipulations will be discussed later in this specification).

In figure 15, the workstation 100 includes a monitor/display 100c for performing the "interaction", a processor 100a which includes the memory 100b for storing the "seisclass software", a keyboard 100d, and a mouse 100e. A storage medium 102, usually a "CD-Rom" 102, initially stores the "seisclass software" 100b of the present invention. The CD-Rom 102 is inserted into the processor 100a of the workstation 100 in figure 15, and the "seisclass software", stored on the CD-Rom 102, is read from the CD-Rom 102 and is loaded into the workstation memory 100b. The monitor/display 100c in figure 15 is a cathode ray tube which is adapted for displaying a plurality of "window displays" 104 thereon that are used for "interaction" purposes. The word "interaction" implies an operator/window display interaction, whereby the operator would use the mouse 100e to place a cursor in a window display 104, click on the mouse 100e, and thereby perform the "interaction" involving the execution of a portion of the seisclass software 100b.

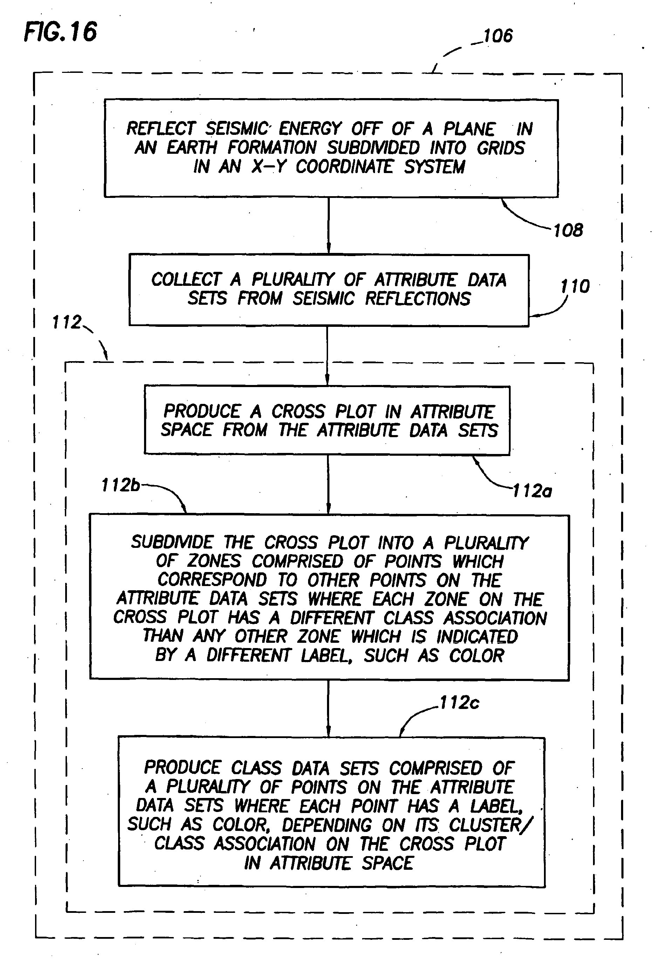

Referring to figure 16, a flowchart 106 is presented which illustrates the functional operation performed by the seisclass software 100b when the seisclass software 100b is executed by the workstation processor 100a of figure 14. In figure 16, the first two blocks 108 and 110 of the flowchart 106 have already been discussed: block 108 "Reflect Seismic Energy off of a Plane in the Earth Formation subdivided into grids in an x-y coordinate system" (figures 7 through 10), and block 110 "Collect a Plurality of Attribute Data sets from Seismic Reflections" (figures 11 through 13).

However, block 112 of the flowchart 106 in figure 16 illustrates the function performed by the workstation processor 100a when the "seisclass software" 100b of the present invention is executed by the workstation processor 100a of figure 14. Block 112 of flowchart 106 comprises the following steps:
(1) "Produce a cross plot in attribute space from the attribute data sets", sub-block 112a,
(2) "Subdivide the cross plot into a plurality of zones comprised of points which correspond to other points on the attribute data sets where each zone on the cross plot has a different class association than any other zone which is indicated by a different label, such as color", sub-block 112b, and
(3) "Produce a Class Data Set comprised of a plurality of points on the attribute data sets where each point has a label, such as color, depending on its cluster/class association on the cross plot in attribute space", sub-block 112c.

The "Class Data Set", otherwise called a "classified result", is displayed on the workstation "Display" 100c of figure 14 and 15.

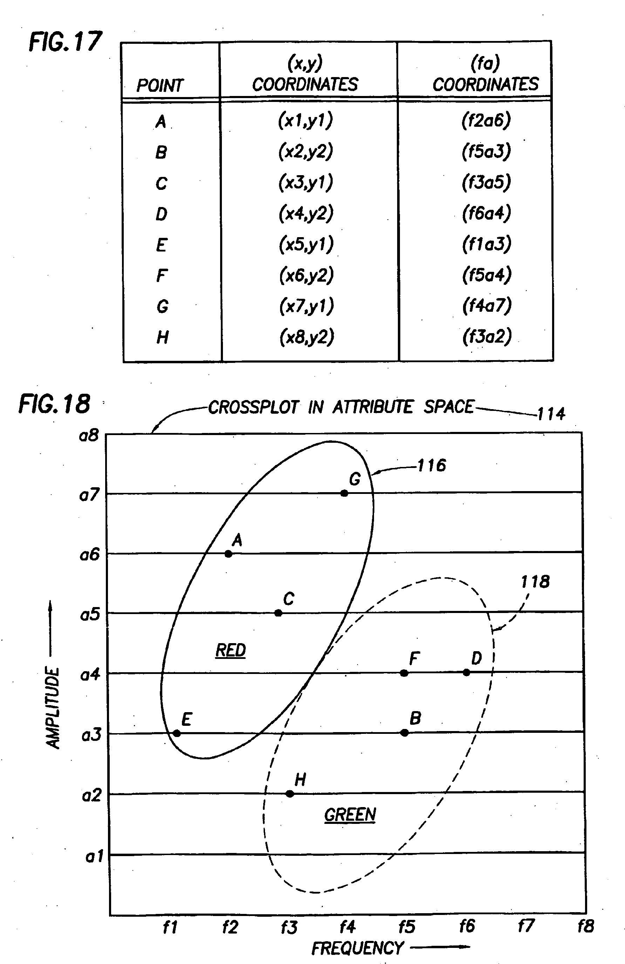

Referring to figure 17 through 21, when the Seisclass software of the present invention (represented by block 112 of the flowchart 106 of figure 16) is executed by the workstation processor 100a of figure 14, a functional operation is performed by that workstation processor 100a.

That functional operation is set forth in the following paragraphs with reference to figures 17 through 21.

In figure 17, recall from the above discussion with reference to figure 12 and 13 that the points A through H on the subsurface layer 54 have a set of (x, y) coordinates and a corresponding set of (f, a) "attributes". That set of (x, y) coordinates and that set of (f, a) "attributes" are duplicated again in figure 17.

In figure 18, let us now plot the (f, a) coordinates in an "amplitude" - "frequency" coordinate system, where "amplitude" is plotted on the y-axis and "frequency" is plotted on the x-axis. When the (f, a) "attribute" coordinates of figure 17 are plotted in an "amplitude" - "frequency" coordinate system, the result of that plot is shown in figure 18 as element numeral 114. The plot shown in figure 18 is hereinafter called a "cross plot in attribute space" or "cross plot 114". The (f, a) "attribute" coordinates of figure 17 were carefully selected to demonstrate the "clustering" now visible in the cross plot in attribute space illustrated in figure 18. In the cross plot 114 of figure 18, note that points A, G, E, and C are "clustered" together in a "cluster" 116, and points F, D, H, and B are separately "clustered" together in a "cluster" 118. Let us now assign a label, such as color, to the cluster 116, and assign a separate and different label, such as color, to the cluster 118. The use of color as a label in figure 18 is given by way of example only, since other kinds of labels other than color, such as numeric tags, might be more meaningful. The color "red" is assigned to the cluster 116 in the cross plot 114 of figure 18, and the color "green" is assigned to the cluster 118 in the cross plot 114. Therefore, the points A, G, E, and C have been assigned the color "red", and the points F, D, H, and B have been assigned the color "green".

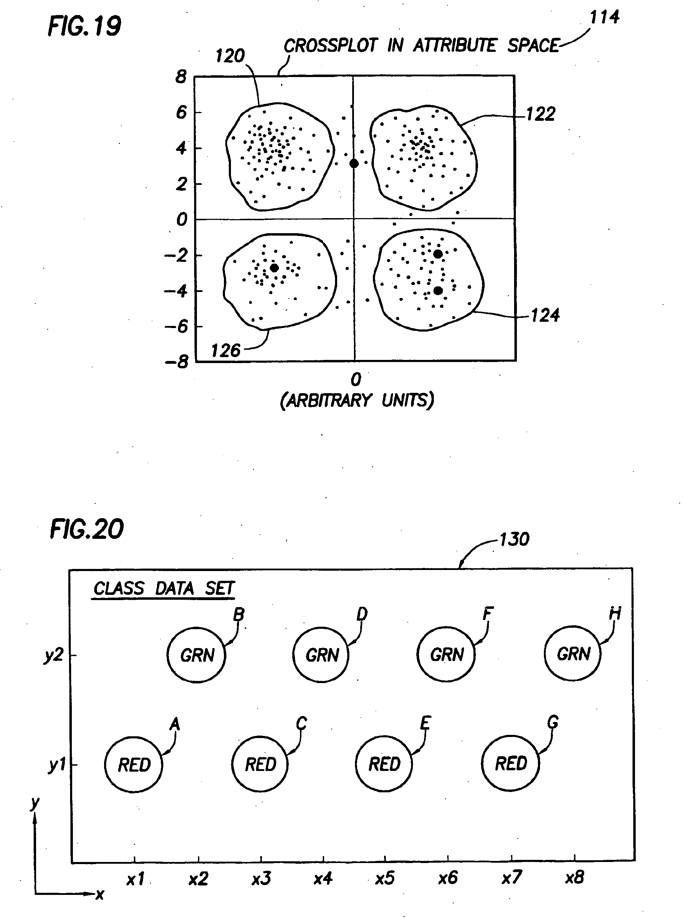

In figure 19, an actual cross plot 114 is illustrated. Note the clusters 120, 122, 124, and 126 in attribute space.

From the above discussion, it is apparent that the points A through H on the subsurface layer 54 in the earth formation have the following (x, y) coordinates and the following labels (i.e.,"colors" in our example):

**TABLE 1**

| Point | (x, y) coordinates | Color label |
|---|---|---|
| A | (x1, y1) | red |
| B | (x2, y2) | green |
| C | (x3, y1) | red |
| D | (x4, y2) | green |
| E | (x5, y1) | red |
| F | (x6, y2) | green |
| G | (x7, y1) | red |
| H | (x8, y2) | green |

In figure 20, let us now plot the points A through H on subsurface layer 54 in an (x, y) coordinate system, using the above referenced (x, y) coordinates set forth in the above table 1, and then assign to each plotted point the "color" label indicated in the above table 1. The result of that plot (hereinafter called a "Class Data Set" 130) is shown in figure 20.

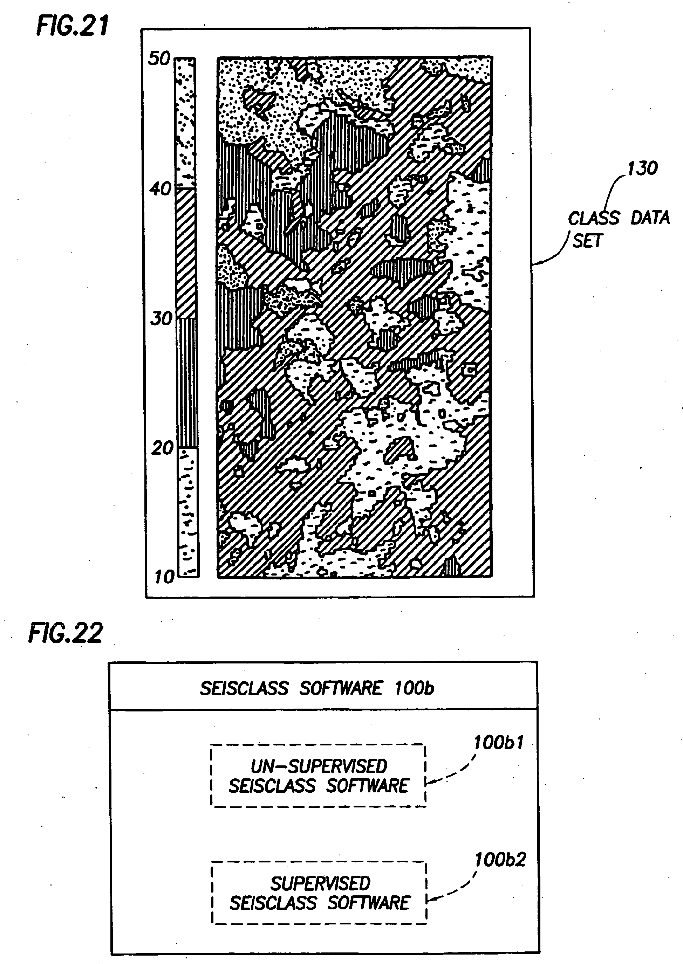

In figure 21, an actual "Class Data set" plot 130 is shown in figure 21 (actually, the actual Class Data Set plot would be illustrated in a plurality of different colors, but, for purposes of this specification, cross hatching is utilized). The "Class Data set" plot 130 of figure 21 is shown and displayed on the "Display" 100c of the workstation 100 of figures 14 and 15. In addition, the "Class Data set" plot 130 of figure 21 can be recorded on a recorder that is connected to the system bus in of the workstation 100 of figure 14. The "Class Data set" 130 is also visible to an operator sitting at the workstation 100, the "Class Data set" being the end result that is produced in response to the execution of the "seisclass software" 100b of the present invention.

In the "Class Data set" plot of figure 21, different colors are indicated by a different shading (although, the real Class Data set will display colors and not shading). When the frequency and amplitude "attributes" associated with a "plurality of points" on the subsurface layer 54 of figure 7 are approximately the same, the labels, such as colors, associated with those "plurality of points" on the Class Data set 130 of figure 21 will also be the same.

On the other hand, when the frequency and amplitude "attributes" associated with a sound vibration reflecting from "first plurality of points" on the subsurface layer 54 are different from the frequency and amplitude "attributes" associated with a sound vibration reflecting from a "second plurality of points" on the subsurface layer 54 of figure 7, then the label, such as color, associated with that "first plurality of points" on the Class Data set 130 will be different from the label, such as color, associated with that "second plurality of points" on the Class Data set 130.

For example, if the "first plurality of points" reside on an area of the subsurface layer 54 which is "sand", and the "second plurality of points" also reside on an area of the subsurface layer 54 which is also "sand", then the frequency and amplitude "attributes" (as well as other such "attributes") associated with a sound vibration reflecting from the "first plurality of points" on the subsurface layer 54 will be the same as the frequency and amplitude "attributes" associated with a sound vibration reflecting from the "second plurality of points" on the subsurface layer 54 of figure 7. As a result, the color label associated with that "first plurality of points" on the Class Data set 130 will be the same as the color label associated with that "second plurality of points" on the Class Data set 130.

On the other hand, if the "first plurality of points" reside on an area of the subsurface layer 54 which is "sand", and the "second plurality of points" reside on an area of the subsurface layer 54 which is "brine" (i.e., not the same as 'sand'), then the frequency and amplitude "attributes" (as well as other such "attributes") associated with a sound vibration reflecting from the "first plurality of points" on the subsurface layer 54 will be different from the frequency and amplitude "attributes" associated with a sound vibration reflecting from the "second plurality of points" on the subsurface layer 54 of figure 7. As a result, the color label associated with that "first plurality of points" on the Class Data set 130 will be different from the color label associated with that "second plurality of points" on the Class Data set 130. Therefore, the different color labels visible on the Class Data set between a "first set of points" and a "second set of points" indicate that the set of characteristics (i.e., the amplitude, frequency, reflection intensity, etc) associated with the reflections of the sound vibrations from the "first set of points" on the subsurface layer 54 of figure 7 is different than the set of characteristics associated with the reflections of the sound vibrations from the "second set of points" on the subsurface layer 54 of figure 7.

When all the "set of characteristics" associated with all the points on the subsurface layer 54 of figure 7 are known, the operator sitting at workstation 100 of figures 14 and 15 can study the resultant "Class Data set" 130 and, from that "Class Data set", the operator can more accurately determine the possibility of the existence of oil or other hydrocarbon bearing formations located adjacent or near that subsurface layer 54.

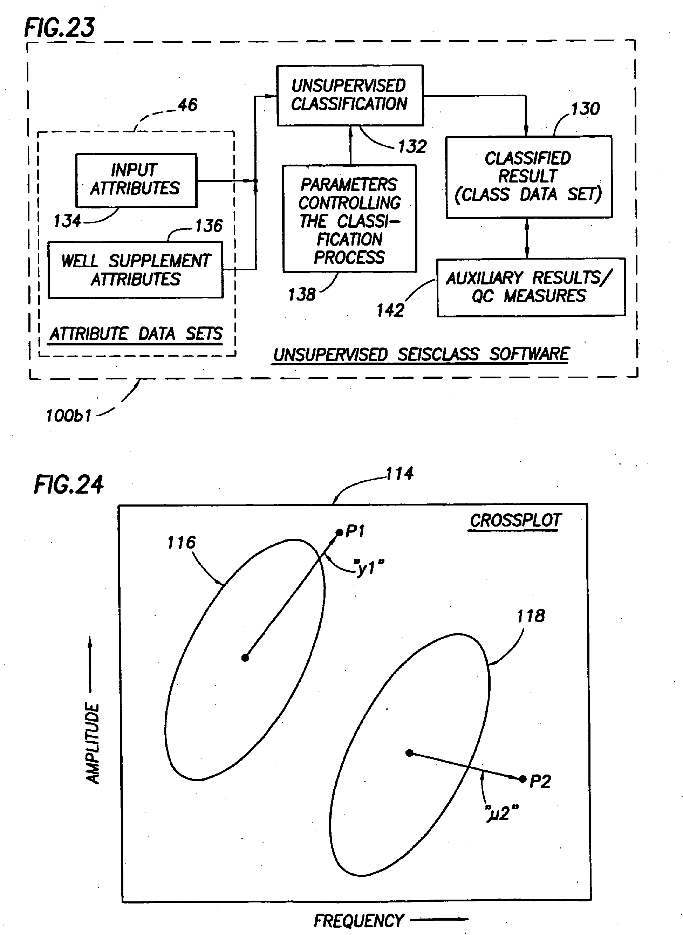

Referring to figure 22, the actual structure of the "seisclass software" 100b of figure 14 will be set forth in the following paragraphs with initial reference to figure 23. Before starting discussion of the structure of the "seisclass software" 100b, in figure 22, it should be noted that there are two types of "seisclass software" 100b: (1) an "Un-supervised" seisclass software 100b1, and (2) a "Supervised" seisclass software 100b2.

The "Un-supervised" seisclass software 100b1 is used when the "classes" of the data present within the "attribute data sets" 46 of figure 14 are not known, and the "supervised" seisclass software 100b2 is used when the "classes" of the data present within the "attribute data sets" 46 are known. The word "classes" means the class or category to which the data in the attribute data sets 46 belong. For example, the data may belong to one of the following classes: sand or shale or gas or fluid or oil or brine, etc. The classes will be discussed later in this specification.

Referring to figures 23 through 29, the structure of the "Un-supervised" seisclass software 100b1 of figure 22 is illustrated.

In figures 23 and 10, referring initially to figure 23, the Un-supervised seisclass software 100b1 comprises an "unsupervised classification" block of code 132 which is responsive to and receives three sets of input data: (1) input attributes 134, (2) well supplement attributes 136, and (3) parameters controlling the classification process 138. The input attributes 134 and the well supplement attributes 136 can best be understood by referring back to our simple example shown in figure 10. In figure 10, the input attributes 134 are the following: (1) the amplitude attribute "a6" 74 and the frequency attribute "f2" 76 for point A, (2) the amplitude attribute "a3" 78 and the frequency attribute "f5" 80 for point B, (3) the amplitude attribute "a5" 82 and the frequency attribute "f3" 84 for point C, and (4) the amplitude attribute "a4" 86 and the frequency attribute "f6" 88 for point D. On the other hand, in figure 10, the well supplement attributes 136 are the following: the amplitude attribute "a2" 90 and the frequency attribute "f4" 92 for the wellbore 62. Recall, from figure 10, that the wellbore seismic trace 72 is synthesized from the well log data obtained when the wellbore 62 is logged by a logging tool, as depicted in figure 2. Referring back to figure 23, the "parameters controlling the classification process" 138 refers to the parameters associated with the classification method in the "unsupervised classification" 132. Briefly, the seisclass software 100b offers a selection of classification methods, and each such method has its own particular "parameters" which are closely related to the particular method. All parameters that are required by a classification method are defined in a "method/parameter catalogue". As noted below, when the "parameters" are selected, those "parameters" can control the classification process performed by the "unsupervised classification" 132. In addition, editing the "parameters" 138 will modify slightly the classification process performed by the "unsupervised classification" 132.

In figure 23, in response to the input attributes 134 and the well supplement attributes 136 and the parameters controlling the classification process 138, the unsupervised classification code 132 will produce a "classified result" 130, the "classified result" 130 being the aforementioned "Class Data set" 130. That is, in response to the input attributes 134 and the well supplement attributes 136 and the parameters controlling the classification process 138, the unsupervised classification code 132 will generate a cross plot in attribute space (similar to the cross plot 114 of figure 18) and then, responsive to the cross plot, the unsupervised classification code 132 will generate a "classified result" which is the Class Data set 130 (similar to the Class Data set 130 shown in figures 20 and 21).

In figure 23, when the classified result 130 (the Class Data set 130) is produced, a quality control (QC) measure is implemented. After the class data set 130/classified result 130 is produced, the "Auxiliary Results/QC Measures" code 142 in figure 22 will help to assess the quality of the classified result 130, that is, to determine the degree of accuracy of the information set forth in the Class Data set 130 or classified result 140. Refer now to figure 24 to understand how the "Auxiliary Results/QC Measures" code 142 performs this function.

In figure 24, the cross plot 114 of figure 18 is illustrated again, showing the two clusters of data points 116 and 118. Note, however, that a point "P1" is associated with cluster 116 and point "P2" is associated with cluster 118, yet, points P1 and P2 are outside their respective clusters. That is, point P1 is outside its cluster 116 by a distance "y1" from the center of the cluster 116, and point P2 is outside its cluster 118 by distance "y2" from the center of the cluster 118.

When the "unsupervised classification" code 132 of figure 22 plots the cross plot in attribute space 114 in response to all of the input attributes 134 and the well supplement attributes 136 and the parameters controlling the classification process 138, the "Auxiliary Results/ QC Measures" code 142 will notice that points P1 and P2 are outside their respective clusters 116 and 118 by distances "y1" and "y2". Since the distances "y1" and "y2" are quite large, the "Auxiliary Results/QC Measures" code 142 will assign a "lower confidence level" to the classification of points P1 and P2. As a result, in view of the aforementioned "lower confidence level" with regard to the classification of points P1 and P2, the "Auxiliary Results/QC Measures" code 142 in figure 23 has determined that the degree of accuracy of the information set forth in the classified result 130 (Class Data set 130) is less than previously expected.

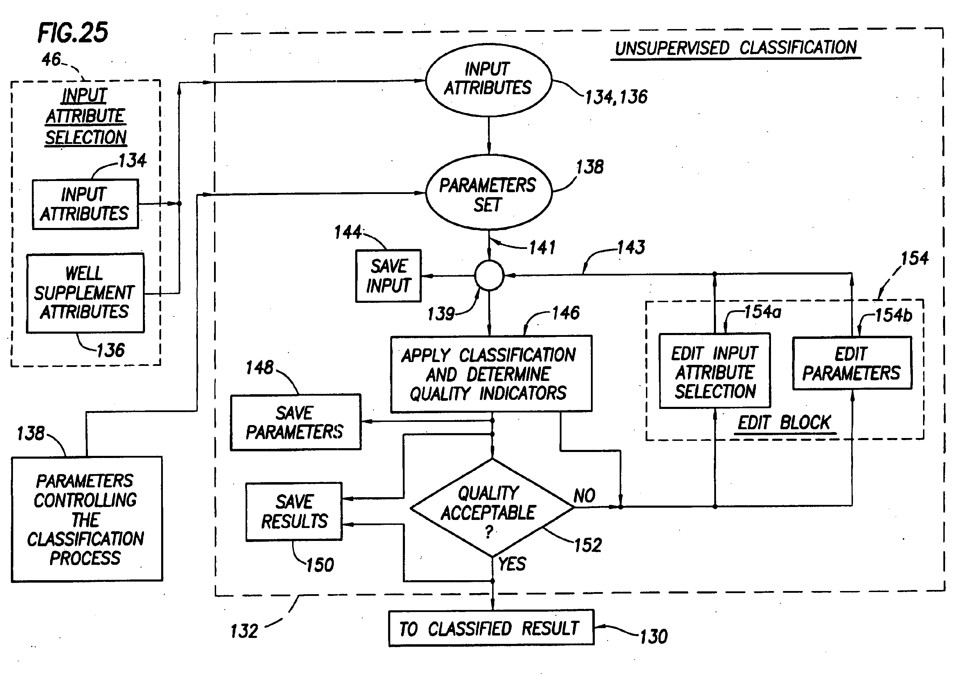

In figure 25, the structure and functional operation of the "unsupervised classification" code 132 of figure 23 is illustrated.

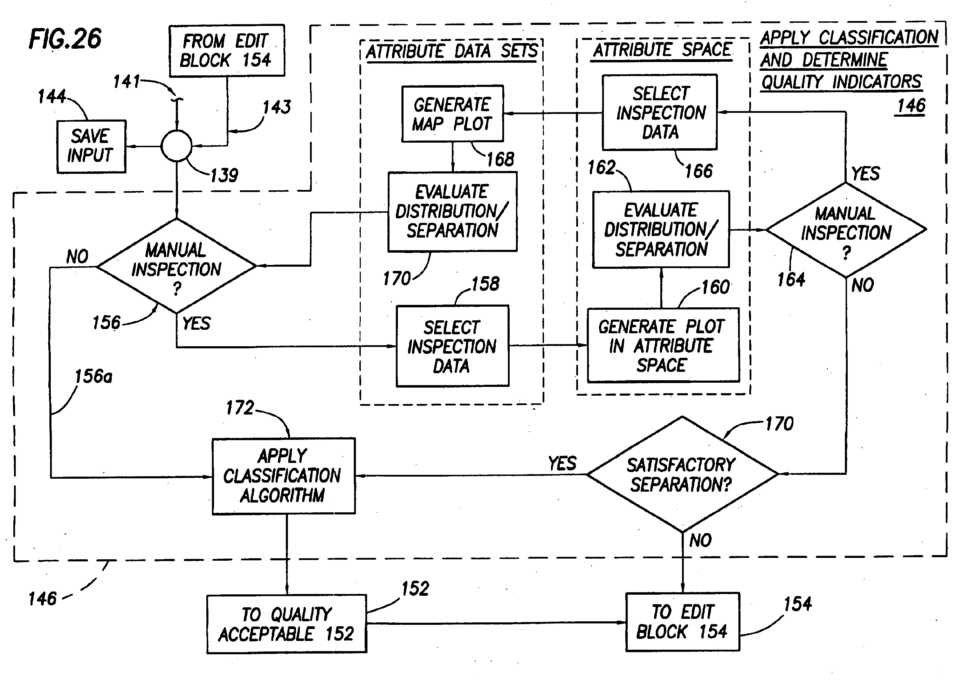

In figure 25, the "unsupervised classification" code 132 will receive the "input attribute selection", the input attribute selection including the "input attributes" 134 and the "well supplement attributes" 136. The "unsupervised classification" code 132 will also receive the "parameters controlling the classification process" 138 (the input attribute selection 134, 136 and the parameters controlling the classification process 138 being hereinafter collectively called "input"). Note, in figure 25, that the "parameter set" data block 138 is input to a summing element 139 via a first line 141; however, a second line 143 from an edit block 154 (discussed below) is also input to the summing element 139. The aforementioned "input" will be saved via the "save input" block 144 in figure 24 (i.e., the composition of the input attribute selection 134, 136 and the parameters 138 will be saved via the "save input" block 144 in order to re-run the classification to reproduce the results or to retain the composition as a reference for further tests using different components). In addition, that "input" will be received by the "apply classification and determine quality indicators" code 146 in figure 25 (see figure 26 for a construction of the "apply classification..." code 146). The "apply classification..." code 146 will then use the "parameters..." 138 to "apply the classification". That is, the "apply classification..." code 146 will use the "parameters..." 138 to produce a "cross plot in attribute space". In that cross plot, the "input attributes" 134 and the "well supplement attributes" 136 will be clustered in the same manner as discussed above with reference to figure 18 when the cross plot 114 in attribute space having clusters 116 and 118 were produced. When the "apply classification..." code 146 completes its function of producing the "cross plot in attribute space", the "parameters..." 138 are saved, via the "save parameters" block 148, and the resultant "cross plot.in attribute space" is also saved, via the "save results" block 150. Next, the "unsupervised classification" code 132 asks, via the "quality acceptable?" block 152 in figure 24, whether the "cross plot in attribute space", produced by the "apply classification..." code 146, is acceptable from a quality standpoint. If the quality of the "cross plot in attribute space" is not acceptable when the "quality acceptable" code 152 is executed, the unsupervised classification code 132 is directed to the "edit block" 154 in figure 24. In the edit block 154, two methods of "editing" are implemented: (1) "edit input attribute selection" 154a (wherein the "input attribute selection" 134, 136 are edited/changed), and (2) "edit parameters" 154b (wherein the parameters controlling the classification process 138 are edited/changed). Following the editing performed by the edit block 154, the "apply classification..." code 146 will use the edited/changed input attributes 134 and the edited/changed well supplement attributes 136 and the edited/changed parameters controlling the classification process 138 to re-apply the classification (i.e., to produce a "new cross plot in attribute space"). If the quality of the "new cross plot in attribute space" is acceptable (when the "quality acceptable" block 152 is executed), the "new cross plot in attribute space" is passed to the "classified result" 130 block of code in figure 22 where the Class Data set/classified result 130 will be plotted in response to the "new cross plot in attribute space".

In figure 26, the structure and functional operation of the "apply classification and determine quality indicators" code 146 of figure 25 is illustrated.

In figure 26, starting with the summing element 139, the input attributes 134, 136 (situated on the "attribute data sets" 54a and 54b of figure 13) and the parameters controlling the classification process 138 are input to the summing element 139 via a first line 141. An operator sitting at workstation 100 of figure 15 has an opportunity, at this point, to inspect the input attributes 134, 136 which are situated on their "attribute data sets" (of figure 13) relative to the "cross plot in attribute space" (of figure 18) which results from those input attributes by viewing the contents of the plurality of window displays 104 on the monitor of the workstation 100 of figure 15. If a manual inspection of the input attributes 134, 136 situated on the "attribute data sets" (of figure 13) relative to the resultant "cross plot in attribute space" (of figure 18) is necessary, the operator at the workstation 100 will indicate that such an inspection is necessary, thereby triggering the execution of the first "manual inspection" block 156 in figure 26 (note that there are two "manual inspection" blocks in figure 26, a first "manual inspection" block 156, and a second "manual inspection" block 164). Assume that the operator indicated that a manual inspection of the input attributes 134, 136 on their "attribute data sets" (of figure 13) relative to the resultant "cross plot in attribute space" (of figure 18) is necessary and that, as a result, the "yes" output from the first "manual inspection" block 156 in figure 25 is generated.

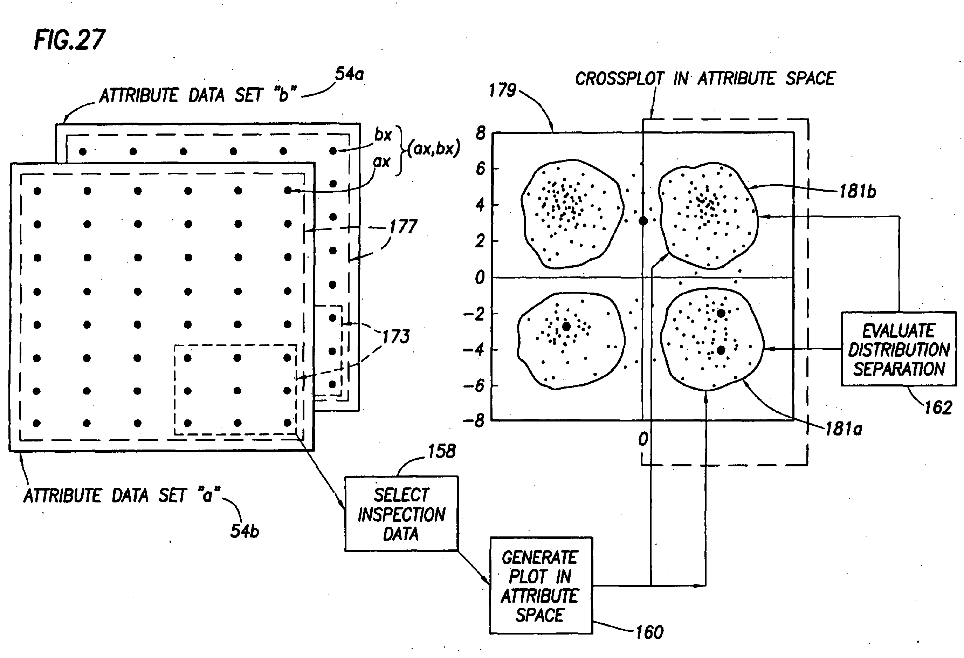

In figures 26 and 27, if the "yes" output from the first "manual inspection" block 156 of figure 26 is generated, the following portions of the "apply classification..." code 146 in figure 26 will be executed:
(Step 1) "select inspection data" 158 (figure 26),
(Step 2) "generate plot in attribute space" 160 (figure 26), and
(Step 3) "evaluate distribution/separation" 162 (figure 26).

In figure 27, inspection data 173 is selected (block 158 in figure 26). The inspection data 173 of figure 27 are comprised of a plurality of input attributes (a*ₓ*, b*ₓ*) [such as the amplitude and frequency attributes "(f, a)" of figure 12] that are a subset of a larger plurality of input attributes 177 on the attribute data set "a"/ attribute data set "b" of figure 27.

In response to the larger plurality of input attributes 177 on the attribute data sets "a" and "b", a "cross plot in attribute space" 179 is generated in figure 27 and, in our example, four clusters are formed in the "cross plot in attribute space" of figure 27.

However, in figure 27, the inspection data 173 on the attribute data set "a" and the attribute data set "b" in figure 27 [including a plurality of the input attributes (a*ₓ* , b*ₓ*)] are selected (block 158 in figure 26), and a "cross plot in attribute space" 181a and 181b in figure 27 is generated from that inspection data 173 (block 160 in figure 25). The distributionseparation of that "cross plot in attribute space" 181a, 181b of figure 27 is evaluated (block 162 of figure 25).

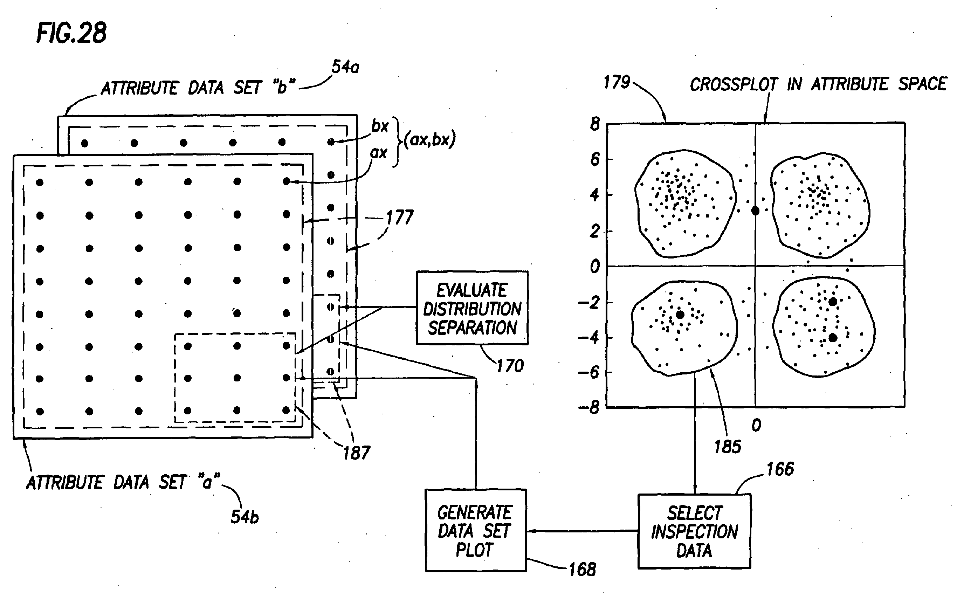

In figure 26 and 28, if an additional manual inspection of the "cross plot in attribute space" 179 of figure 27 relative to the corresponding distribution of the (a*ₓ*, b*ₓ*) input attributes on the "attribute data sets" is required, a "yes" output is generated from the second "manual inspection" block 164 in figure 26. As a result, the following additional portions of the "apply classification..." code 146 in figure 26 will be executed:
(Step 4) "select inspection data" 166 (figure 26),
(Step 5) "generate data set plot" 168 (i.e., the "attribute data set" 54a, 54b), and
(Step 6) "evaluate distribution separation" 170 (on the "attribute data set").

In figure 28, when the "cross plot in attribute space" 179 is generated from the larger plurality of input attributes 177 on the attribute data sets "a" and "b", additional "inspection data" 185 is selected from among some of the clustered points in the "cross plot in attribute space" 179 (block 166 of figure 26). Using that "inspection data" 185 on the "cross plot in attribute space" 179, another "attribute data set" plot 187 is generated from that inspection data 185 (block 168 of figure 26). The distributionseparation of the input attributes (a*ₓ*, b*ₓ*) on said another "attribute data set" plot 187 in figure 28 is evaluated (block 170 of figure 26).

In figure 26, steps 1 through 3 above involve the clustering of "some" of the input attributes 134, 136 (called "inspection data") in attribute space, similar to the clustering of the attributes illustrated in figure 18, and evaluating the separation of the resultant clusters of the data to determine if such clustering is acceptable. It should be noted here that classification might still be viable even if the cluster separation is poor. The results might be less valuable, but those results might still be useful. Steps 4 through 6 involve the selection of some of the points within a cluster or between clusters in attribute space (further inspection data), the generation of an "attribute data set" plot from that further inspection data, and the evaluation of the distribution of the input attributes on the resultant "attribute data set" plot.

The assessment of the resultant "attribute data set" is done in an interactive fashion; that is, the resulting "intermediate attribute data set" is inspected visually and it is compared with its corresponding "cross plot in attribute space". The pointer-position in the attribute data set (i.e., the data set domain) identifies and highlights the respective sample in the crossplot in attribute space. Similarly, points in the cross plot in attribute space can be used to highlight the corresponding points in the "attribute data set". After the inspection, inherent in steps 1 through 6, is complete, the operator may draw different conclusions: (1) return to the input attribute selection step in order to de-select the attributes that do not contribute to class separation and/or to select other attributes that were not previously used, (2) try to improve the classification result by manipulation of the parameters 138 (the type of parameter and its effect depends on the classification method being used), and/or (3) declare the classification "finished'' and save the intermediate results or part of the intermediate results to storage.

When step 6 ("evaluate distribution separation" 170 of the resultant attribute data set) is complete, the operator at workstation 100 of figures 14 and 15 will have another opportunity to indicate whether another "manual inspection" of the input attributes 134, 136 and the parameters 138, relative to its corresponding cross plot in attribute space, is necessary via the manual inspection block 156 in figure 26.

Assume now that another such manual inspection of the input attributes 134, 136, relative to the resultant cross plot in attribute space, is not necessary, and, as a result, a "no" output 156a is generated from the manual inspection block 156 in figure 26.

In figure 26, if a "no" output 156a is generated from the manual inspection block 156, the input attributes 134, 136 and the parameters 138 of figure 24 were "tested" by clustering "some" of the attributes 134, 136 (called "inspection data") in attribute space (similar to the attribute space 114 shown in figure 18), and determining if that "inspection data" clustered acceptably in attribute space (114 of figure 18). In addition, the input attributes 134, 136 were further tested by selecting some of the points within a cluster on the "cross plot in attribute space" (called "further inspection data"), generating a corresponding "attribute data set" (54a, 54b in figure 13) from that further inspection data, and evaluating the distribution of the attribute data on the resultant "attribute data set" relative to the further inspection data in the "cross plot in attribute space".

Alternatively, in figure 26, the operator could have tested the clustering of "some" of the attributes 134, 136 (the inspection data 158) in attribute space, determined if the attribute "inspection data" clustered in an acceptable fashion in attribute space (114), and then exited, at this point, via the "manual inspection" block 164 in figure 26 by answering "no" to the question "manual inspection?" 164. In that case, a "yes" answer to the question "satisfactory separation" 170 in figure 26 would be generated, indicating that the separation of the clusters in the "cross plot in attribute space" (114) were acceptable and satisfactory.

In figure 26, if a "no" output 156a is generated from the manual inspection block 156, then, the clusters in the "cross plot in attribute space" relative to the inspection data on an "attribute data set" are acceptable, the distribution on a resultant "attribute data set" relative to inspection data on the "cross plot in attribute space" are also acceptable, and, as a result, the classification algorithm 172 in figure 26 can now be applied (i.e., the block "apply classification algorithm" 172 block of code of figure 26 can now be executed).

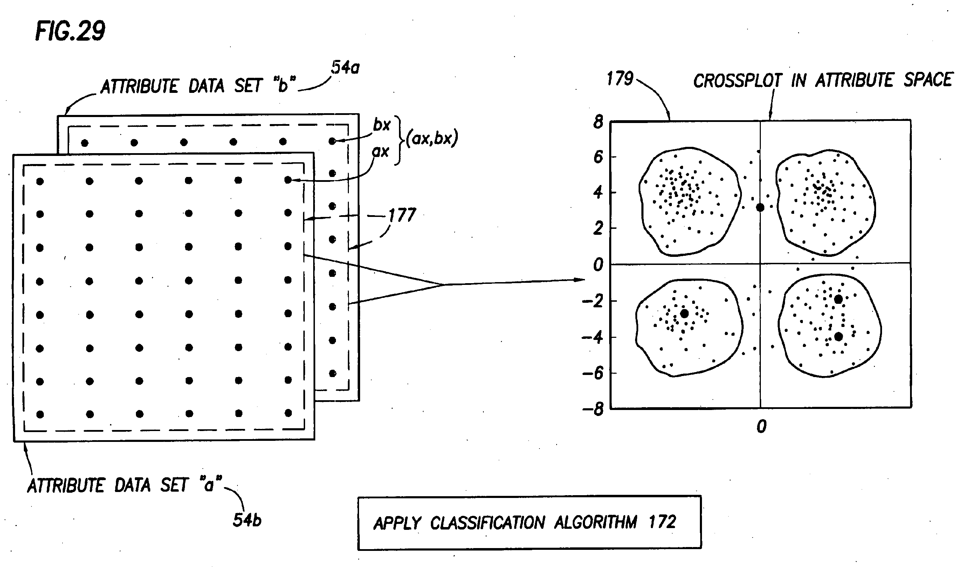

In figure 29, when the "apply classification algorithm" 172 block of code of figure 26 is executed, while using the "parameters" 138 of figure 25, all of the plurality of input attributes (a*ₓ*, b*ₓ*) 177 of figure 29 (134, 136 of figure 25) on the "attribute data sets" of figure 29 will now be clustered in the "cross plot in attribute space" 179 of figure 29 (not just "some" of the input attributes which were previously called the "inspection data"). A different label, such as color, will now be assigned to each cluster in attribute space. In addition, after the different labels, such as colors, are assigned to the respective clusters in attribute space 179, a "final resultant class data set" 130 (i.e., the "Classified Result" 130 in figure 23) is generated, wherein each of the respective plurality of points on the "a"/"b" composite "attribute data set" (of figure 12) is colored with its respective color, that color being obtained from one of the clusters on the "cross plot in attribute space" 179 of figure 29.

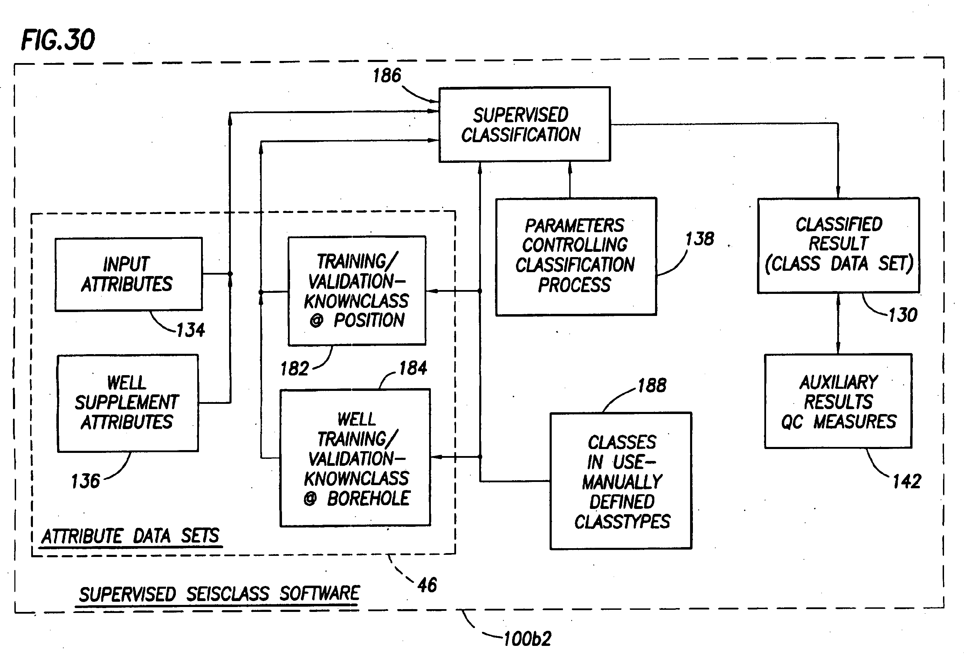

The above discussion with reference to figures 23 through 29 discussed the "Un-supervised" seisclass software 100b1 of figure 22. The following discussion with reference to figures 30 through 43 will now discuss the "Supervised" seisclass software 100b2 of figure 22.

Recall that the "Un-supervised" seisclass software 100b1 of figure 22 is used when the "classes" of the input attribute data on the attribute data sets 54a, 54b of figure 13, disposed within the attribute data sets 46 of figure 14, are not known. However, the "Supervised" seisclass software 100b2 of figure 22 is used when such "classes" are known (where the word "classes" means the class or category to which the data in the attribute data sets 46 belong).

Referring to figures 30 through 43, the "Supervised" seisclass software 100b2 of figure 22 is discussed in the following paragraphs with reference to figures 30 through 43.

In figure 30, the structure of the Supervised seisclass software 100b2 includes the following. A supervised classification block of code 186 will receive six (6) different blocks of input data: (1) the input attribute data 134, (2) the well supplement attribute data 136, (3) a group of attribute data known as "training/validation known class at position" 182, (4) another group of attribute data known as "well training/validation known class at borehole" 184, (5) the "parameters controlling the classification process" 138, and (6) the "classes in use - manually defined class types" 188. In response to the above six (6) blocks of data, the supervised classification code 186 will be executed, and a "cross plot in attribute space" will be generated. Different labels, such as colors, are assigned to each cluster in the "cross plot in attribute space". Then, the "classified result" 130 block of code will generate a class data set 130, similar to the class data set 130 shown in figure 21. The "auxiliary results QC measures" code 142 will be executed in an identical manner as described above with reference to figure 24.

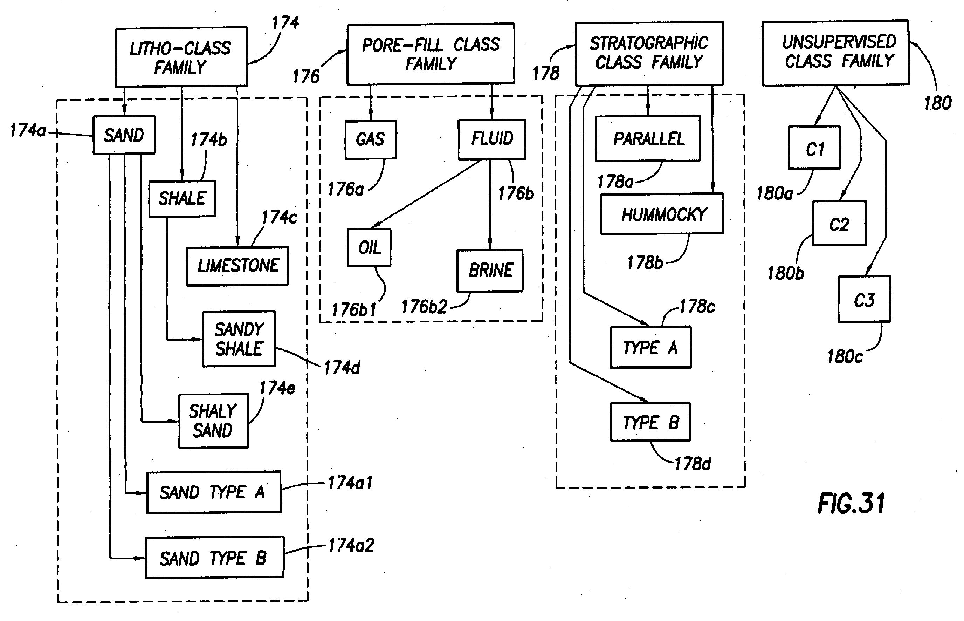

In figure 31, the above referenced input data entitled "classes in use - manually defined class types" 188 of figure 30 will be defined and discussed below with reference to figure 31.

The input attribute data on the attribute data sets of figure 13 and in the "attribute data sets" 46 of figure 14 include a plurality of "subsets" of data, and different ones of those "subsets" of data may belong to different "classes". Those different "classes" are illustrated in figure 31. The different "classes" of figure 31 are categories to which the attribute data in the attribute data sets 46 belong. Some of the attribute data in the attribute data sets 46 belong to one class or category, and other attribute data in the attribute data sets 46 belong to another class or category. In figure 31, there are four (4) such classes or categories illustrated: (1) the "litho-class family" 174, (2) the "pore-fill class family" 176, (3) the "stratographic class family" 178, and (4) the "unsupervised class family" 180. The litho-class family 174 includes: sand 174a, shale 174b, limestone 174c, sandy shale 174d, and shaly sand 174e, and the sand 174a further includes sand type "A" 174a1 and sand type "B" 174a2.
The pore-fill class family 176 includes: gas 176a and fluid 176b, and the fluid 176b further includes oil 176b1 and brine 176b2. The stratographic class family 178 includes the following: parallel 178a, hummocky 178b, type A 178c, and type B 178d. The unsupervised class family 180 includes: C1 180a, C2 180b, and C3 180c (when attribute data in the attribute data sets are not known to belong to any particular class, the unsupervised class family 180 is selected by the operator).

The operator at workstation 100 of figures 14 and 15 will view the "attribute data sets" 46 and he will attempt to categorize the individual input attribute data set forth within the "attribute data sets" 46 of figure 14 by grouping sub-sets of that data into the one or more of the classes illustrated in figure 31. That is, the operator defines a set of "classes" to be used in the classification, simultaneously requiring that the classes or its children be represented in the training and validation step to be discussed below. The selection, by the operator, of the "classes", into which the operator classifies the data, is an interpretative decision. In each specific setting, there should be a minimum justification for selecting a class, e.g., through evidence that the transition from "class A" to "class B" correlates with an observable change in attribute values that again have a physical explanation.

In figure 30, the structure of the "Supervised" seisclass software 100b2 of figure 22 will again be discussed with reference to figure 30.

Recall that the Seisclass software 100b of figure 14 and 22 includes two parts: the "Un-supervised" seisclass software 100b1, and the "Supervised" seisclass software 100b2. Compare figure 23 ("Unsupervised" seisclass software 100b1) with figure 30 ("supervised" seisclass software 100b2). In figure 30, a "supervised classification" block 186 receives certain "inputs", and, responsive thereto, a "classified result (class data set)" 130 is generated. The quality of the classified result 130 (i.e., the quality of the class data set 130) is checked via the "auxiliary results QC measures" block 142 in figure 30, as discussed above with reference to figures 23 and 24. In figure 30, the "input attributes" 134 and the "well supplement attributes" 136 and the "parameters controlling the classification process" 138, discussed above with reference to figure 23, are also provided as "inputs" to the "supervised classification" block 186. However, in addition to the "input attributes" 134 and the "well supplement attributes" 136 and the "parameters controlling the classification process" 138, there are three additional "inputs" being provided to the "supervised classification" 186 block of figure 30: (1) "training/validation - known class at position" 182, (2) "well training/validation - known class at borehole" 184, and (3) "classes in use - manually defined class types" 188.

In figure 30, recall from figure 10 that the "input attributes" 134 represent, for example, the following amplitude and frequency attributes: (a6, f2) 74, 76, (a3, f5) 78, 80, (a5, f3) 82, 84, and (a4, f6) 86, 88. In addition, the "well supplement attributes" 136 represent, for example, the following amplitude and frequency attribute: (a2, f4) 90, 92. Recall also, in connection with the "parameters controlling the classification process" 138, that the seisclass software 100b offers a selection of classification methods, and each such method has its own particular "parameters" which are closely related to the particular method. In addition, in figure 30, the "classes in Use - manually defined class types" 188 have already been discussed above with reference to figure 31 and include the following classes: the lithe-class family 174, the pore fill class family 176, the stratographic class family 178, and the unsupervised class family 180.

However, in figure 30, in addition to the input data entitled "input attributes" 134 and "well supplement attributes" 136 and "parameters'' 138 and "classes" 188, there are two other blocks of input data being provided as inputs to the supervised classification code 186 of figure 30: (1) "training/validation - known class at position" block 182, and (2) "well training/validation - known class at borehole" block 184.

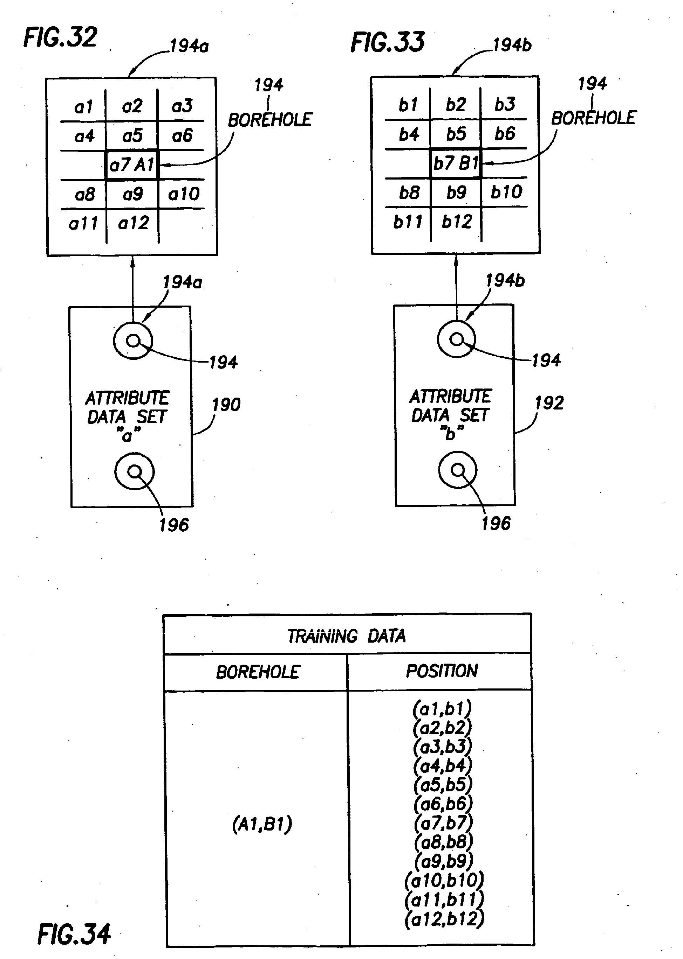

In figures 32 through 37, the input data in figure 30 entitled "training/validation - known class at position" 182 and "well training/validation - known class at borehole" 184 of figure 30 will be discussed below with reference to figures 32 through 37.

In the following paragraphs, reference is made to the "a" attribute and the "b" attribute, or the attribute data set "a" or the attribute data set "b". The "a" attribute can, for example, be one of the "amplitude" attributes of the attribute data set 54a of figure 13, and the "b" attribute can, for example, be one of the "frequency" attributes of the attribute data set 54b of figure 13.

In figures 32 and 33, an attribute data set "a" 190 and attribute data set "b" 192 have two boreholes 194 and 196 disposed through the attribute data sets. These boreholes 194, 196 have been logged using the logging techniques discussed above with reference to figure 2 and therefore the "classes" 188 for both said boreholes 194, 196 have been determined. Let us assume, for purposes of this discussion, that the "class" 188 for borehole 194 is the same as the "class" 188 for borehole 196. The reason for this assumption will become apparent from the following discussion. The attribute data set "a" 190 contains "a" attributes, such as frequency "f", and the attribute data set "b" 192 contains "b" attributes, such as amplitude "a".

In figure 32, the "a" attributes located inside borehole 194 and located around the borehole 194 are illustrated. By way of definition, the "A1" attribute located inside the borehole 194 is labelled "borehole attribute" and the "a" attributes located inside and around the borehole 194 (located within an outer boundary 194a) are labelled "position attributes". In figure 32, therefore, the "a" "position" attributes located within the boundary 194a are as follows: a1, a2, a3, a4, a5, a6, a7, a8, a9, a10, a11, a12. On the other hand, in figure 32, the "a" "borehole" attribute located inside the borehole 194 itself is "A1". The "a" "position" attributes "a1" through "a12" including "a7" were obtained from the seismic operation illustrated in figure 1, whereas the "a" "borehole" attribute "A1" was obtained from the logging operation illustrated in figure 2.

In figure 33, the "b" attributes located inside borehole 194 and located around the borehole 194 are illustrated. By way of definition, the "B 1" attribute located inside the borehole 194 is labelled a "borehole attribute" and the "b" attributes located inside and around the borehole 194 (located within an outer boundary 194b) are labelled "position attributes". In figure 33, therefore, the "b" "position" attributes located within the boundary 194b are as follows: b1 b2, b3, b4, b5, b6, b7, b8, b9, b10, b11, b12. On the other hand, in figure 33, the "b" "borehole" attribute located inside the borehole 194 itself is "B1". The "b" "position" attributes "b1" through "b12" including "b7" were obtained from the seismic operation illustrated in figure 1, whereas the "b" "borehole" attribute "B1" was obtained from the logging operation illustrated in figure 2.

Let us now declare the "a" and "b" attributes shown in figures 32 and 33 to be "training data", short for "training attribute data".

In figure 34, a table is illustrated which specifically identifies the "borehole training data" to be "(A1, B1)", where A1 and B1 are the "borehole" attributes, and specifically identifies the "position training data" to be (a1, b1), (a2, b2), (a3, b3), (a4, b4), (a5, b5), (a6, b6), (a7, b7), (a8, b8), (a9, b9), (a10, b10), (a11, b11), and (a12, b12), where (a1, b1) through (a12, b12) are "position" attributes.

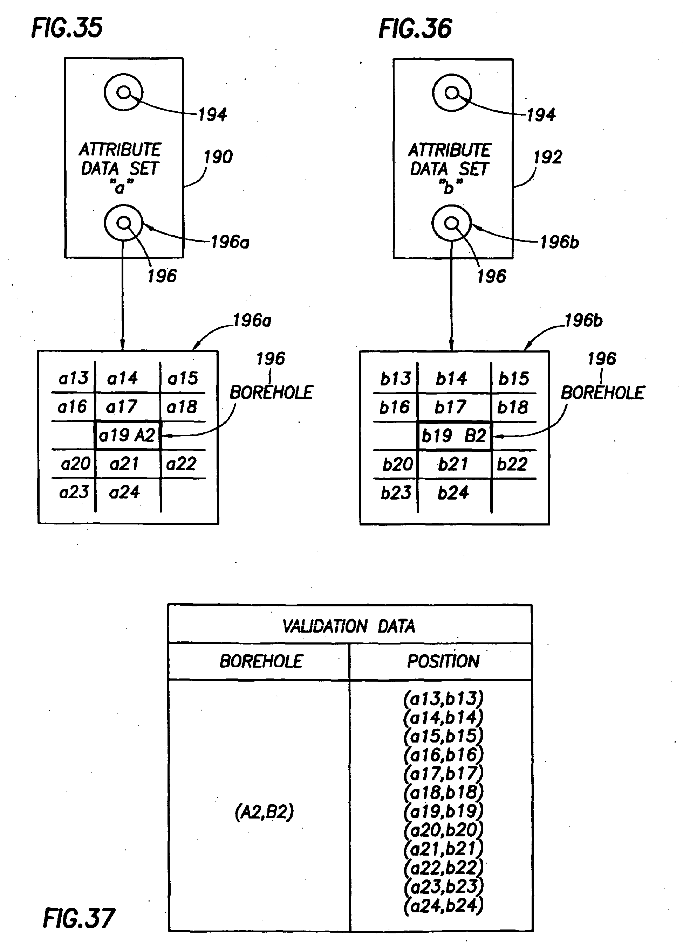

In figure 35, the "a" attributes located inside borehole 196 and located around the borehole 196 are illustrated. By way of definition, the "A2" attribute located inside the borehole 196 is labelled "borehole attribute" and the "a" attributes located inside and around the borehole 196 (i.e., located within an outer boundary 196a) are labelled "position attributes". In figure 35, therefore, the "a" "position" attributes located within the boundary 196a are as follows: a13, a14, a15, a16, a17, a18, a19, a20, a21, a22, a23, a24. On the other hand, in figure 35, the "a" "borehole" attribute located inside the borehole 196 itself is "A2". The "a" "position" attributes "a13" through "a24" including "a19" were obtained from the seismic operation illustrated in figure 1, whereas the "a" "borehole" attribute "A1" was obtained from the logging operation illustrated in figure 2.

In figure 36, the "b" attributes located inside borehole 196 and located around the borehole 196 are illustrated. By way of definition, the "B2" attribute located inside the borehole 196 is labelled a "borehole attribute" and the "b" attributes located inside and around the borehole 196 (i.e., located within an outer boundary 196b) are labelled "position attributes". In figure 36, therefore, the "b" "position" attributes located within the boundary 196b are as follows: b13, b14, b15, b 16, b17, b18, b19, b20, b21, b22, b23, b24. On the other hand, in figure 36, the "b" "borehole" attribute located inside the borehole 196 itself is "B2". The "b" "position" attributes "b13" through "b24" including "b19" were obtained from the seismic operation illustrated in figure 1, whereas the "b" "borehole" attribute "B2" was obtained from the logging operation illustrated infigure 2.

Let us now declare the "a" and "b" attributes shown in figures 35 and 36 to be "validation data", short for "validation attribute data".

In figure 37, a table is illustrated which specifically identifies the "borehole validation data" to be "(A2, B2)" and specifically identifies the "position validation data" to be (a13, b13), (a14, b14), (a15, b15), (a16, b16), (a17, b17), (a18, b18), (a19, b19), (a20, b20), (a21, b21), (a22, b22), (a23, b23), and (a24, b24).

In figures 34 and 37, referring alternately to the tables of figures 34 and 37, the "training/validation - known class at position" 182 of figure 30 would include the following attribute data: (a1, b1), (a2, b2),..., (a12, b12) for training, and (a13, b13), (a14, b14),...,(a24, b24) for validation. Similarly, the "well training/validation - known class at borehole" 184 of figure 30 would include the following attribute data: (A1, B1) for training and (A2, B2) for validation.

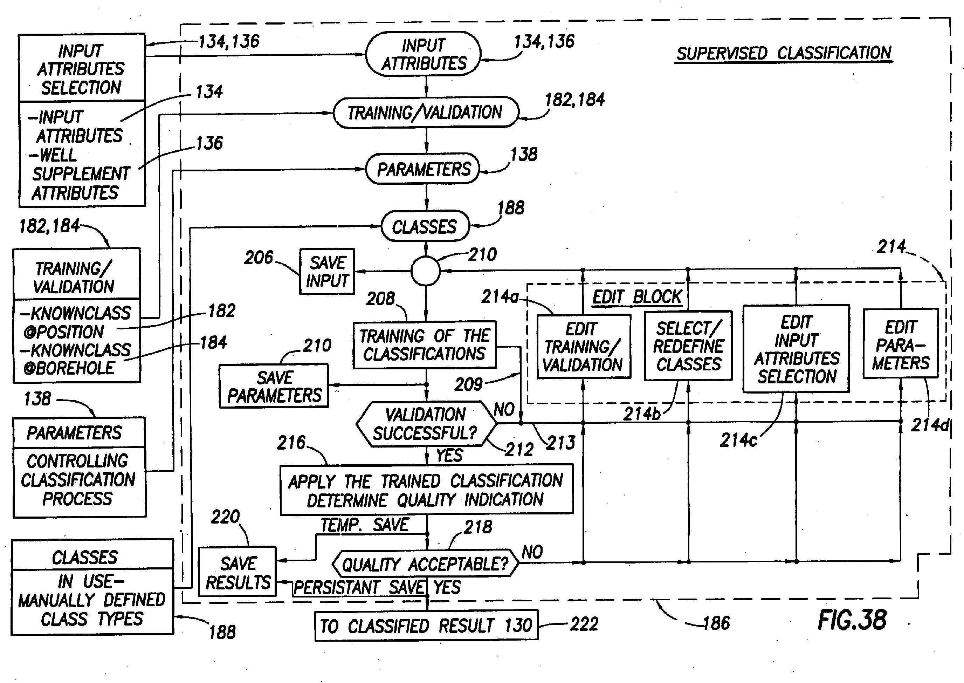

Referring to figure 38, the structure of the "supervised classification" block 186 of figure 30 is illustrated.

In figure 38, the input data blocks, which are input to the "supervised classification" block 186 include the following: (1) "input attribute selection" 134, 136 consisting of the "input attributes" 134 and the "well supplement attributes" 136, (2) the "training/validation" 182, 184 consisting of the "training/validation - known class at position" 182 and the "well training/validation - known class at borehole" 184, (3) the "parameters controlling the classification process" 138, and (4) the "classes in use - manually defined class types" 188. Each of these input data blocks have been discussed in detail in the foregoing paragraphs of this specification.

In figure 38, in connection with the "classes" block 188, it is important to understand that the operator will attempt to determine into which "class" (of figure 31) each of the "input attributes" 134, 136 belong, and into which "class" (of figure 31) each of the "training/validation" attributes 182, 184 belong. When those "classes" for each of the "input attributes" 134, 136 and each of the "training/validation" attributes 182, 184 are determined, those "classes" will collectively comprise and constitute the "classes" block 188 in figure 38.

In figure 38, the input attributes selection 134, 136; and the training/validation 182, 184; and the parameters 138; and the classes 188 are each: (1) saved and stored, via the "save input" block 206 in figure 38, and (2) input to the "training of the classifications" block 208 via the element 210 in figure 38.

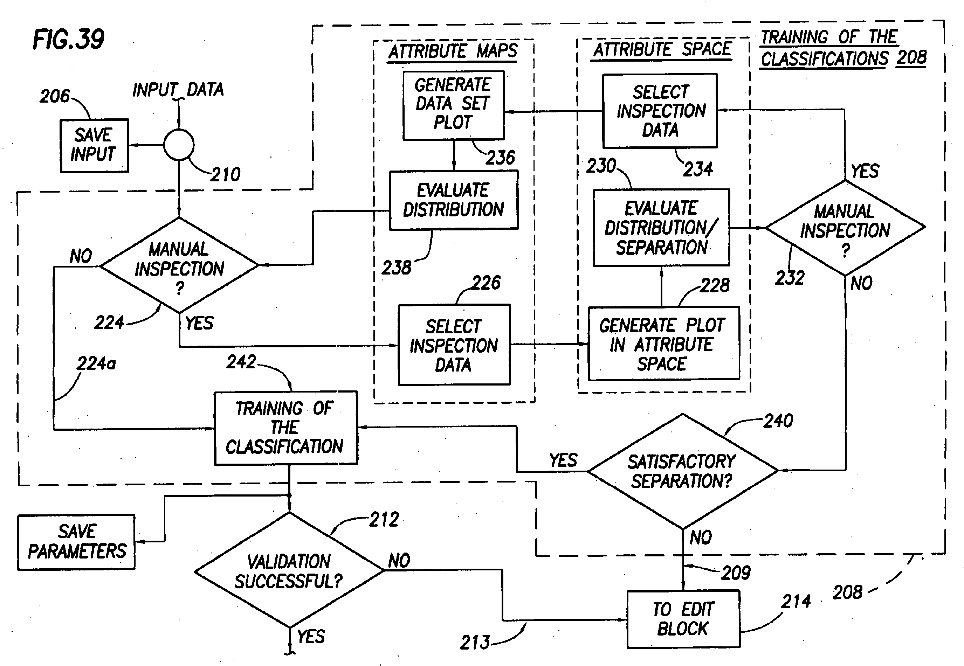

In figure 38, the "training of the classifications" block 208 is executed; the parameters 138 used during the execution of the "training of the classifications" 208 block of code are saved via the "save parameters" block 210; and the question "is validation successful?" is asked, via block 212. If the above referenced validation is not successful, a "no" output 213 is generated from the "validation successful" block 212 in figure 38, and the "edit block" 214 in figure 38 is executed. When the edit block 214 is executed, the operator can now change the "input data" and try again. In the edit block 214 of figure 38, the operator can either: (1) edit the "training/validation" 182, 184 via the "edit training/validation" block 214a, and/or (2) edit the "classes" 188 via the "select/redefine classes" block 214b, and/or (3) edit the "input attributes selection" 134, 136 via the "edit input attribute selections" block 214c, and/or (4) edit the "parameters" 138 via the "edit parameters" block 214d. In figure 38, if the operator will "edit training/validation" of block 214a, he will change and/or modify the "training/validation" attributes 182, 184 being input to the "training of the classifications" block 208. Alternatively, if the operator will "select/redefine classes" block 214b, he will change and/or modify the "classes" 188 which were originally selected by the operator. If the operator will "edit input attribute selection" block 214c, he will change and/or modify the "input attributes selection" 134, 136. If the operator will "edit parameters" block 214d, he will change and/or modify the "parameters" 138 in figure 38 which are input to the "training of the classifications" block 208. When the operator edits the training/validation or the classes or the input attributes or the parameters via the edit block 214 in figure 38, the "training of the classifications" block 208 is again re-executed as previously discussed, the parameters are re-saved via the "save parameters" block 210, and the following question is asked once again: "is validation successful" 212. If the validation is successful, the "apply the trained classification and determine quality indication", block 216 in figure 38, is executed. When the "apply the trained classification and determine quality indication" block 216 is executed, all of the input attribute data (including the training and validation attribute data) will be clustered in attribute space, in the same manner as illustrated in figure 18 of the drawings. The clustering in attribute space is studied to determine if "that clustering" is acceptable, via the "quality acceptable" block 218 in figure 38. The results achieved from "that clustering" are temporarily saved in the "save results" block 220. If the quality of "that clustering" is acceptable, the results from "that clustering" are permanently saved in the "save results" block 220, and the "classified result" 130 (i.e., the class data set 130 of figure 21) is generated, block 222 of figure 38 and block 130 of figure 30. If the quality of "that clustering" is not acceptable, a "no" output from the "quality acceptable" block 218 will be input to the "edit block" 214, wherein the training/validation attributes can be edited, 214a, and/or the classes can be redefined, 214b, and/or the input attribute selection can be edited, 214c, and/or the parameters can be edited, 214d, at which point, the "training of the classifications" block 208 and the "validations successful" blocks 212 can be re-executed in hopes of achieving an acceptable quality output from the "quality acceptable" block 218. The flowcharts of figures 38 and 39 will be better understood following a reading of the remaining parts of this specification.

Referring to figure 39, the structure of the "training of the classifications" block of code 208 of figure 38 is illustrated.

In figure 39, starting with the element 210, the "input data" (which includes the input attributes 134, 136, the training/validation attribute data 182, 184, the parameters 138, and the classes 188) are input to the element 210. An operator sitting at workstation 100 of figure 15 has an opportunity, at this point, to inspect the input attributes 134, 136. If a manual inspection of the input attributes 134, 136 is necessary, the operator at the workstation 100 will indicate that such an inspection is necessary thereby triggering the execution of the first "manual inspection" block 224 in figure 39 (note that there are two "manual inspection" blocks in figure 39, a first "manual inspection" block 224, and a second "manual inspection" block 232). Assume that the operator indicated that a manual inspection of the input attributes 134, 136 is necessary and that, as a result, the "yes" output from the first "manual inspection" block 224 in figure 39 is generated. In figure 39, if the "yes" output from the first "manual inspection" block 224 of figure 39 is generated, the following portions of the "training of the classifications" code 208 in figure 39 will be executed:
(Step 1) "select inspection data" 226,
(Step 2) "generate plot in attribute space" 228, and
(Step 3) "evaluate distribution/separation" 230.

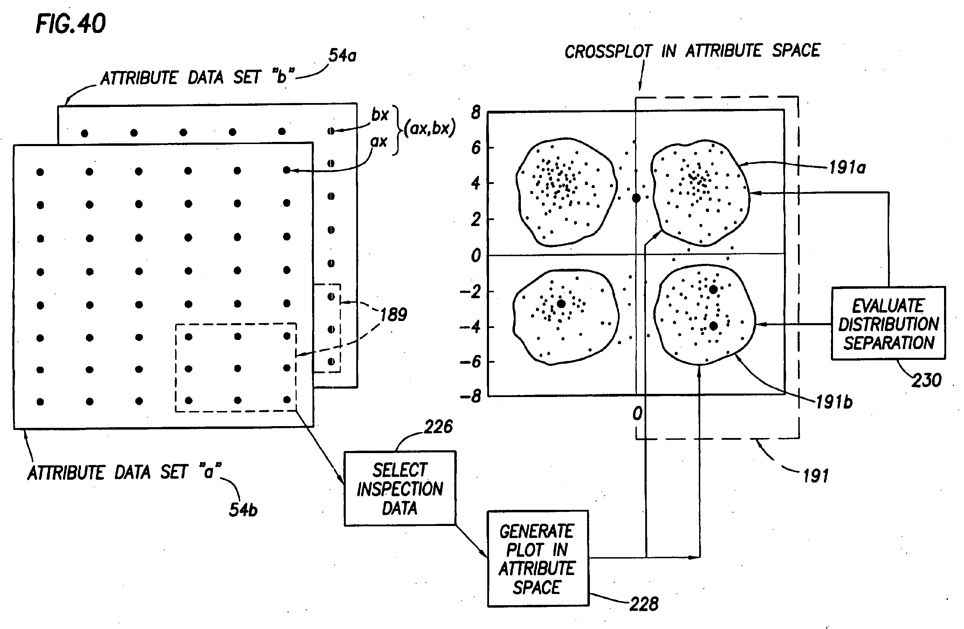

In figure 40, during step 1, inspection data 189, consisting of a subset of the input attributes (ax, bx) on the attribute data sets 54a and 54, are selected from among all the other input attributes (ax, bx) on the attribute data sets 54a, 54b in figure 40 (block 226 of figure 39). During step 2, using that inspection data 189, a "cross plot in attribute space" 191 is generated in the same manner as discussed above with reference to figure 18 (block 228 of figure 39). During step 3, the distribution/separation of the two clusters 191a, 191b on the cross plot in attribute space 191 is evaluated (block 230 of figure 39).

In figure 39, if the "yes" output from the second "manual inspection" block 232 in figure 39 is generated, the following additional portions of the "training of the classifications" code 208 in figure 39 will be executed:
(Step 4) "select inspection data" 234,
(Step 5) "generate data set plot" 236, and
(Step 6) "evaluate distribution" 238

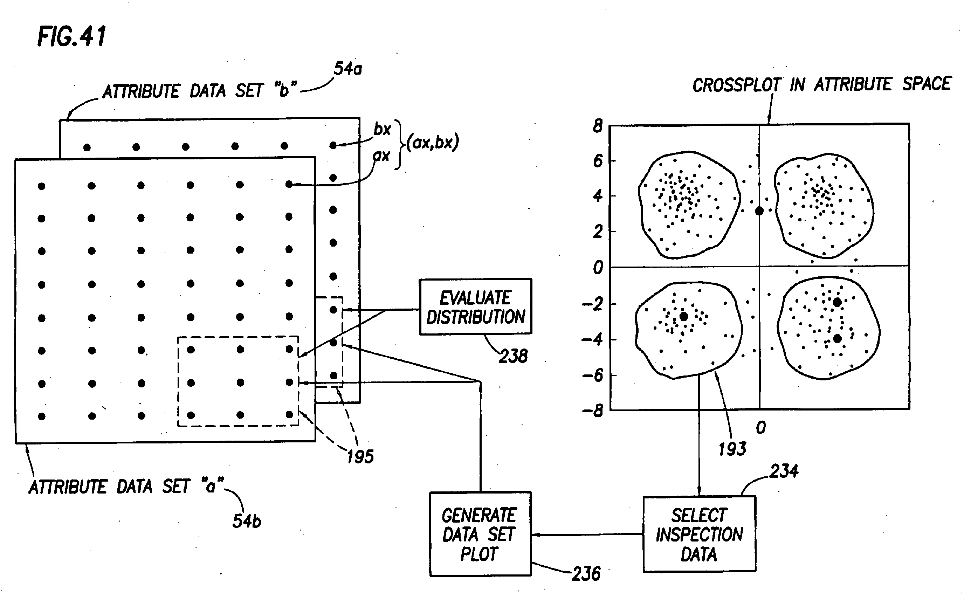

In figure 41, during step 4, inspection data 193 is selected, the inspection data 193 consisting of a subset of the points on the "cross plot in attribute space". In our example in figure 41, a cluster 193 on the "cross plot in attribute space" has been selected to represent the inspection data 193 (block 234 of figure 39). During step 5, the inspection data 193 on the "cross plot in attribute space" of figure 41 is then used to generate a data set plot 195 on the attribute data sets 54a, 54b (block 236 of figure 39). During step 6, the distribution of the set of points on the data set plot 195 on the attribute data sets 54a, 54b is then evaluated (block 238 of figure 39).

In figure 39, when step 6 ("evaluate distribution" block 238 of figure 39) is complete, the operator at workstation 100 of figures 14 and 15 will have another opportunity to indicate whether another "manual inspection" of the input attributes 134, 136 is necessary via the manual inspection block 224 in figure 39. Assume now that another such manual inspection of the input attributes 134, 136 is not necessary, and, as a result, a "no" output 224a is generated from the manual inspection block 224 in figure 39. In response to the "no" output 224a from the manual inspection block 224, the "training of the classification" code 242 in figure 39 is executed.

In figures 39 and 30, when the "training of the classification" code 242 of figure 39 is executed, the attribute data stored under the label "training/validation - known class at position" 182 of figure 30 is first used to generate a "cross plot in attribute space".

In figures 34 and 37, referring initially to figure 34, the "training-position attribute data" of figure 34 [(a1, b1), (a2, b2),..., and (a12, b12)] is first plotted in "attribute space" thereby generating a first set of points on the "cross plot in attribute space". We know, from our previous assumption, that the figure 31 class of the "training-position attribute data" of figure 34 is the same as the figure 31 class of the "validation-position attribute data" of figure 37. Therefore, the "validation-position attribute data" of figure 37 should cluster near or adjacent to the "training-position attribute data" of figure 34 on the "cross plot in attribute space". As a result, in figure 37, the "validation-position attribute data" of figure 37 [(a13, b13), (a14, b14),..., and (a24, b24)] is also plotted in "attribute space" alongside the "training-position attribute data" of figure 34 [(a1, b1), (a2, b2),..., and (a12, b12)] thereby generating/plotting a second set of points on the same "cross plot in attribute space".

In figures 39 and 30, when the "training of the classification" code 242 of figure 39 is further executed, the attribute data stored under the label "well training/validation - known class at borehole" 184 of figure 30 is then used to plot another set of points on the same "cross plot in attribute space".

In figures 34 and 37, referring initially to figure 34, the "training-borehole attribute data" of figure 34 "(A1, B1)" is first plotted in the same "attribute space" thereby generating a third point on the same "cross plot in attribute space". We know, from our previous assumption, that the figure 31 class of the "training-borehole attribute data" of figure 34 is the same as the figure 31 class of the "validation-borehole attribute data" of figure 37. Therefore, the "validation-borehole attribute data" of figure 37 should cluster near or adjacent to the "training-borehole attribute data" of figure 34 on the same "cross plot in attribute space". As a result, in figure 37, the "validation-borehole attribute data" of figure 37 "(A2, B2)" is also plotted in "attribute space" alongside the "training-borehole attribute data" of figure 34 "(A1, B1)" thereby generating/plotting a second point on the same "cross plot in attribute space".

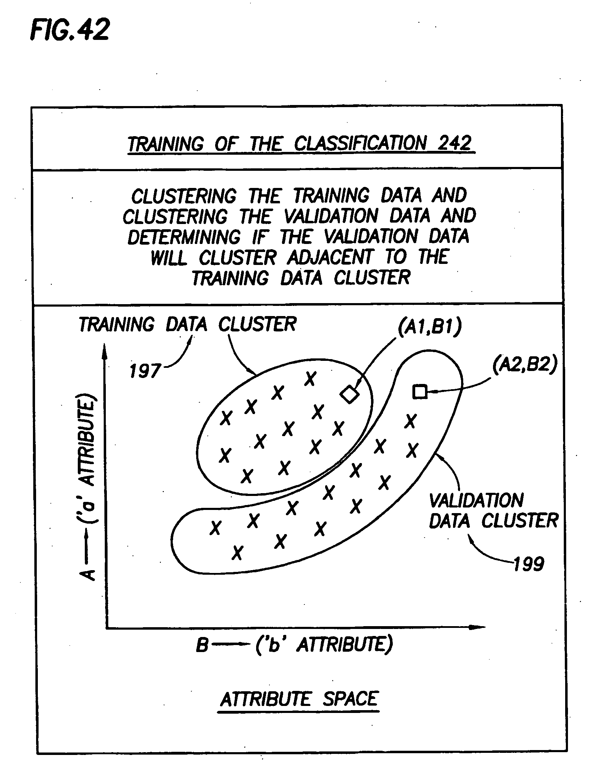

In figure 42, regarding the execution of the "training of the classification" code 242 of figure 39, when the "training-position attribute data" of figure 34 and the "validation-position attribute data" of figure 37 and the "training-borehole attribute data" of figure 34 and the "validation-borehole attribute data" of figure 37 are plotted in the same "cross plot in attribute space", as discussed above, that same "cross plot in attribute space" is illustrated in figure 42. Note, in figure 42, that the "validation data cluster" 199 does, in fact, cluster adjacent to the "training data cluster" 197. The "validation data cluster" 199 should cluster adjacent to the "training data cluster" 197 because the figure 31 class of the training data of figure 34 was assumed to be the same as the figure 31 class of the validation data of figure 37.

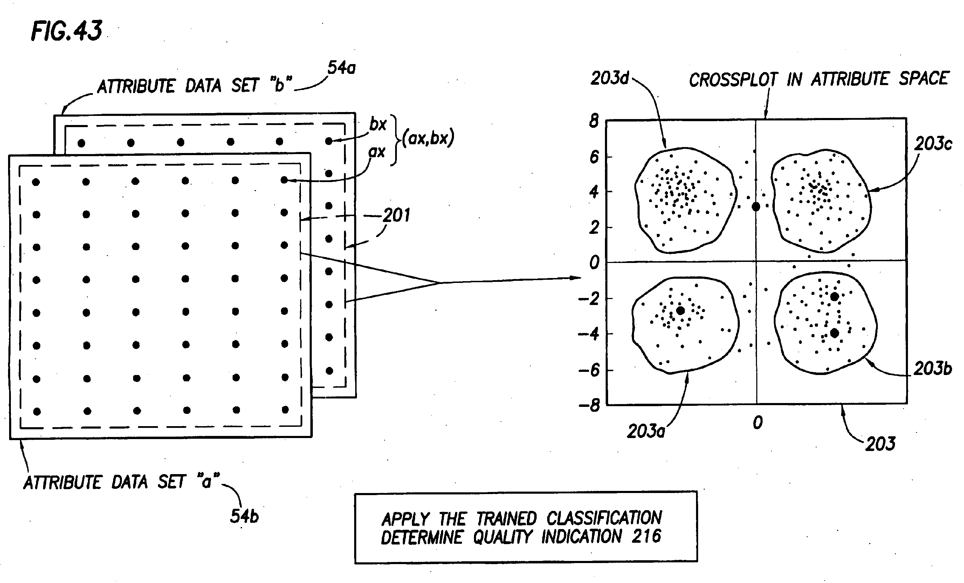

In figures 38 and 42, regarding the "validation successful" block 212 of figure 38, since the "validation data cluster" 199 of figure 42 did, in fact, cluster adjacent to the "training data cluster" 197 in figure 42, the validation was successful, and, as a result, a "yes" output is generated from the "validation successful" block 212 of figure 38. In figure 38, the next block of code to be executed is the "apply the trained classification determine quality indication" block 216 in figure 38. In order to under this block of code (216 in figure 38), refer now to figure 43.

In figure 43, during the execution of the "apply the trained classification..." block 216 of figure 38, all of the attribute data 201 on the attribute data sets 54a, 54b in figure 43 will be plotted on a "cross plot in attribute space", using the techniques discussed above with reference to figures 17 through 21. When that "cross plot in attribute space" is generated, the "cross plot in attribute space" 203 illustrated in figure 43 will be generated. The four clusters 203a through 203d in the cross plot 203 of figure 43 will each be assigned a different label, such as color. The attribute data inside each cluster will each be assigned a label, such as color.

In figure 38, assuming that the operator at workstation 100 of figure 15 believes that the quality of the "cross plot in attribute space" 203 of figure 43 is acceptable, a "yes" output is generated from the "quality acceptable" block 218 of figure 38. The next block of code to be executed is the "classified result" block of code 130 of figure 30 (or block 222 of figure 38).

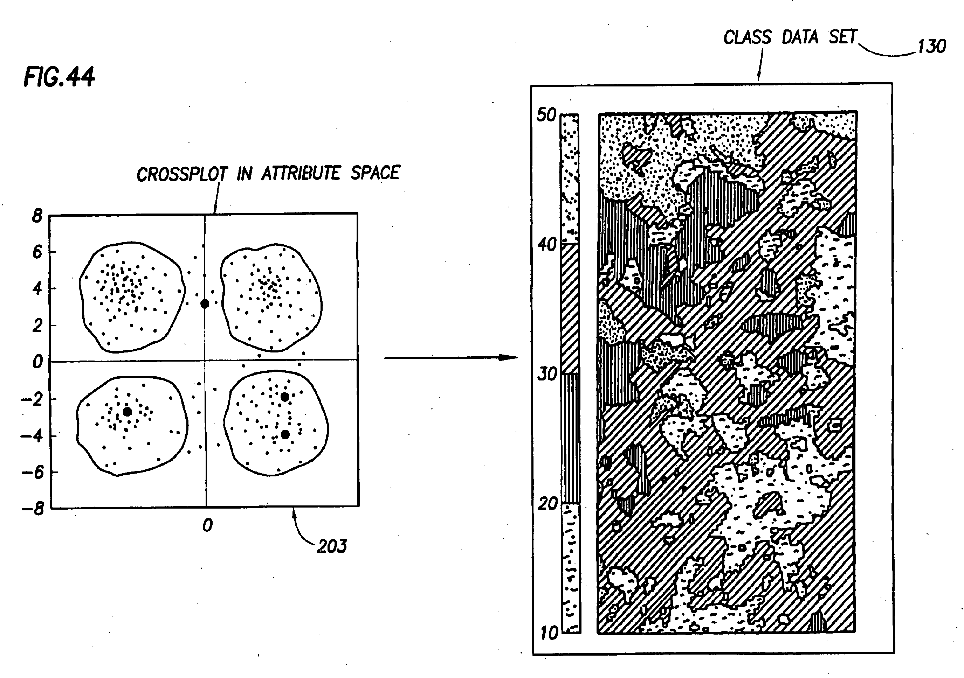

In figures 30 and 44, when the "classified result" block 130 of figure 30 is executed, the "cross plot in attribute space" 203 of figure 44 (and figure 43) is used to generate a "class data set" 130 in figure 44, using the same techniques discussed above with reference to figures 18 through 21.

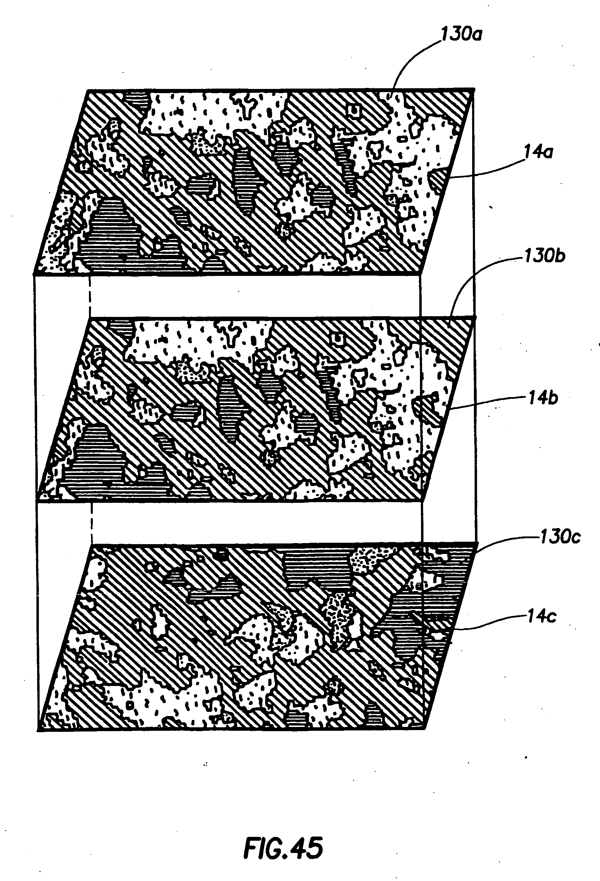

In figure 45, now that we know how to generate the "class data set" 130 in figure 44, by using those same techniques, a 3D cube can be generated, such as the 3D cube illustrated in figure 45. In figure 45, three different sub-surfaces have three different class data sets associated therewith. That is, a first class data set 130a reflects a first set of characteristics of a first sub-surface 14a, a second class data set 130b reflects a second set of characteristics of a second sub-surface 14b, and a third class data set 130c reflects a third set of characteristics of a third sub-surface 14c in an earth formation. The class data set 130 of figure 44 is designed for 2D horizon/map data; however, the Seisclass software 100b of the present invention is also suited for classification of 3D cubes, such as the 3D cube illustrated in figure 45, 4D time-lapse cubes (where time is the fourth dimension), or 5D pre-stack time-lapse cubes.

A functional operation of the "Seisclass Software" 100b of the present invention, when executed by the workstation processor 100a of figure 14, is set forth in the following paragraphs with reference to figures 1 through 45 of the drawings.

A seismic operation is performed on an earth formation in the manner illustrated in figure 1 thereby producing a seismic data output record 24. In addition, a well logging operation is performed in the same earth formation in the manner illustrated in figure 2 thereby producing a well log output record 32. The seismic data output record 24 and the well log output record 32 combine to represent the data received 42 of figure 5; and, in figure 6, the data received 42 is used, by the computer 44 of figure 6, to generate the attribute data sets 46. For example, following the seismic operation of figures 7, 8, and 9, the computer 44 of figure 6 will generate the attribute data set 46 of figure 13. The attribute data sets 46 of figure 13 includes a first "attribute data set" 54a and a second "attribute data set" 54b. The first attribute data set 54a in figure 13 will include a multitude of "a" attributes, such as "amplitude (a)" values. The second attribute data set 54b in figure 13 will include a multitude of "b" attributes, such as "frequency (f)" values. Actually, as shown in figure 10, the "attribute data sets" 46 of figure 13 actually include the "input attributes" 134 and the "well supplement attributes" 136.

In figures 14 and 15, the attribute data sets 46 of figures 10 and 13, which include the input attributes 134 and the well supplement attributes 136, are provided as "input data" to the workstation 100 of figures 14 and 15. However, the "seisclass software 100b" in figure 15, initially stored on a storage medium 102, such as a CD Rom 102, is loaded into the workstation 100 of figure 15 and is stored into the workstation memory 100b. When the seisclass software 100b is stored in the workstation memory of figure 14, and when the workstation processor 100a of figure 14 executes the seisclass software 100b, the workstation processor 100a will perform the following overall function, as noted in figure 16: (1) produce a cross plot in attribute space from the attribute data sets, block 112a, (2) subdivide the cross plot into a plurality of zones comprised of points which correspond to other points on the attribute data sets where each zone on the cross plot has a different class association than any other zone which is indicated by a different label, such as a different color, block 112b, and (3) produce a class data set 130 comprised of a plurality of points on the attribute data sets where each point has a label, such as color, depending on its cluster/class association on the cross plot in attribute space, block 112c. The "cross plot in attribute space" is illustrated, in a simple example, by the cross plot 114 of figure 18, and the class data set is illustrated, in the simple example, by the class data sets 130 of figures 20 and 21.

When the seisclass software 100b of figure 14 is executed, the operator at the workstation 100 must first examine the "attribute data", included within the attribute data sets 46 (including the input attributes 134 and the well supplement attributes 136), to determine whether that "attribute data" in the attribute data sets 46 can be conveniently classified into one or more of the "classes" which are illustrated in figure 31.

If that "attribute data" cannot be classified into one or more of the classes of figure 31, the "unsupervised" seisclass software 100b1 of figure 22 is executed. The "unsupervised" seisclass software 100b 1 is discussed below with reference to figures 23 through 29 of the drawings.

However, if that "attribute data" can, in fact, be classified into one or more of the classes of figure 31, the "supervised" seisclass software 100b2 of figure 22 is executed. The "supervised" seisclass software 100b2 is discussed below with reference to figures 30 through 44 of the drawings.

In figure 23, if the "attribute data" in the attribute data sets 46 cannot be classified into one or more of the classes of figure 31 and the "unsupervised" seisclass software 100b1 of figure 22 is executed by the workstation processor 100a of figure 14, the unsupervised classification code 132 of figure 23 will begin execution in response to the input attributes 134 and the well supplement attributes 136 of the attribute data sets 46 and the parameters controlling the classification process 138. When the unsupervised classification code 132 has completed its execution, the classified result 130 (i.e., a class data set similar to the class data set 130 of figure 21) is generated. The auxiliary results/QC measures code 142 of figure 23 will assess the quality of the class data set/classified result 130.

In figure 25, recalling that the input attributes 134 and the well supplement attributes 136 comprise the input attributes 134, 136 of figure 25, when the unsupervised classification code 132 of figures 23 and 25 is executed by the workstation processor 100a of figure 14, the "input data", consisting of the input attributes 134, 136 and the parameters 138, are initially saved via the save input block 144 in figure 25 and the "input data" are received by the "apply classification and determine quality indicators" code 146 of figure 25. This "apply classification..." code 146 will then "apply the classification" and then "determine quality". If the "quality" is not acceptable, via block 152 of figure 25, the input attributes 134, 136 can be edited, and the parameters 138 can be edited, via the edit block 154 of figure 25, and then the "apply classification and determine quality indicators" code 146 will be re-executed. If the "quality" is acceptable, via block 152 of figure 25, the classified result/class data set 130 is then generated. A sample class data set 130 is shown in figures 20 and 21.

As noted above, the "apply classification and determine quality indicators" code 146 of figure 25 will "apply the classification" and then "determine quality". Figure 26 illustrates how the "apply classification and determine quality indicators" code 146 "applies the classification" and "determines quality".

In figures 26, the input attributes 134, 136 and the parameters 138 are received by the "apply classification..." code 146; and, responsive thereto, the "apply classification..." code 146 will: (1) perform its first function to "determine quality" by executing code blocks 156 through 170 in figure 26, and then, when the quality is acceptable, the "apply classification..." code 146 (2) will perform its second function to "apply the classification" by executing code block 172 in figure 26.

In figures 26 and 27, when the "apply classificaton..." code 146 of figure 26 "determines quality" by executing the code blocks 156 through 170 in figure 26, the operator selects the inspection data 173 of figure 27 which represents a subset of the attribute data sets 54a, 54b of figure 13 (block 158 of figure 26), generates a "cross plot in the attribute space" consisting of a pair of clusters of points 181a and 181b in the attribute space of figure 27 (block 160 of figure 26), and evaluates the distribution and separation of the clusters 181a and 181b on the "cross plot in attribute space" in figure 27 (block 162 of figure 26).

In figures 26 and 28, if a further manual inspection of the input attributes 134, 136 is necessary (block 164 of figure 26), the operator will select the cluster 185 in the attribute space of figure 28 as "inspection data" (block 166 of figure 26), generate the attribute data set plot 187 of figure 28 (block 168 of figure 26), and evaluate the distribution inherent in the attribute data set plot 187 of figure 28 (block 170 of figure 26). If the distribution or separation of the attribute data on the attribute data set plot 187 of figure 28 is satisfactory, no further manual inspection of the attribute data 134, 136 is necessary (see line 156a exiting from the "no" output from the "manual inspection" block 156 of figure 26). At this point, the "apply classification algorithm" 172 of figure 26 will begin execution.

In figure 29, when the "apply classification algorithm" 172 of figure 26 begins execution, all of the input attributes 134 and the well supplement attributes 136 of the attribute data sets 54a, 54b of the attribute data sets 46 of figure 29 (including the inspection data 173 of figure 27) are used to generate a "cross plot in attribute space" 179 and a "final crossplot in attribute space" 179 is produced which is similar to the cross plot 114 shown in figure 18. The "cross plot in attribute space" 179 is generated from the attribute data sets 54a, 54b of figure 29 using the same techniques discussed above with reference to figures 12, 13, 17, and 18. In figure 25, the quality of that "final cross plot" 179 is assessed, via the "quality acceptable" block 152 of figure 25. If the quality of that "final cross plot" is acceptable, the "final cross plot" 179 data/results are saved via the "save results" block 150 in figure 25, and the "final cross plot" 179 is used to plot the final classified result 130/final class data set 130 in figure 23 and 25 similar to the class data set 130 shown in figures 20 and 21, using the same techniques discussed above with reference to figures 18, 20, and 21. The "auxiliary results QC measures" code 142 of figure 23 will assess the quality of that final class data set 130.

In figure 30, however, if the "attribute data" in the attribute data sets 46 can, in fact, be classified into one or more of the classes of figure 31, the "supervised" seisclass software 100b2 of figure 22 is executed by the workstation processor 100a of figure 14. When the "supervised" seisclass software 100b2 of figure 30 is executed by the workstation processor 100b2, the supervised classification code 186 of figure 30 will receive certain "input data". When the supervised classification code 186 of the supervised seisclass software 100b2 is executed, the supervised classification code 186 will respond to that "input data" by generating the classified result 130/class data set 130. A sample class data set 130 is illustrated in figure 21. The "auxiliary results QC measures" code 142 of figure 30 will assess the quality of the classified result 130/class data set 130 generated by the supervised classification code 186.

The "input data", received by the supervised classification code 186 of figure 30, includes the "attribute data sets" 46, the "parameters" controlling the classification process 138, and the "classes in use" 188. The "attribute data sets" 46 of figure 30 include four (4) parts: (1) the input attributes 134 of figure 10, (2) the well supplement attributes 136 of figure 10, (3) the training/validation known class at position attributes 182, and (4) the well training/validation known class at borehole attributes 184. The input attributes 134 and the well supplement attributes 136 were discussed above with reference to figure 10. The "training/validation known class at position" attributes 182 are represented by the attributes shown under the "position" column in the tables of figures 34 and 37. The "well training/validation known class at borehole" attributes 184 of figure 30 are represented by the attributes shown under the "borehole" column in the tables of figures 34 and 37. The "classes in use" 188 in figure 30 are defined by the operator; that is, in order to define the "classes in use" 188, the operator must classify each subset of the attribute data in the attribute data sets 46 of figure 30 to determine into which class, of the classes of figure 31, each subset of the attribute data belong. When this task is complete, the "classes in use - manually defined class types" block 188 of figure 30 are defined for the attribute data present in the attribute data sets 46. For example, in figure 30, since the "attribute data sets" 46 include the "input attributes" 134 and the "well supplement" attributes 136 and the "training/validation known class at position" attributes 182 and the "well training/validation known class at borehole" attributes 184, the operator must analyze all the attribute data in the attribute data sets (134, 136, 182, 184) of figure 30 and, for each "subset of attribute data" of the attribute data sets 46, the operator must determine into which class (of the classes of figure 31) each such "subset" belongs. For example, one "subset" may belong to the "sand" class 174a of figure 31 and another "subset" may belong to the "brine" class 176b2 of figure 31. When this task is complete, the "classes in use - manually defined class types" 188 block of "input data" of figure 30 is fully defined.

The supervised classification code 186 of figure 30 is illustrated in greater detail in figure 38. In figure 38, when the supervised classification code 186 is executed, the training of the classifications code 208 will receive the above referenced "input data". In figure 39, the training of the classifications code 208 will: select the inspection data 189 of figure 40 (block 226 of figure 39), generate a cross plot 191 in the attribute space of figure 40 (block 228 of figure 39), and evaluate the distribution of the clusters 191a and 191b in the attribute space 191 of figure 40 (block 230 of figure 39). Then, if a further manual inspection of the attribute data in the "input attributes selection" 134, 136 is necessary (block 232 of figure 39), the training of the classifications code 208 will: select the inspection data 193 in the "cross plot in attribute space" of figure 41 (block 234 of figures 39 and 41), generate an attribute data set plot 195 of figure 41 (block 236 of figures 39 and 41), and evaluate the distribution in the attribute data set plot 195 (block 238 of figures 39 and 41). If the distribution of the attribute data on the attribute data set plot 195 of figure 41 appears to be satisfactory (block 238 of figure 39), the training of the classifications code 208 of figure 39 may then execute the "training of the classifications" code 242 in figure 39. The execution of the "training of the classifications" code 242 of figure 39 will involve: (1) the clustering of the "training-position" data of figure 34 in attribute space, clustering the "validation-position" data of figure 37 in the same attribute space, and determining if the "validation-position" data of figure 37 also clusters adjacent to the "training-position data of figure 34 in the same attribute space, and (2) the clustering of the "training-borehole" data of figure 34 in attribute space, clustering the "validation-borehole" data of figure 37 in the same attribute space, and determining if the "validation-borehole" data of figure 37 also clusters adjacent to the "training-borehole" data of figure 34 in the same attribute space. If all goes well, in figure 42, the validation data cluster 199 in figure 42 will be positioned adjacent to the training data cluster 197 in the attribute space of figure 42. The validation data cluster 199 of figure 42 should cluster adjacent to the training data cluster 197 of figure 42 because the class of the attribute data in the "validation data" of figure 37 was assumed to be the same as the class of the attribute data in the "training data" of figure 34.

When the execution of the "training of the classifications" code 242 of figure 39 is complete, the "validation successful" block 212 of figure 38 and 39 is executed. The "validation successful" block 212 of figure 38 will have a "yes" output (indicating a successful validation) when the "validation data" cluster 199 of figure 42 clusters adjacent to the "training data" cluster 197 of figure 42. However, in figure 38, if the validation is not successful (a "no" output from the validation successful block 212 of figure 38 is generated), the operator can now edit the "input data" and start again - that is, the operator can edit: the "input attribute selection" 134, 136 and/or the "training/validation" 182, 184 and/or the "parameters" 138 and/or the "classes" 188 in figure 38. This can be done by utilizing the edit block 214 of figure 38. In the edit block 214 of figure 38, the operator can now edit the "training/validation" input data 214a, or the operator can "select/redefine classes" 214b, or the operator can "edit input attributes selection" 214c, and/or the operator can "edit parameters" 214d. After the above referenced "input data" is edited via the edit block 214 of figure 38, the "training of the classifications" block 208 of figure 39 is reexecuted in the manner discussed above. However, on the next pass, if block 212 of figure 38 is satisfied, the validation will be successful, and the "apply the trained classification determine quality indicators" code 216 of figure 38 can be executed.

In figure 43, when the "apply the trained classification..." code 216 of figure 38 is executed, all of the attribute data 201 of figure 43 on the attribute data sets 54a, 54b of the "input attribute selection" of figure 38 will be used to generate a "cross plot in attribute space", such as the "cross plot in attribute space" 203 illustrated in figure 43.

In figure 44, when the "cross plot in attribute space" 203 of figure 43 is generated, that cross plot 203 is used to generate a classified result 130, such as the class data set 130 in figure 44. Recall that the individual attributes (ax, bx) on the attribute data sets 54a, 54b of figure 43 are plotted in attribute space, yielding the cross plot 203 of figure 43. Different labels, such as colors, are assigned to each cluster 203a, 203b, 203c, and 203d in the attribute space 203 of figure 43. Now, each of the individual attributes (ax, bx) have a label, such as color, unique to each attribute. In figure 43, the locations on the attribute data sets 54a, 54b of figure 43 are now provided with labels, such as the aforementioned colors, that correspond to the attribute data located thereon. The result is a class data set, such as the class data set 130 of figure 44. A sample classified result 130/class data set 130 is illustrated in figures 20 and 21.

The class data set 130 comprises a plurality of areas, where each area has a label, such as color. In the "supervised" classification case, the label (i.e. color) of an area on the class data set indicates one of the classes of figure 31. For example, using a color label as an example, a color red in a first area on the class data set 130 may indicate that the first area has the "sand" class 174a of figure 31. In the "unsupervised" classification case, the color red on a second area of the class data set indicates a particular characteristic of that area which is different from the characteristic of a third area on the class data set.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. In a seismic classification system, a method of generating a classified result which can be recorded or displayed on a workstation display, comprising the steps of : (a) receiving at least a first attribute data set where the attribute data set includes a plurality of points and a plurality of attribute data corresponding, respectively, to the plurality of points (108, 110), (b) generating a first cross plot in attribute space in response to the attribute data on the first attribute data set (112) **characterised in that** the generating step (b) includes the steps of (b1) selecting a subset of the attribute data on the first attribute data set to represent a first set of inspection data, (b2) generating a second cross plot in attribute space from the first set of inspection data, the second cross plot having a distribution/separation of clusters, and (b3) evaluating the distribution/separation of the clusters on the second cross plot; and (c) generating the classified result in response to the plurality of points on the first attribute data set and the first cross plot in attribute space.

2. The method of Claim 1 wherein the receiving step (a) for receiving (20) at least a first attribute data set comprises the steps of : (a1) receiving a plurality of measurable quantities associated, respectively, with a plurality of points (A-H) in a subsurface, the first attribute data set corresponding to the subsurface, and (a2) generating the plurality of attribute data "(a, b)" associated, respectively, with the plurality of points on the first attribute data set.

3. The method of Claim 1 or 2 wherein the generating step (b) for generating the first cross plot in attribute space in response to the attribute data on the first attribute data set further comprises the steps of : (b4) selecting (158) a subset of points among a set of clusters on the first cross plot in attribute space to represent a second set of inspection data, (b5) generating a second attribute data set from the second set of inspection data, the second attribute data set having a distribution of points, and (b6) evaluating (162) the distribution of the points on the second attribute data set.

4. The method of Claim 3 wherein the generating step (b) for generating the first cross plot in attribute space in response to the attribute data on the first attribute data set further comprises the steps of : (b7) selecting some of the attribute data on the first attribute data set to represent training data, (b8) selecting other attribute data on the first attribute data set to represent validation data, a class of the training data being approximately the same as a class of the validation data, (b9) generating a third cross plot in a particular attribute space in response to the training data, and (b10) generating a fourth cross plot in said particular attribute space in response to the validation data, whereby a cluster in said particular attribute space resultant from said validation data should be located adjacent to another cluster in the same said particular attribute space resultant from said training data when said class of said training data is approximately the same as said class of said validation data.

5. The method of Claim 4 wherein the generating step (b) for generating the first cross plot in attribute space in response to the attribute data on the first attribute data set further comprises the steps of : (b11) generating said cross plot in attribute space having at least two clusters points in response to the attribute data on the first attribute data set when: the distribution/separation of the clusters on the second cross plot evaluated during the step (b3) is acceptable, the distribution of the points on the second attribute data set evaluated during the step (b6) is acceptable, and said cluster in said particular attribute space resultant from said validation data is located adjacent to said another cluster in the same said particular attribute space resultant from said training data when said fourth cross plot in said particular attribute space is generated during the step (b10).

6. The method of Claim 1 wherein the generating step (c) for generating the classified result in response to the plurality of points on the first attribute date set and the cross plot in attribute space, having said at least two clusters of points, comprises the steps of : (c1) assigning a first label to a first one of said at least two clusters of points of said cross plot in attribute space, each point in said first one of said at least two clusters of points on said cross plot in attribute space having assigned thereto said first label and corresponding to a first set of locations on said first attribute data set, (c2) assigning a second label to a second one of said at least two clusters of points on said cross plot in attribute space, each point in said second one of said at least two clusters of points on said cross plot in attribute space having assigned thereto said second label and corresponding to a second set of locations on said first attribute data set, (c3) labeling each of said first set of locations on said first attribute data set with said first label, and (c4) labeling each of said second set of locations on said first attribute data set with said second label.

7. A seismic classification apparatus adapted for producing a classified result from a plurality of attribute data sets, comprising: first generation means (18, 22) for generating a plurality of values associated, respectively, with a plurality of points distributed over the surface on a subsurface of an earth formation; second generation means (112c) responsive to the plurality of values for generating a plurality of labels which are associated, respectively, with the plurality of values **characterised in that** the second generation means (224) comprising selecting means for selecting an inspection subset of said plurality of values, first clustering means (230) responsive to the inspection subset for clustering said inspection subset of said plurality of values in attribute space, and second clustering means (238) for clustering all of said plurality of values in the attribute space when the inspection subset of the plurality of values are clustered acceptably in the attribute space by the first clustering means; and means for associating the plurality of labels (112c) with the respective plurality of points on the subsurface of the earth formation thereby generating a class data set plot comprising the plurality of points which are labeled, respectively, with the plurality of labels, the class data set plot representing the classified result.

8. The seismic classification apparatus of Claim 7 wherein the selecting means (224) selects the inspection subset of the plurality of values and a training subset of the plurality of values and a validation subset of the plurality of values, and wherein the first clustering means (230) comprises: inspection subset clustering means responsive to the inspection subset for clustering the inspection subset of the plurality of values in attribute space; training subset clustering means (82) responsive to the training subset for clustering the training subset of said plurality of values in attribute space; and validation subset clustering means (84) responsive to the validation subset for clustering the validation subset of the plurality of values in attribute space, the second clustering means clustering all of said plurality of values in the attribute space and producing a plurality of clusters of values in the attribute space when the inspection subset of the plurality of values are clustered acceptably in the attribute space by the inspection subset clustering means and when the training subset of the plurality of values are clustered acceptably in the attribute space by the training subset clustering means and when the validation subset of the plurality of values are clustered acceptably in the attribute space by the validation subset clustering means.

9. The seismic classification apparatus of Claim 8 wherein said second clustering means (230) assigns a plurality of labels, respectively, to said plurality of clusters produced in the attribute space, a separate and distinct label being assigned to each of the clusters in said attribute space.

10. The seismic classification apparatus of Claim 9 wherein said means for associating the plurality of labels, respectively, with the plurality of points on the subsurface of the earth formation further comprises: data set generation means responsive to the assignment of the plurality of labels, respectively, to the plurality of clusters in the attribute space by the second clustering means for generating a class data set plot representing the classified result, the class data set plot representing an attribute data set plot of the plurality of points distributed over the surface on the subsurface of the earth formation having the plurality of labels associated, respectively, with that plurality of points on the surface of that subsurface.

11. A program storage device (102) readable by a machine (100A) tangibly embodying a program (100B) of instructions executable by the machine, to perform method steps for generating a classified result that can be recorded or displayed on a workstation display, said method steps comprising: (a) receiving at least a first attribute data set where the attribute data set includes a plurality of points and a plurality of attribute data corresponding, respectively, to the plurality of points, (b) generating a first cross plot in attribute space in response to the attribute data on the first attribute data set **characterised in that** the generating step (b) includes the steps of (b1) selecting a subset of the attribute data on the first attribute data set to represent a first set of inspection data, (b2) generating a second cross plot in attribute space from the first set of inspection data, the second cross plot having a distribution/separation of clusters, and (b3) evaluating the distribution/separation of the clusters on the second cross plot, and (c) generating the classified result in response to the plurality of points on the first attribute data set and the cross plot in attribute space.

12. The program storage device (102) of Claim 11 wherein said receiving step (a) of said method steps for receiving at least a first attribute data set further comprises the steps of : (a1) receiving a plurality of measurable quantities associated, respectively, with a plurality of points in a subsurface, the first attribute data set corresponding to the subsurface, and (a2) generating the plurality of attribute data "(a, b)" associated, respectively, with the plurality of points on the first attribute data set.

13. The program storage device (102) of Claim 11 or 12 wherein the generating step (b) of said method steps for generating the first cross plot in attribute space in response to the attribute data on the first attribute data set further comprises the steps of : (b4) selecting a subset of points among a set of clusters on the first cross plot in attribute space to represent a second set of inspection data, (b5) generating a second attribute data set from the second set of inspection data, the second attribute data set having a distribution of points, and (b6) evaluating the distribution of the points on the second attribute data set.

14. The program storage device (102) of Claim 13 wherein the generating step (b) of said method steps for generating the first cross plot in attribute space in response to the attribute data on the first attribute data set further comprises the steps of : (b7) selecting some of the attribute data on the first attribute data set to represent training data, (b8) selecting other attribute data on the first attribute data set to represent validation data, a class of the training data being approximately the same as a class of the validation data, (b9) generating a third cross plot in a particular attribute space in response to the training data, and (b10) generating a fourth cross plot in said particular attribute space in response to the validation data, whereby a cluster in said particular attribute space resultant from said validation data should be located adjacent to another cluster in the same said particular attribute space resultant from said training data when said class of said training data is approximately the same as said class of said validation data.

15. The program storage device (102) of Claim 14 wherein the generating step (b) of said method steps for generating the first cross plot in attribute space in response to the attribute data on the first attribute data set comprises the step of : (b11) generating said cross plot in attribute space having at least two clusters points in response to the attribute data on the first attribute data set when: the distribution/separation of the clusters on the second cross plot evaluated during the step (b3) is acceptable, the distribution of the points on the second attribute data set evaluated during the step (b6) is acceptable, and said cluster in said particular attribute space resultant from said validation data is located adjacent to said another cluster in the same said particular attribute space resultant from said training data when said fourth cross plr in said particular attribute space is generated during the step (b10).

16. The program storage device (102) of Claim 11 wherein the generating step (c) of said method steps for generating the classified result in response to the plurality of points on the first attribute data set and the cross plot in attribute space, having said at least two clusters of points, comprises the steps of : (c1) assigning a first label to a first one of said at least two clusters of c said cross plot in attribute space, each point in said first one of said at least t clusters of points on said cross plot in attribute space having assigned thereto said first label and corresponding to a first set of locations on said first attribute data set, (c2) assigning a second label to a second one of said at least two clusters of points on said cross plot in attribute space, each point in said second one of said at least two clusters of points on said cross plot in attribute space having assigned thereto said second label and corresponding to a second set of locations on said first attribute data set, (c3) labeling each of said first set of locations on said first attribute data set with said first label, and (c4) labeling each of said second set of locations on said first attribute data set with said second label.

17. A seismic classification system adapted for producing a classified result adapted from a plurality of attribute data, comprising: first means (18, 22) for receiving said plurality of attribute data, said plurality of attribute data corresponding to a plurality of points on a first attribute data set; second means (100A) for generating a first cross plot in attribute space in response to the plurality of attribute data on the first attribute data set, said second means includes means (224) for selecting a subset of the attribute data on the first attribute data set to represent a first set of inspection data, means (100A) for generating a second cross plot in attribute space from the first set of inspection data, the second cross plot having a distribution/separation of clusters, and means for evaluating the distribution/separation of the clusters on the second cross plot; and third means (100A) for generating a classified result in response to the plurality of points on the first attribute data set and the first cross plot in attribute space.

18. The seismic classification system of Claim 1B further comprising a display (100C) adapted for displaying said classified result.

19. The seismic classification system of Claim 18 or 19 wherein said first means (18, 22) for receiving said plurality of attribute data comprises: measurable quantity receiving means for receiving measurable quantities associated, respectively, with a plurality of points in a subsurface, the first attribute data set corresponding to said horizon; and means responsive to the receipt of said measurable quantities associated, respectively, with the plurality of points in the subsurface by said measurable quantity receiving means for generating the plurality of attribute data" (a, b)" associated, respectively, with the plurality of points on the first attribute data set.

20. The seismic classification system of Claim 18 or 19 wherein said second means (100A) for generating said first cross plot in attribute space in response to the plurality of attribute data on the first attribute data set further comprises: means for selecting a subset of points among a set of clusters on the first cross plot in attribute space to represent a second set of inspection data, means for generating a second attribute data set from the second set of inspection data, the second attribute data set having a distribution of points, and means for evaluating the distribution of the points on the second attribute data set.

21. The seismic classification system of Claim 20 wherein said second means (100A) for generating said first cross plot in attribute space in response to the plurality of attribute data on the first attribute data set further comprises: means for selecting some of the attribute data on the first attribute data set to represent training data, means for selecting other attribute data on the first attribute data set to represent validation data, a class of the training data being approximately the same as a class of the validation data, means for generating a third cross plot in a particular attribute space in response to the training data, and means for generating a fourth cross plot in said particular attribute space in response to the validation data, whereby a cluster in said particular attribute space resultant from said validation data should be located adjacent to another cluster in the same said particular attribute space resultant from said training data when said class of said training data is approximately the same as said class of said validation data.

22. The seismic classification system of Claim 21 wherein said second means (100A) for generating a first cross plot in attribute space in response to the plurality of attribute data on the first attribute data set further comprises: means for generating said first cross plot in attribute space having at least two clusters of points in response to the attribute data on the first attribute data set when: the distribution/separation of the clusters on the second cross plot is acceptable, the distribution of the points on the second attribute data set is acceptable or said cluster in said particular attribute space resultant from said validation data is located adjacent to said another cluster in the same said particular attribute space resultant from said training data when said fourth cross plot in said particular attribute space is generated.

23. The seismic classification system of Claim 17 wherein said first cross plot attribute space has at least two clusters of points, and wherein said third means for generating a classified result in response to the plurality of points of the first attribute data set and the first cross plot in attribute space comprises means assigning a first label to a first one of said at least two clusters of point on said first cross plot in attribute space, each point in said first one of said at least two clusters of points on said first cross plot in attribute space having assigned thereto said first label and corresponding to a first set of locations on said first attribute data set, means for assigning a second label to a second one of said at least two cluster of points on said first cross plot in attribute space, each point in said second one of said at least two clusters of points on said first cross plot in, attribute space having assigned thereto said second label and corresponding to a second set of locations on said first attribute data set, means for labeling each of said first set of locations on said first attribute data set with said first label, and means for labeling each of said second set of locations on said first attribute data set with said second label.

24. The seismic classification system of Claim 22 wherein said first cross plot attribute space has at least two clusters of points, and wherein said third means for generating a classified result in response to the plurality of points of the first attribute data set and the first cross plot in attribute space comprises means assigning a first label to a first one of said at least two clusters of point on said first cross plot in attribute space, each point in said first one of said at least two clusters of points on said first cross plot in attribute space having assigned thereto said first label and corresponding to a first set of locations on said first attribute data set, means for assigning a second label to a second one of said at least two points on said first cross plot in attribute space, each point in said second one of said at least two clusters of points on said first cross plot in attribute space having assigned thereto said second label and corresponding to a second set of locations on said first attribute data set, means for labelling each of said first set of locations on said first attribute data set with said first label, and means for labelling each of said second set of locations on said first attribute data set with said second label.

## Patentansprüche

1. Verfahren zum Erzeugen eines klassifizierten Ergebnisses in einem seismischen Klassifizierungssystem, das auf einer Workstation-Anzeige aufgezeichnet oder angezeigt werden kann, wobei das Verfahren die folgenden Schritte umfasst: (a) Empfangen wenigstens eines ersten Attributdatensatzes, wobei der Attributdatensatz mehrere Punkte enthält, und mehrere Attributdaten, die den mehreren Punkten (108, 110) entsprechen, (b) Erzeugen einer ersten Quergraphik im Attributraum in Reaktion auf die Attributdaten in dem ersten Attributdatensatz (112), **dadurch gekennzeichnet, dass** der Erzeugungsschritt (b) die folgenden Schritte enthält: (b1) Auswählen einer Teilmenge der Attributdaten in dem ersten Attributdatensatz zum Darstellen einer ersten Menge von Untersuchungsdaten, (b2) Erzeugen einer zweiten Quergraphik im Attributraum aus der ersten Menge von Untersuchungsdaten, wobei die zweite Quergraphik eine Verteilung/Entfernung von Clustern aufweist, und (b3) Bewerten der Verteilung/Entfernung der Cluster in der zweiten Quergraphik; und (c) Erzeugen des klassifizierten Ergebnisses in Reaktion auf die mehreren Punkte in dem ersten Attributdatensatz und die erste Quergraphik im Attributraum.

2. Verfahren nach Anspruch 1, bei dem der Empfangsschritt (a) zum Empfangen (20) wenigstens eines ersten Attributdatensatzes die folgenden Schritte umfasst: (a1) Empfangen mehrerer messbarer Größen, die mehreren Punkten (A-H) in einer Schicht unter der Oberfläche zugeordnet sind, wobei der erste Attributdatensatz der Schicht unter der Oberfläche entspricht, und (a2) Erzeugen der mehreren Attributdaten "(a, b)", die den mehreren Punkten in dem ersten Attributdatensatz zugeordnet sind.

3. Verfahren nach Anspruch 1 oder 2, bei dem der Erzeugungsschritt (b) zum Erzeugen der ersten Quergraphik im Attributraum in Reaktion auf die Attributdaten in dem ersten Attributdatensatz ferner die folgenden Schritte umfasst: (b4) Auswählen (158) einer Teilmenge von Punkten unter einer Menge von Clustern in der ersten Quergraphik im Attributraum zur Darstellung einer zweiten Menge von Untersuchungsdaten, (b5) Erzeugen eines zweiten Attributdatensatzes aus der zweiten Menge von Untersuchungsdaten, wobei der zweite Attributdatensatz eine Verteilung von Punkten aufweist, und (b6) Bewerten (162) der Verteilung der Punkte in dem zweiten Attributdatensatz.

4. Verfahren nach Anspruch 3, bei dem der Erzeugungsschritt (b) zum Erzeugen der ersten Quergraphik im Attributraum in Reaktion auf die Attributdaten in dem ersten Attributdatensatz ferner die folgenden Schritte umfasst: (b7) Auswählen einiger der Attributdaten in dem ersten Attributdatensatz zum Darstellen von Trainingsdaten, (b8) Auswählen anderer Attributdaten in dem ersten Attributdatensatz zum Darstellen von Überprüfungsdaten, wobei eine Klasse der Trainingsdaten näherungsweise dieselbe wie die Klasse der Überprüfungsdaten ist, (b9) Erzeugen einer dritten Quergraphik in einem bestimmten Attributraum in Reaktion auf die Trainingsdaten und (b10) Erzeugen einer vierten Quergraphik in dem bestimmten Attributraum in Reaktion auf die Überprüfungsdaten, wobei ein Cluster in dem bestimmten Attributraum, der sich aus den Überprüfungsdaten ergibt, angrenzend an einen anderen Cluster in demselben bestimmten Attributraum, der sich aus den Trainingsdaten ergibt, angeordnet werden sollte, wenn die Klasse der Trainingsdaten näherungsweise dieselbe wie die Klasse der Überprüfungsdaten ist,

5. Verfahren nach Anspruch 4, bei dem der Erzeugungsschritt (b) zum Erzeugen der ersten Quergraphik im Attributraum in Reaktion auf die Attributdaten in dem ersten Attributdatensatz ferner die folgenden Schritte umfasst: (b11) Erzeugen der Quergraphik im Attributraum mit wenigstens zwei Cluster-Punkten in Reaktion auf die Attributdaten in dem ersten Attributdatensatz, wenn: die während des Schritts (b3) bewertete Verteilung/Entfernung der Cluster in der zweiten Quergraphik akzeptabel ist, die während des Schritts (b6) bewertete Verteilung der Punkte in dem zweiten Attributdatensatz akzeptabel ist und der Cluster in dem bestimmten Attributraum, der sich aus den Überprüfungsdaten ergibt, angrenzend an den anderen Cluster in demselben bestimmten Attributraum, der sich aus den Trainingsdaten ergibt, angeordnet ist, wenn die vierte Quergraphik in dem bestimmten Attributraum während des Schritts (b10) erzeugt wird.

6. Verfahren nach Anspruch 1, bei dem der Erzeugungsschritt (c) zum Erzeugen des klassifizierten Ergebnisses in Reaktion auf die mehreren Punkte in dem ersten Attributdatensatz und die Quergraphik im Attributraum mit den wenigstens zwei Clustern von Punkten die folgenden Schritte umfasst: (c1) Zuweisen eines ersten Etiketts zu einem ersten Cluster der wenigstes zwei Cluster von Punkten der Quergraphik im Attributraum, wobei jedem Punkt in dem ersten Cluster der wenigstens zwei Cluster von Punkten in der Quergraphik im Attributraum das erste Etikett zugewiesen wird und er einer ersten Menge von Orten in dem ersten Attributdatensatz entspricht, (c2) Zuweisen eines zweiten Etiketts zu einem zweiten Cluster der wenigstens zwei Cluster von Punkten in der Quergraphik im Attributraum, wobei jedem Punkt in dem zweiten Cluster der wenigstens zwei Cluster von Punkten in der Quergraphik im Attributraum das zweite Etikett zugewiesen wird und er einer zweiten Menge von Orten in dem ersten Attributdatensatz entspricht, (c3) Bezeichnen jedes Orts der ersten Menge von Orten in dem ersten Attributdatensatz mit dem ersten Etikett und (c4) Bezeichnen jedes Orts der zweiten Menge von Orten in dem ersten Attributdatensatz mit dem zweiten Etikett.

7. Seismische Klassifizierungsvorrichtung, die aus mehreren Attributdatensätzen ein klassifiziertes Ergebnis erzeugen kann, wobei die Vorrichtung umfasst: ein erstes Erzeugungsmittel (18, 22) zum Erzeugen mehrerer Werte, die mehreren Punkten zugeordnet sind, die über die Oberfläche auf einer Schicht unter der Oberfläche einer Erdformation verteilt sind; ein zweites Erzeugungsmittel (112c), das in Reaktion auf die mehreren Werte mehrere Etiketten erzeugt, die den mehreren Werten zugeordnet sind, **dadurch gekennzeichnet, dass** das zweite Erzeugungsmittel (224) ein Auswahlmittel zum Auswählen einer Untersuchungsteilmenge der mehreren Werte umfasst, wobei das erste Gruppierungsmittel (230) in Reaktion auf die Untersuchungsteilmenge die Untersuchungsteilmenge der mehreren Werte im Attributraum gruppiert, und ein zweites Gruppierungsmittel (238) zum Gruppieren aller der mehreren Werte in dem Attributraum, wenn die Untersuchungsteilmenge der mehreren Werte durch das erste Gruppierungsmittel akzeptabel in dem Attributraum gruppiert worden ist; und Mittel zum Zuordnen der mehreren Etiketten (112c) zu den mehreren Punkten auf der Schicht unter der Oberfläche der Erdformation und **dadurch** Erzeugen einer Klassendatensatzgraphik, die die mehreren Punkte umfasst, die mit den mehreren Etiketten bezeichnet sind, wobei die Klassendatensatzgraphik das klassifizierte Ergebnis darstellt.

8. Seismische Klassifizierungsvorrichtung nach Anspruch 7, bei der das Auswahlmittel (224) die Untersuchungsteilmenge der mehreren Werte und eine Trainingsteilmenge der mehreren Werte und eine Überprüfungsteilmenge der mehreren Werte auswählt und bei der das erste Gruppierungsmittel (230) umfasst: ein Untersuchungsteilmengen-Gruppierungsmittel, das in Reaktion auf die Untersuchungsteilmenge die Untersuchungsteilmenge der mehreren Werte im Attributraum gruppiert; ein Trainingsteilmengen-Gruppierungsmittel (82), das in Reaktion auf die Trainingsteilmenge die Trainingsteilmenge der mehreren Werte im Attributraum gruppiert; und ein Überprüfungsteilmengen-Gruppierungsmittel (84), das in Reaktion auf die Überprgfungstailmenge die Überprüfungsteilmenge der mehreren Werte im Attributraum gruppiert, wobei das zweite Gruppierungsmitel alle der mehreren Werte in dem Attributraum gruppiert und mehrere Cluster von Werten in dem Attributraum erzeugt, wenn die Untersuchungsteilmenge der mehreren Werte durch das Untersuchungsteilmengen-Gruppierungsmittel akzeptabel in dem Attributraum gruppiert worden ist und wenn die Trainingsteilmenge der mehreren Werte durch das Trainingsteilmengen-Gruppierungsmittel akzeptabel in dem Attributraum gruppiert worden ist und wenn die Überprüfungsteilmenge der mehreren Werte durch das Überprüfungsteilmengen-Gruppierungsmittel akzeptabel in dem Attributraum gruppiert worden ist.

9. Seismische Klassifizierungsvorrichtung nach Anspruch 8, bei der das zweite Gruppierungsmittel (230) den mehreren in dem Attributraum erzeugten Clustern mehrere Etiketten zuweist, wobei jedem der Cluster in dem Attributraum ein getrenntes und verschiedenes Etikett zugewiesen wird.

10. Seismische Klassifizierungsvorrichtung nach Anspruch 9, bei der das Mittel zum Zuordnen der mehreren Etiketten zu den mehreren Punkten in der Schicht unter der Oberfläche der Erdformation ferner umfasst: ein Datensatz-Erzeugungsmittel, das in Reaktion auf die Zuweisung der mehreren Etiketten zu den mehreren Clustern in dem Attributraum durch das zweite Gruppierungsmitel eine Klassendatensatzgraphik erzeugt, die das klassifizierte Ergebnis repräsentiert, wobei die Klassendatensatzgraphik eine Attributdatensatzgraphik der mehreren über die Oberfläche der Schicht unter der Oberfläche der Erdformation verteilten Punkte repräsentiert, bei der die mehreren Etiketten diesen mehreren Punkten auf der Oberfläche dieser Schicht unter der Oberfläche zugeordnet sind.

11. Programmspeichervorrichtung (102), die durch eine Maschine (100A) lesbar ist, die greifbar ein Programm (100B) von Anweisungen verkörpert, die durch die Maschine ausführbar sind, um Verfahrensschritte auszuführen, um ein klassifiziertes Ergebnis zu erzeugen, das auf einer Workstation-Anzeige aufgezeichnet oder angezeigt werden kann, wobei die Verfahrensschritte umfassen: (a) Empfangen wenigstens eines ersten Attributdatensatzes, wobei der Attributdatensatz mehrere Punkte enthält, und mehrere Attributdaten, die den mehreren Punkten entsprechen, (b) Erzeugen einer ersten Quergraphik im Attributraum in Reaktion auf die Attributdaten in dem ersten Attributdatensatz, **dadurch gekennzeichnet, dass** der Erzeugungsschritt (b) die folgenden Schritte enthält: (b1) Auswählen einer Teilmenge der Attributdaten in dem ersten Attributdatensatz zum Darstellen einer ersten Menge von Untersuchungsdaten, (b2) Erzeugen einer zweiten Quergraphik im Attributraum aus der ersten Menge von Untersuchungsdaten, wobei die zweite Quergraphik eine Verteilung/Entfernung von Clustern aufweist, und (b3) Bewerten der Verteilung/Entfernung der Cluster in der zweiten Quergraphik; und (c) Erzeugen des klassifizierten Ergebnisses in Reaktion auf die mehreren Punkte in dem ersten Attributdatensatz und die Quergraphik im Attributraum.

12. Programmspeichervorrichtung (102) nach Anspruch 11, bei der der Empfangsschritt (a) der Verfahrensschritte zum Empfangen wenigstens eines ersten Attributdatensatzes ferner die folgenden Schritte umfasst: (a1) Empfangen mehrerer messbarer Größen, die mehreren Punkten in einer Schicht unter der Oberfläche zugeordnet sind, wobei der erste Attributdatensatz der Schicht unter der Oberfläche entspricht, und (a2) Erzeugen der mehreren Attributdaten "(a, b)", die den mehreren Punkten in dem ersten Attributdatensatz zugeordnet sind.

13. Programmspeichervorrichtung (102) nach Anspruch 11 oder 12, bei der der Erzeugungsschritt (b) der Verfahrensschritte zum Erzeugen der ersten Quergraphik im Attributraum in Reaktion auf die Attributdaten in dem ersten Attributdatensatz ferner die folgenden Schritte umfasst: (b4) Auswählen einer Teilmenge von Punkten unter einer Menge von Clustern in der ersten Quergraphik im Attributraum zur Darstellung einer zweiten Menge von Untersuchungsdaten, (b5) Erzeugen eines zweiten Attributdatensatzes aus der zweiten Menge von Untersuchungsdaten, wobei der zweite Attributdatensatz eine Verteilung von Punkten aufweist, und (b6) Bewerten der Verteilung der Punkte in dem zweiten Attributdatensatz,

14. Programmspeichervorrichtung (102) nach Anspruch 13, bei der der Erzeugungsschritt (b) der Verfahrensschritte zum Erzeugen der ersten Quergraphik im Attributraum in Reaktion auf die Attributdaten in dem ersten Attributdatensatz ferner die folgenden Schritte umfasst: (b7) Auswählen einiger der Attributdaten in dem ersten Attributdatensatz zum Darstellen von Trainingsdaten, (b8) Auswählen anderer Attributdaten in dem ersten Attributdatensatz zum Darstellen von Überprüfungsdaten, wobei eine Klasse der Trainingsdaten näherungsweise dieselbe wie die Klasse der Überprüfungsdaten ist, (b9) Erzeugen einer dritten Quergraphik in einem bestimmten Attributraum in Reaktion auf die Trainingsdaten und (b10) Erzeugen einer vierten Quergraphik in dem bestimmten Attributraum in Reaktion auf die Überprüfungsdaten, wobei ein Cluster in dem bestimmten Attributraum, der sich aus den Überprüfungsdaten ergibt, angrenzend an einen anderen Cluster in demselben bestimmten Attributraum, der sich aus den Trainingsdaten ergibt, angeordnet werden sollte, wenn die Klasse der Trainingsdaten näherungsweise dieselbe wie die Klasse der Überprüfungsdaten ist.

15. Programmspeichervorrichtung (102) nach Anspruch 14, bei der der Erzeugungsschritt (b) der Verfahrensschritte zum Erzeugen der ersten Quergraphik im Attributraum in Reaktion auf die Attributdaten in dem ersten Attributdatensatz die folgenden Schritte umfasst: (b11) Erzeugen der Quergraphik im Attributraum mit wenigstens zwei Cluster-Punkten in Reaktion auf die Attributdaten in dem ersten Attributdatensatz, wenn: die während des Schritts (b3) bewertete Verteilung/Entfernung der Cluster in der zweiten Quergraphik akzeptabel ist, die während des Schritts (b6) bewertete Verteilung der Punkte in dem zweiten Attributdatensatz akzeptabel ist und der Cluster in dem bestimmten Attributraum, der sich aus den Überprüfungsdaten ergibt, angrenzend an den anderen Cluster in demselben bestimmten Attributraum, der sich aus den Trainingsdaten ergibt, angeordnet ist, wenn die vierte Quergraphik in dem bestimmten Attributraum während des Schritts (b10) erzeugt wird.

16. Programmspeichervorrichtung (102) nach Anspruch 11, bei der der Erzeugungsschritt (c) der Verfahrensschritte zum Erzeugen des klassifizierten Ergebnisses in Reaktion auf die mehreren Punkte in dem ersten Attributdatensatz und die Quergraphik im Attributraum mit den wenigstens zwei Clustern von Punkten die folgenden Schritte umfasst: (c1) Zuweisen eines ersten Etiketts zu einem ersten Cluster der wenigstes zwei Cluster von Punkten der Quergraphik im Attributraum, wobei jedem Punkt in dem ersten Cluster der wenigstens zwei Cluster von Punkten in der Quergraphik im Attributraum das erste Etikett zugewiesen wird und er einer ersten Menge von Orten in dem ersten Attributdatensatz entspricht, (c2) Zuweisen eines zweiten Etiketts zu einem zweiten Cluster der wenigstens zwei Cluster von Punkten in der Quergraphik im Attributraum, wobei jedem Punkt in dem zweiten Cluster der wenigstens zwei Cluster von Punkten in der Quergraphik im Attributraum das zweite Etikett zugewiesen wird und er einer zweiten Menge von Orten in dem ersten Attributdatensatz entspricht, (c3) Bezeichnen jedes Orts der ersten Menge von Orten in dem ersten Attributdatensatz mit dem ersten Etikett und (c4) Bezeichnen jedes Orts der zweiten Menge von Orten in dem ersten Attributdatensatz mit dem zweiten Etikett.

17. Seismisches Klassifizierungssystem, das ein klassifiziertes Ergebnis erzeugen kann, das von mehreren Attributdaten angepasst ist, wobei das seismische Klassifizierungssystem umfasst: ein erstes Mittel (18, 22) zum Empfangen der mehreren Attributdaten, wobei die mehreren Attributdaten mehreren Punkten in einem ersten Attributdatensatz entsprechen; ein zweites Mittel (100A) zum Erzeugen einer ersten Quergraphik im Attributraum in Reaktion auf die mehreren Attributdaten in dem ersten Attributdatensatz, wobei das zweite Mittel enthält: ein Mittel (224) zum Auswählen einer Teilmenge der Attributdaten in dem ersten Attributdatensatz zum Darstellen einer ersten Menge von Untersuchungsdaten, ein Mittel (100A) zum Erzeugen einer zweiten Quergraphik im Attributraum aus der ersten Menge von Untersuchungsdaten, wobei die zweite Quergraphik eine Verteilung/Entfernung von Clustern aufweist, und ein Mittel zum Bewerten der Verteilung/Entfernung der Cluster in der zweiten Quergraphik; und ein drittes Mittel (100A) zum Erzeugen eines klassifizierten Ergebnisses in Reaktion auf die mehreren Punkte in dem ersten Attributdatensatz und die erste Quergraphik im Attributraum.

18. Seismisches Klassifizierungssystem nach Anspruch 18, das ferner eine Anzeige (100C) umfasst, die das klassifizierte Ergebnis anzeigen kann.

19. Seismisches Klassifizierungssystem nach Anspruch 18 oder 19, bei dem das erste Mittel (18, 22) zum Empfangen der mehreren Attributdaten umfasst: ein Messgrößenempfangsmittel zum Empfangen von Messgrößen, die mehreren Punkten in einer Schicht unter der Oberfläche zugeordnet sind, wobei der erste Attributdatensatz dem Horizont entspricht; und ein Mittel, das in Reaktion auf den Empfang der Messgrößen, die den mehreren Punkten in der Schicht unter der Oberfläche zugeordnet sind, durch das MessgrößenEmpfangsmittel die mehreren Attributdaten "(a, b)" erzeugt, die den mehreren Punkten in dem ersten Attributdatensatz zugeordnet sind.

20. Seismisches Klassifizierungssystem nach Anspruch 18 oder 19, bei dem das zweite Mittel (100A) zum Erzeugen der ersten Quergraphik im Attributraum in Reaktion auf die mehreren Attributdaten in dem ersten Attributdatensatz ferner umfasst: ein Mittel zum Auswählen einer Teilmenge von Punkten unter einer Menge von Clustern in der ersten Quergraphik im Attributraum zur Darstellung einer zweiten Menge von Untersuchungsdaten, ein Mittel zum Erzeugen eines zweiten Attributdatensatzes aus der zweiten Menge von Untersuchungsdaten, wobei der zweite Attributdatensatz eine Verteilung von Punkten aufweist, und ein Mittel zum Bewerten der Verteilung der Punkte in dem zweiten Attributdatensatz.

21. Seismisches Klassifizierungssystem nach Anspruch 20, bei dem das zweite Mittel (100A) zum Erzeugen der ersten Quergraphik im Attributraum in Reaktion auf die mehreren Attributdaten in dem ersten Attributdatensatz ferner umfasst: ein Mittel zum Auswählen einiger der Attributdaten in dem ersten Attributdatensatz zum Darstellen von Trainingsdaten, ein Mittel zum Auswählen anderer Attributdaten in dem ersten Attributdatensatz zum Darstellen von Überprüfungsdaten, wobei eine Klasse der Trainingsdaten näherungsweise dieselbe wie eine Klasse der Überprüfungsdaten ist, ein Mittel zum Erzeugen einer dritten Quergraphik in einem bestimmten Attributraum in Reaktion auf die Trainingsdaten und ein Mittel zum Erzeugen einer vierten Quergraphik in dem bestimmten Attributraum in Reaktion auf die Überprüfungsdaten, wobei ein Cluster in dem bestimmten Attributraum, der sich aus den Überprüfungsdaten ergibt, angrenzend an einen anderen Cluster in demselben bestimmten Attributraum, der sich aus den Trainingsdaten ergibt, angeordnet werden sollte, wenn die Klasse der Trainingsdaten näherungsweise dieselbe wie die Klasse der Überprüfungsdaten ist.

22. Seismisches Klassifizierungssystem nach Anspruch 21, bei dem das zweite Mittel (100A) zum Erzeugen einer ersten Quergraphik im Attributraum in Reaktion auf die mehreren Attributdaten in dem ersten Attributdatensatz ferner umfasst: ein Mittel zum Erzeugen der ersten Quergraphik im Attributraum mit wenigstens zwei Clustern von Punkten in Reaktion auf die Attributdaten in dem ersten Attributdatensatz, wenn: die Verteiiung/Entfernung der Cluster in der zweiten Quergraphik akzeptabel ist, die Verteilung der Punkte in dem zweiten Attributdatensatz akzeptabel ist oder der Cluster in dem bestimmten Attributraum, der sich aus den Überprüfungsdaten ergibt, angrenzend an den anderen Cluster in demselben bestimmten Attributraum, der sich aus den Trainingsdaten ergibt, angeordnet ist, wenn die vierte Quergraphik in dem bestimmten Attributraum erzeugt wird.

23. Seismisches Klassifizierungssystem nach Anspruch 17, bei dem der erste Quergraphikatributraum wenigstens zwei Cluster von Punkten aufweist und bei dem das dritte Mittel zum Erzeugen eines klassifizierten Ergebnisses in Reaktion auf die mehreren Punkte des ersten Attributdatensatzes und die erste Quergraphik im Attributraum Folgendes umfasst: ein Mittel, das einem ersten Cluster der wenigstes zwei Cluster von Punkten in der ersten Quergraphik im Attributraum ein erstes Etikett zuweist, wobei jedem Punkt in dem ersten Cluster der wenigstens zwei Cluster von Punkten in der ersten Quergraphik im Attributraum das erste Etikett zugewiesen wird und er einer ersten Menge von Orten in dem ersten Attributdatensatz entspricht, ein Mittel zum Zuweisen eines zweiten Etiketts zu einem zweiten Cluster der wenigstens zwei Cluster von Punkten in der ersten Quergraphik im Attributraum, wobei jedem Punkt in dem zweiten Cluster der wenigstens zwei Cluster von Punkten in der ersten Quergraphik im Attributraum das zweite Etikett zugewiesen wird und er einer zweiten Menge von Orten in dem ersten Attributdatensatz entspricht, ein Mittel zum Bezeichnen jedes Orts der ersten Menge von Orten in dem ersten Attributdatensatz mit dem ersten Etikett und ein Mittel zum Bezeichnen jedes Orts der zweiten Menge von Orten in dem ersten Attributdatensatz mit dem zweiten Etikett.

24. Seismisches Klassifizierungssystem nach Anspruch 22, bei dem der erste Quergraphikattributraum wenigstens zwei Cluster von Punkten aufweist und bei dem das dritte Mittel zum Erzeugen eines klassifizierten Ergebnisses in Reaktion auf die mehreren Punkte des ersten Attributdatensatzes und die erste Quergraphik im Attributraum Folgendes umfasst: ein Mittel, das einem ersten Cluster der wenigstes zwei Cluster von Punkten in der ersten Quergraphik im Attributraum ein erstes Etikett zuweist, wobei jedem Punkt in dem ersten Cluster der wenigstens zwei Cluster von Punkten in der ersten Quergraphik im Attributraum das erste Etikett zugewiesen wird und er einer ersten Menge von Orten in dem ersten Attributdatensatz entspricht, ein Mittel zum Zuweisen eines zweiten Etiketts zu einem zweiten der wenigstens zwei Punkte in der ersten Quergraphik im Attributraum, wobei jedem Punkt in dem zweiten Cluster der wenigstens zwei Cluster von Punkten in der ersten Quergraphik im Attributraum das zweite Etikett zugewiesen wird und er einer zweiten Menge von Orten in dem ersten Attributdatensatz entspricht, ein Mittel zum Bezeichnen jedes Orts der ersten Menge von Orten in dem ersten Attributdatensatz mit dem ersten Etikett und ein Mittel zum Bezeichnen jedes Orts der zweiten Menge von Orten in dem ersten Attributdatensatz mit dem zweiten Etikett.

## Revendications

1. Dans un système de classification sismique, procédé pour générer un résultat classifié qui peut être enregistré ou visualisé sur un affichage de poste de travail, comprenant les étapes consistant à : (a) recevoir au moins un premier ensemble de données d'attribut où l'ensemble de données d'attribut comprend une pluralité de points et une pluralité de données d'attribut correspondant, respectivement, à la pluralité de points (108, 110), (b) générer une première représentation en coordonnées dans un espace d'attribut en réponse aux données d'attribut sur le premier ensemble de données d'attribut (112), **caractérisé en ce que** l'étape de génération (b) comprend les étapes consistant à (b1) sélectionner un sous-ensemble des données d'attribut sur le premier ensemble de données d'attribut pour représenter un premier ensemble de données d'inspection, (b2) génèrer une deuxième représentation en coordonnées dans un espacé d'attribut à partir du premier ensemble de données d'inspection, la deuxième représentation en coordonnées ayant une distribution/séparation de groupements, et (b3) évaluer la distribution/séparation des groupements sur la deuxième représentation en coordonnées ; et (c) générer le résultat classifié en réponse à la pluralité de points sur le premier ensemble de données d'attribut et la première représentation en coordonnées dans un espace d'attribut.

2. Procédé selon la revendication 1, dans lequel l'étape de réception (a) pour recevoir (20) au moins un premier ensemble de données d'attribut comprend les étapes consistant à : (a1) recevoir une pluralité de quantités mesurables associée, respectivement avec une pluralité de points de points (A-H) dans une surface secondaire, le premier ensemble de données d'attribut correspondant à la surface secondaire, et (a2) générer la pluralité de données d'attribut « (a, b) » associées, respectivement, à la pluralité de points sur le premier ensemble de données d'attribut.

3. Procédé selon la revendication 1 ou 2, dans lequel l'étape de génération (b) pour générer la première représentation en coordonnées dans un espace d'attribut en réponse aux données d'attribut sur le premier ensemble de données d'attribut comprend en outre les étapes consistant à : (b4) sélectionner (158) un sous-ensemble de points parmi un ensemble de groupements sur la première représentation en coordonnées dans un espace d'attribut pour représenter un deuxième ensemble de données d'inspection, (b5) générer un deuxième ensemble de données d'attribut à partir du deuxième ensemble de données d'inspection, le deuxième ensemble de données d'attribut ayant une distribution de points, et (b6) évaluer (162) la distribution des points sur le deuxième ensemble de données d'attribut.

4. Procédé selon la revendication 3, dans lequel l'étape de génération (b) pour générer la première représentation en coordonnées dans un espace d'attribut en réponse aux données d'attribut sur le premier ensemble de données d'attribut comprend en outre les étapes consistant à : (b7) sélectionner certaines des données d'attribut sur le premier ensemble de données d'attribut pour représenter des données d'apprentissage, (b8) sélectionner d'autres données d'attribut sur le premier ensemble de données d'attribut pour représenter des données de validation, une classe des données d'apprentissage étant approximativement la même qu'une classe de données de validation, (b9) générer un troisième tracé croisé dans un espace d'attribut particulier en réponse aux données d'apprentissage, et (b10) générer un quatrième tracé croisé dans ledit espace d'attribut particulier en réponse aux données de validation, moyennant quoi un groupement dans ledit espace d'attribut particulier résultant desdites données de validation devrait être situé adjacent à un autre groupement dans le même dit espace d'attribut particulier résultant desdites données d'apprentissage quand ladite classe desdites données d'apprentissage est approximativement la même que ladite classe desdites données de validation.

5. Procédé selon la revendication 4, dans lequel l'étape de génération (b) pour générer la première représentation en coordonnées dans un espace d'attribut en réponse aux données d'attribut sur le premier ensemble de données d'attribut comprend en outre les étapes consistant à : (b11) générer ledit tracé croisé dans un espace d'attribut ayant au moins deux points de groupements en réponse aux données à'attribut sur le premier ensemble de données d'attribut quand : 1a distribution/séparation des groupements sur la deuxième représentation en coordonnées évaluée durant l'étape (b3) est acceptable, la distribution des points sur le deuxième ensemble de données d'attribut évalué durant l'étape (b6) est acceptable, et ledit groupement dans ledit espace d'attribut particulier résultant desdites données de validation est situé adjacent audit un autre groupement dans le même dit espace d'attribut particulier résultant desdites données d'apprentissage quand ledit quatrième tracé croisé dans ledit espace d'attribut particulier est généré durant l'étape (b10).

6. Procédé selon la revendication 1, dans lequel l'étape de génération (c) pour générer le résultat classifié en réponse à la pluralité de points sur le premier ensemble de données d'attribut et le tracé croisé dans un espace d'attribut, ayant lesdites au moins deux groupements de points, comprend les étapes consistant à : (c1) attribuer une première étiquette à un premier desdits au moins deux groupements de points dudit tracé croise dans un espace d'attribut, chaque point dans ledit premier desdits au moins deux groupements de points sur ledit tracé croisé dans un espace d'attribut ayant ladite première étiquette attribuée à celui-ci et correspondant à un premier ensemble de positions sur ledit premier ensemble de données d'attribut, (c2) attribuer une deuxième étiquette à un deuxième desdits au moins deux groupements de points dudit tracé croisé dans un espace d'attribut, chaque point dans ledit deuxième desdits au moins deux groupements de points sur ledit trace croise dans un espace d'attribut ayant ladite deuxième étiquette attribuée à celui-ci et correspondant à un deuxième ensemble de positions sur ledit premier ensemble de données d'attribut, (c3) étiqueter chaque position dudit premier ensemble de positions sur ledit premier ensemble de données d'attribut avec ladite première étiquette, et (c4) étiqueter chaque position dudit deuxième ensemble de positions sur ledit premier ensemble de données d'attribut avec ladite deuxième étiquette.

7. Dispositif de classification sismique adapté pour produire un résultat classifié à partir d'une pluralité d'ensembles de données d'attribut, comprenant : des premiers moyens de génération (18, 22) pour générer une pluralité de valeurs associées, respectivement, à une pluralité de points distribués sur la surface sur une surface secondaire d'une formation terrestre ; des deuxièmes moyens de génération (112c) répondant à la pluralité de valeurs pour générer une pluralité d'étiquettes qui sont associées, respectivement, à la pluralité de valeurs, **caractérisé en ce que** les deuxièmes moyens de génération (224) comprennent des moyens de sélection pour sélectionner un sous-ensemble d'inspection de ladite pluralité de valeurs, des premiers moyens de groupage (230) répondant au sous-ensemble d'inspection pour grouper ledit sous-ensemble d'inspection de ladite pluralité de valeurs dans un espace d'attribut, et des deuxièmes moyens de groupage (238) pour grouper toute ladite pluralité de valeurs dans l'espace d'attribut quand le sous-ensemble d'inspection de la pluralité de valeurs est groupé de manière acceptable dans l'espace d'attribut par les premiers moyens de groupage ; et des moyens pour associer la pluralité d'étiquettes (112c) à la pluralité respective de points sur la surface secondaire de la formation terrestre en générant ainsi un tracé d'ensemble de données de classe comprenant la pluralité de points qui sont étiquetés, respectivement, avec la pluralité d'étiquettes, le tracé d'ensemble de données de classe représentant le résultat classifié.

8. Dispositif de classification sismique selon la revendication 7, dans lequel les moyens de sélection (224) sélectionnent le sous-ensemble d'inspection de la pluralité de valeurs et un sous-ensemble d'apprentissage de la pluralité de valeurs et un sous-ensemble de validation de la pluralité de valeurs, et dans lequel les premiers moyens de groupage (230) comprennent : des moyens de groupage de sous-ensemble d'inspection répondant au sous-ensemble d'inspection pour grouper le sous-ensemble d'inspection de la pluralité de valeurs dans un espace d'attribut des moyens de groupage de sous-ensemble d'apprentissage (82) répondant au sous-ensemble d'apprentissage pour grouper le sous-ensemble d'apprentissage de ladite pluralité de valeurs dans un espace d'attribut ; et des moyens de groupage de sous-ensemble de validation (84) répondant au sous-ensemble de validation pour grouper le sous-ensemble de validation de la pluralité de valeurs dans un espace d'attribut, les deuxièmes moyens de groupage groupant toute ladite pluralité de valeurs dans l'espace d'attribut et produisant une pluralité de groupements de valeurs dans l'espace d'attribut quand le sous-ensemble d'inspection de la pluralité de valeurs est groupé de manière acceptable dans l'espace d'attribut par les moyens de groupage de sous-ensemble d'inspection et quand le sous-ensemble d'apprentissage de la pluralité de valeurs est groupé de manière acceptable dans l'espace d'attribut par les moyens de groupage de sous-ensemble d'apprentissage et quand le sous-ensemble de validation de la pluralité de valeurs est groupé de manière acceptable dans l'espace d'attribut par les moyens de groupage de sous-ensemble de validation.

9. Dispositif de classification sismique selon la revendication 8, dans lequel lesdits deuxièmes moyens de groupage (230) attribuent une pluralité d'étiquettes, respectivement, à ladite pluralité de groupements produits dans l'espace d'attribut, une étiquette séparée et distincte étant attribuée à chacun des groupements dans ledit espace d'attribut.

10. Dispositif de classification sismique selon la revendication 9, dans lequel lesdits moyens pour associer la pluralité d'étiquettes, respectivement, à la pluralité de points sur la surface secondaire de la formation terrestre comprennent en outre : des moyens de génération d'ensemble de données répondant à l'attribution de la pluralité d'étiquettes, respectivement, à la pluralité de groupements dans l'espace d'attribut par les deuxièmes moyens de groupage pour générer un tracé d'ensemble de données de classe représentant le résultat classifié, le tracé d'ensemble de données de classe représentant un tracé d'ensemble de données d'attribut de la pluralité de points distribués sur la a surface secondaire de la formation terrestre ayant la pluralité d'étiquettes associées, respectivement, à cette pluralité de points sur la surface sur la surface secondaire.

11. Dispositif de stockage de données (102) lisible par une machine (100A) mettant en oeuvre de manière tangible un programme (100B) d'instructions exécutables par la machine, pour effectuer des étapes de procédé pour générer un résultat classifié qui peut être enregistré ou visualisé sur un affichage de poste de travail, ledit procédé consistant à : (a) recevoir au moins un premier ensemble de données d'attribut où l'ensemble de données d'attribut comprend une pluralité de points et une pluralité de données d'attribut correspondant, respectivement, a la pluralité de points, (b) générer une première représentation en coordonnées dans un espace d'attribut en réponse aux données d'attribut sur le premier ensemble de données d'attribut, **caractérisé en ce que** l'étape de génération (b) comprend les étapes consistant à (b1) sélectionner un sous-ensemble des données d'attribut sur le premier ensemble de données d'attribut pour représenter un premier ensemble de données d'inspection, (b2) générer une deuxième représentation en coordonnées dans un espace d'attribut à partir du premier ensemble de données d'inspection, la deuxième représentation en coordonnées ayant une distribution/séparation de groupements, et (b3) évaluer la distribution/séparation des groupements sur la deuxième représentation en coordonnées, et (c) générer le résultat classifié en réponse à la pluralité de points sur le premier ensemble de données d'attribut et la première représentation en coordonnées dans un espace d'attribut.

12. Dispositif de stockage de données (102) selon la revendication 11, dans lequel ladite étape de réception (a) desdites étapes de procédé pour recevoir au moins un premier ensemble de données d'attribut comprend les étapes consistant à : (a1) recevoir une pluralité de quantités mesurables associées, respectivement, à une pluralité de points dans une surface secondaire, le premier ensemble de données d'attribut correspondant à la surface secondaire, et (a2) générer la pluralité de données d'attribut « (a, b) » associées, respectivement, à la pluralité de points sur le premier ensemble de données d'attribut.

13. Dispositif de stockage de données (102) selon la revendication 11 ou 12, dans lequel l'étape de génération (b) desdites étapes de procédé pour générer la première représentation en coordonnées dans un espace d'attribut en réponse aux données d'attribut sur le premier ensemble de données d'attribut comprend en outre les étapes consistant à : (b4) sélectionner un sous-ensemble de points parmi un ensemble de groupements sur la première représentation en coordonnées dans un espace d'attribut pour représenter un deuxième ensemble de étonnées d'inspection, (b5) générer un deuxième ensemble de données d'attribut à partir du deuxième ensemble de données d'inspection, le deuxième ensemble de données d'attribut ayant une dïstribution de points, et (b6) évaluer la distribution des points sur le deuxième ensemble de données d'attribut.

14. Dispositif de stockage de données (102) selon la revendication 13, dans lequel l'étape de génération (b) desdites étapes de procédé pour générer la première représentation en coordonnées dans un espace d'attribut en réponse aux données d'attribut sur le premier ensemble de données d'attribut comprend en outre les étapes consistant à : (b7) sélectionner certaines des données d'attribut sur le premier ensemble de données d'attribut pour représenter des données d'apprentissage, (b8) sélectionner d'autres données d'attribut sur le premier ensemble de données d'attribut pour représenter des données de validation, une classe des données d'apprentissage étant approximativement la même qu'une classe de données de validation, (b9) générer un troisième tracé croisé dans un espace d'attribut particulier en réponse aux données d'apprentissage, et (b10) générer un quatrième tracé croisé dans ledit espace d'attribut particulier en réponse aux données de validation, moyennant quoi un groupement dans ledit espace d'attribut particulier résultant desdites données de validation devrait être situé adjacent a un autre groupement dans le même dit espace d'attribut particulier résultant desdites données d'apprentissage quand ladite classe desdites données d'apprentissage est approximativement la même que ladite classe desdites données de validation.

15. Dispositif de stockage de données (102) selon la revendication 14, dans lequel l'étape de génération (b) desdites étapes de procédé pour générer la première représentation en coordonnées dans un espace d'attribut en réponse aux données d'attribut sur le premier ensemble de données d'attribut comprend les étapes consistant à : (b11) générer ledit tracé croisé dans un espace d'attribut ayant au moins deux points de groupements en réponse aux données d'attribut sur le premier ensemble de données d'attribut quand : la distribution/séparation des groupements sur la deuxième représentation en coordonnées évaluée durant l'étape (b3) est acceptable, la distribution des points sur le deuxième ensemble de données d'attribut évalué durant l'étape (b6) est acceptable, et ledit groupement dans ledit espace d'attribut particulier résultant desdites données de validation est situé adjacent audit autre groupement dans le même dit espace d'attribut particulier résultant desdites données d'apprentissage quand ledit quatrième tracé croisé dans ledit espace d'attribut particulier est généré durant l'étape (b10).

16. Dispositif de stockage de données (102) selon la revendication 11, dans lequel l'étape de génération (c) desdites étapes de procédé pour générer le résultat classifié en réponse à la pluralité de points sur le premier ensemble de données d'attribut et le tracé croisé dans un espace d'attribut, ayant lesdites au moins deux groupements de points, comprend les étapes consistant à : (c1) attribuer une première étiquette à un premier desdits au moins deux groupements de points dudit tracé croisé dans un espace d'attribut, chaque point dans ledit premier desdits au moins deux groupements de points dudit tracé croisé dans un espace d'attribut ayant ladite première étiquette attribuée à celle-ci et correspondant à un premier ensemble de positions sur ledit premier ensemble de données d'attribut, (c2) attribuer une deuxième étiquette à un deuxième desdits au moins deux groupements de points dudit tracé croisé dans un espace d'attribut, chaque point dans ledit deuxième desdits au moins deux groupement de points dédit tracé croisé dans un espace d'attribut ayant ladite deuxième étiquette attribuée à celle-ci et correspondant à un deuxième ensemble de positions sur ledit premier ensemble de données d'attribut, (c3) étiqueter chaque position dudit premier ensemble de positions sur ledit premier ensemble de données d'attribut avec ladite première étiquette, et (c4) étiqueter chaque position dudit deuxième ensemble de positions sur ledit premier ensemble de données d'attribut avec ladite deuxième étiquette.

17. système de classification sismique adapté pour produire un résultat classifié à partir d'une pluralité de données d'attribut, comprenant : des premiers moyens (18, 22) pour recevoir ladite pluralité de données d'attribut, ladite pluralité de données d'attribut correspondant à une pluralité de points sur un premier ensemble de données d'attribut ; des deuxièmes moyens (100A) pour générer une première représentation en coordonnées dans un espace d'attribut en réponse à la pluralité de données d'attribut sur le premier ensemble de données d'attribut, lesdits deuxièmes moyens comprennent des moyens (224) pour sélectionner un sous-ensemble des données d'attribut sur le premier ensemble de données d'attribut, pour représenter un premier ensemble de données d'inspection, des moyens (100A) pour générer une deuxième représentation en coordonnées dans un espace d'attribut à partir du premier ensemble de données d'inspection, la deuxième représentation en coordonnées ayant une distribution/séparation de groupements, et des moyens pour évaluer la distribution/séparation des Groupements sur la deuxième représentation en coordonnées ; et des troisièmes moyens (100A) pour générer un résultat classifié en réponse la pluralité de points sur le premier ensemble de données d'attribut et la première représentation en coordonnées dans un espace d'attribut.

18. Système de classification sismique selon la revendication 17, comprenant en outre un affichage (100C) adapté pour visualiser ledit résultat classifié.

19. Système de classification sismique selon la revendication 17 ou 18, dans lequel lesdits premiers moyens (18, 22) pour recevoir ladite pluralité de données d'attribut comprennent : des moyens de réception de quantités mesurables pour recevoir des quantités mesurables associées, respectivement, à une pluralité de points dans une surface secondaire, le premier ensemble de données d'attribut correspondant audit horizon ; et des moyens répondant à la réception desdites quantités mesurables associées, respectivement, à la pluralité de points dans la surface secondaire par lesdits moyens de réception de quantités mesurables pour générer la pluralité de données d'attribut « (a, b) » associées, respectivement, à la pluralité de points sur le premier ensemble de données d'attribut,

20. Système de classification sismique selon la revendication 18 ou 19, dans lequel lesdits deuxièmes moyens (100A) pour générer une première représentation en coordonnées dans un espace d'attribut en réponse à la pluralité de données d'attribut sur le premier ensemble de données d'attribut comprennent en outre : des moyens pour sélectionner un sous-ensemble de points parmi un ensemble de groupements sur la première représentation en coordonnées dans un espace d'attribut pour représenter un deuxième ensemble de données d'inspection, des moyens pour générer un deuxième ensemble de données d'attribut à partir du deuxième ensemble de données d'inspection, le deuxième ensemble de données d'attribut ayant une distribution de points, et des moyens pour évaluer la distribution des points sur le deuxième ensemble de données d'attribut.

21. Système de classification sismique selon la revendication 20, dans lequel lesdits deuxièmes moyens (100A) pour générer une première représentation en coordonnées dans un espace d'attribut en réponse à la pluralité de données d'attribut sur le premier ensemble de données d'attribut comprennent en outre : des moyens pour sélectionner certaines des données d'attribut sur le premier ensemble de données d'attribut pour représenter des données d'apprentissage, des moyens pour sélectionner d'autres données d'attribut sur le premier ensemble de données d'attribut pour représenter des données de validation, une classe des données d'apprentissage étant approximativement la même qu'une classe de données de validation, des moyens pour générer un troisième tracé croise dans un espace d'attribut particulier en réponse aux données d'apprentissage, et des moyens pour générer un quatrième tracé croisé dans ledit espace d'attribut particulier en réponse aux données ce validation, moyennant quoi un groupement dans ledit espace d'attribut particulier résultant desdites données de validation devrait être situé adjacent a un autre groupement dans le même dit espace d'attribut particulier résultant desdites données d'apprentissage quand ladite classe desdites données d'apprentissage est approximativement la même que ladite classe desdites données de validation.

22. Système de classification sismique selon la revendication 21, dans lequel lesdits deuxièmes moyens (100A) pour générer une première représentation en coordonnées dans un espace d'attribut en réponse à la pluralité de données d'attribut sur le premier ensemble de données d'attribut comprennent en outre : des moyens pour générer ladite première représentation en coordonnées dans un espace d'attribut ayant au moins deux groupements de points en réponse aux données d'attribut sur le premier ensemble de données d'attribut quand : la distribution/séparation des groupements sur la deuxième représentation en coordonnées est acceptable, la distribution des points sur le deuxième ensemble de données d'attribut est acceptable ou ledit groupement dans ledit espace d'attribut particulier résultant desdites données de validation est situé adjacent audit un autre groupement dans le même dit espace d'attribut particulier résultant desdites données d'apprentissage quand ledit quatrième tracé croisé dans ledit espace d'attribut particulier est généré.

23. Système de classification sismique selon la revendication 17, dans lequel ladite première représentation en coordonnées dans un espace d'attribut a au moins deux groupements de points, et dans lequel lesdits troisièmes moyens pour générer un résultat classifié en réponse a la pluralité de points sur le premier ensemble de données d'attribut et la première représentation en coordonnées dans un espace d'attribut comprennent des moyens attribuant une première étiquette à un premier desdits au moins deux groupements de points sur ladite première représentation en coordonnées dans un espace d'attribut, chaque point dans ledit premier desdits au moins deux groupements de points sur ladite première représentation en coordonnées dans un espace d'attribut ayant ladite première étiquette attribuée à celui-ci et correspondant à un premier ensemble de positions sur ledit premier ensemble de données d'attribut, des moyens pour attribuer une deuxième étiquette à un deuxième desdits au moins deux groupements de points sur ladite première représentation en coordonnées dans un espace d'attribut, chaque point dans ledit deuxième desdits au moins deux groupements de points sur ladite première représentation en coordonnées dans un espace d'attribut ayant ladite deuxième étiquette attribuée à celui-ci et correspondant à un deuxième ensemble de positions sur ledit premier ensemble de données d'attribut, des moyens pour étiqueter chaque position dudit premier ensemble de positions sur ledit premier ensemble de données d'attribut avec ladite première étiquette, et des moyens pour étiqueter chaque position dudit deuxième ensemble de positions sur ledit premier ensemble de données d'attribut avec ladite deuxième étiquette.

24. Système de classification sismique selon la revendication 22, dans lequel ladite première représentation en coordonnées dans un espace d'attribut a au moins deux groupements de points, et dans lequel lesdits troisièmes moyens pour générer un résultat classifié en réponse à la pluralité de points sur le premier ensemble de données d'attribut et la première représentation en coordonnées dans un espace d'attribut comprennent des moyens attribuant une première étiquette à un premier desdits au moins deux groupements de points sur ladite première représentation en coordonnées dans un espace d'attribut, chaque point dans ledit premier desdits au moins deux groupements de points sur ladite première représentation en coordonnées dans un espace d'attribut ayant ladite première étiquette attribuée à celui-ci et correspondant à un premier ensemble de positions sur ledit premier ensemble de données d'attribut, des moyens pour attribuer une deuxième étiquette à un deuxième desdits au moins deux points sur ladite première représentation en coordonnées dans un espace d'attribut, chaque point dans lesdits au moins deux groupements de points sur ladite première représentation en coordonnées dans un espace d'attribut ayant ladite deuxième étiquette attribuée à celui-ci et correspondant à un deuxième ensemble de positions sur ledit premier ensemble de données d'attribut, des moyens pour étiqueter chaque position dudit premier ensemble de positions sur ledit premier ensemble de données d'attribut avec ladite première étiquette, et des moyens pour étiqueter chaque position dudit deuxième ensemble de positions sur ledit premier ensemble de données d'attribut avec ladite deuxième étiquette.
